# EUROPEAN PATENT SPECIFICATION

(11) **EP 4 478 754 B1**
(45) Date of publication and mention of the grant of the patent: **08.07.2026**
(21) Application number: 24712727.7
(22) Date of filing: 16.02.2024
(51) Int. Cl.: H04W 4/80, H04W 4/06, H04W 76/14, H04M 1/72409, G06F 3/16, H04R 3/12, H04L 67/1095, H04N 21/4363, H04N 21/436, H04N 21/439

(54) **AUDIO OUTPUT METHOD AND ELECTRONIC DEVICE PERFORMING SAME**
VERFAHREN ZUR SIGNALAUSGABE UND ELEKTRONISCHE VORRICHTUNG ZUR DURCHFÜHRUNG DAVON
PROCÉDÉ DE SORTIE AUDIO ET DISPOSITIF ÉLECTRONIQUE LE METTANT EN OEUVRE

(30) Priority: 26.04.2023 KR 20230054664; 04.05.2023 KR 20230058722; 05.10.2023 KR 20230132480
(43) Date of publication of application: 18.12.2024
(73) Proprietor: Samsung Electronics Co., Ltd., Suwon-si, Gyeonggi-do 16677 (KR)
(72) Inventor: MOON, Youngsin, Suwon-si, Gyeonggi-do 16677 (KR); KIM, Sanghyeok, Suwon-si, Gyeonggi-do 16677 (KR); RYU, Kyusang, Suwon-si, Gyeonggi-do 16677 (KR); CHEONG, Gupil, Suwon-si, Gyeonggi-do 16677 (KR); JIN, Juyeon, Suwon-si, Gyeonggi-do 16677 (KR)
(74) Representative: Gulde & Partner
(86) International application number: PCT/KR2024/095251
(87) International publication number: WO 2024/225869

(56) References cited:
- CN-A- 107 733 745
- JP-A- 2020 046 657
- KR-A- 20220 017 332
- KR-A- 20220 062 446
- KR-A- 20220 104 898
- KR-A- 20220 147 243
- KR-B1- 100 703 327
- US-A1- 2020 382 872
- US-A1- 2022 086 581
- US-A1- 2024 056 720

## Description

### [Technical Field]

One or more embodiments relate to an electronic device that outputs audio through an audio output device.

### [Background Art]

An electronic device supporting the typical Bluetooth legacy may search for an audio source device through scanning and then output audio provided by an audio source through pairing with the audio source device. For example, when a smartphone that may be able to function as an audio source device and wireless earphones are paired and an audio signal is generated through a music application on the smartphone, audio may be output through the wireless earphones. In this case, when a user desires to listen to music through the wireless earphones from another electronic device that is not the smartphone, the user may need to pair the wireless earphones with the other electronic device. In this case, for the wireless earphones to be paired with the other electronic device, the previous pairing with the smartphone may need to be canceled.

KR 2022 0147243 A discloses an electronic device comprising a display module, a communication module for data exchange with an external device, and at least one processor connected to the display module and the communication module, wherein the processor is configured to receive information regarding a first audio source device via the communication module, output the received information on the display, receive a first audio broadcast stream from the first audio source device upon user selection, and transmit a first audio signal of the broadcast stream to an audio output device via a wireless link established through the communication module, enabling audio output through the audio output device.

US 2020/382872 A1 discloses a method for audio synchronization at a first device comprising a communication device, wherein the method includes performing an audio timing synchronization process by transmitting, via the communication device, a request to a second device to participate in the synchronization process, causing an output of an audio tone after transmitting the request, receiving data from the second device based on the audio tone, and adjusting an audio timing synchronization setting of a third device at least partially based on the data received from the second device.

### [Disclosure of Invention]

### [Technical Solutions]

The invention is defined by the appended claims. The description that follows is subjected to this limitation. Any disclosure lying outside the scope of said claims is only intended for illustrative as well as comparative purposes.

### [Brief Description of Drawings]

FIG. 1 is a block diagram illustrating an electronic device in a network environment, according to an embodiment.
FIG. 2 is a block diagram illustrating an audio module, according to an embodiment.
FIG. 3 is a diagram illustrating a configuration of an audio output system, according to an embodiment.
FIG. 4 is a diagram illustrating wireless links established between an audio output device in which a wireless link is established between a first external electronic device and a second external electronic device included in the audio output device, and an electronic device, according to an embodiment.
FIG. 5A is a flowchart illustrating an audio output method performed by an electronic device, according to an embodiment.
FIG. 5B is a flowchart illustrating an audio output method through synchronization of an audio output start time point between a first external electronic device and a second external electronic device, which is performed by the first external electronic device, according to an embodiment.
FIG. 5C is a diagram illustrating a list generated such that information of an audio source device is shown through user experience (UX) of an electronic device, according to an embodiment.
FIG. 5D is a flowchart illustrating an audio output stop method and an audio output resumption method performed by a first external electronic device, according to an embodiment.
FIG. 6 is a flowchart illustrating a method of receiving a first audio broadcast stream broadcast by a first audio source device based on a command, which is performed by a first external electronic device, according to an embodiment.
FIG. 7A is a flowchart illustrating a method of synchronizing an audio output start time point for starting outputting audio of a first audio broadcast stream between a first external electronic device and a second external electronic device, which is performed by the first external electronic device, according to an embodiment.
FIG. 7B is a diagram illustrating a timing chart for a method of synchronizing an audio output start time point for starting outputting audio of a first audio broadcast stream between a first external electronic device and a second external electronic device, according to an embodiment.
FIG. 7C is a diagram illustrating a timing chart for a method of synchronizing an audio output start time point for starting outputting audio of a first audio broadcast stream between a first external electronic device and a second external electronic device, according to an embodiment.
FIG. 7D is a flowchart illustrating a method of synchronizing an audio output start time point for starting outputting audio of a first audio broadcast stream between a first external electronic device and a second external electronic device based on synchronization information transmitted from the first external electronic device to the second external electronic device, according to an embodiment.
FIG. 7E is a diagram illustrating a timing chart for a method of transmitting synchronization information from a first external electronic device to a second external electronic device based on a wireless link between the first external electronic device and the second external electronic device, according to an embodiment.
FIG. 7F is a flowchart illustrating a method of synchronizing an audio output start time point for starting outputting audio of a first audio broadcast stream between a first external electronic device and a second external electronic device based on a request for information about the first audio broadcast stream received by the first external electronic device from the second external electronic device, according to an embodiment.
FIG. 7G is a flowchart illustrating a method of synchronizing an audio output stop time point between a first external electronic device and a second external electronic device, according to an embodiment.
FIG. 7H is a diagram illustrating a timing chart for a method of synchronizing an audio output stop time point between a first external electronic device and a second external electronic device, according to an embodiment.
FIG. 7I is a flowchart illustrating a method of synchronizing an audio output resumption time point between a first external electronic device and a second external electronic device, according to an embodiment.
FIG. 8 is a flowchart illustrating a method of synchronizing an audio output start time point for starting outputting audio of a first audio broadcast stream based on packet information about packets of the first audio broadcast stream of a periodic advertising (PA) signal, which is performed by a first external electronic device, according to an embodiment.
FIG. 9 is a flowchart illustrating a method of synchronizing an audio output start time point for starting outputting audio of a first audio broadcast stream based on a time offset, which is performed by a first external electronic device, according to an embodiment.
FIG. 10 is a diagram illustrating a cradle device that establishes wireless links with an electronic device and an audio output device, respectively, according to an embodiment.
FIG. 11 is a diagram illustrating wireless links established between an electronic device and audio output devices that do not communicate with different audio output devices, according to an embodiment.
FIG. 12A is a flowchart illustrating an audio output method through synchronization of an audio output start time point between audio output devices, which is performed by an electronic device, according to an embodiment.
FIG. 12B is a flowchart illustrating an audio output stop method and an audio output resumption method performed by an electronic device, according to an embodiment.
FIG. 13 is a flowchart illustrating an audio output method through synchronization of an audio output start time point between different audio output devices, which is performed by an audio output device, according to an embodiment.
FIG. 14 is a diagram illustrating wireless links established between an audio output device and an electronic device broadcasting a first audio broadcast stream, according to an embodiment.
FIG. 15A is a flowchart illustrating a method of broadcasting a first audio broadcast stream including packets of valid audio from an audio output start time point, which is performed by an electronic device, according to an embodiment.
FIG. 15B is a flowchart illustrating a method of broadcasting a first audio broadcast stream including packets of valid audio when a confirmation message for a command is received from a first audio output device, which is performed by an electronic device, according to an embodiment.
FIG. 16 is a diagram illustrating an audio output device in which a wireless link is established between a first external electronic device and a second external electronic device included in the audio output device, according to an embodiment.
FIG. 17 is a flowchart illustrating an audio output method performed based on a first audio broadcast stream by a first external electronic device, according to an embodiment.
FIG. 18 is a diagram illustrating a cradle device that establishes wireless links with a first external electronic device and a second external electronic device included in an audio output device and establishes a wireless link with an electronic device, according to an embodiment.
FIG. 19A is a flowchart illustrating an audio output method performed by a cradle device, according to an embodiment.
FIG. 19B is a flowchart illustrating an audio output stop method and an audio output resumption method performed by a cradle device, according to an embodiment.
FIG. 20 is a flowchart illustrating a method of performing control related to an audio broadcast stream, which is performed by a first external electronic device, according to an embodiment.

### [Best Mode for Carrying Out the Invention]

Hereinafter, various embodiments will be described in greater detail with reference to the accompanying drawings. However, the present disclosure is not limited to some embodiments but is to be construed as including various changes, modifications, equivalents, and/or alternatives of the embodiments described herein.

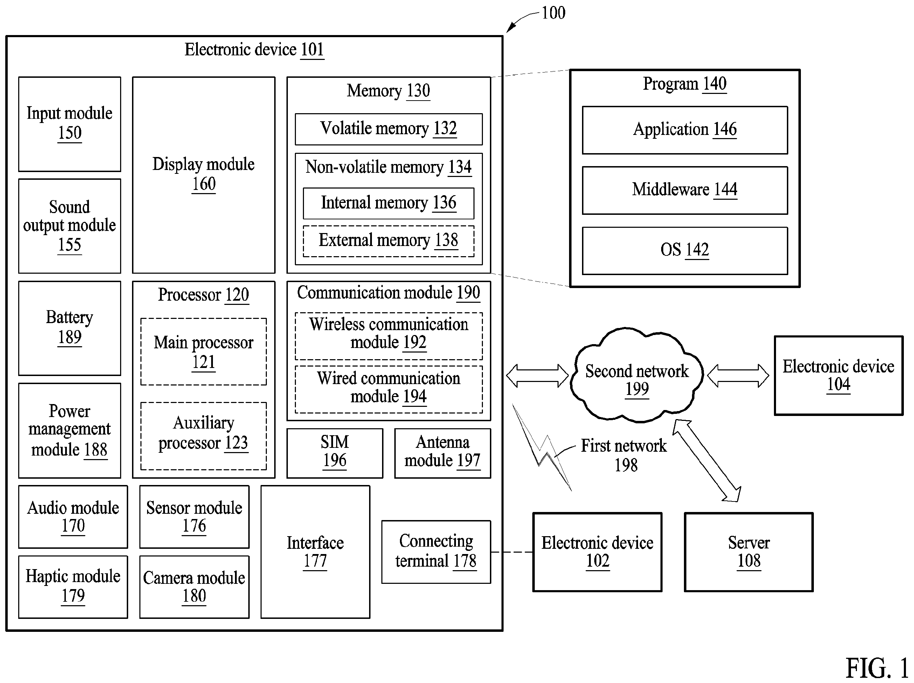

FIG. 1 is a block diagram illustrating an electronic device in a network environment, according to an embodiment.

FIG. 1 is a block diagram illustrating an electronic device 101 in a network environment 100 according to an embodiment. Referring to FIG. 1, an electronic device 101 in a network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one (e.g., the connecting terminal 178) of the above components may be omitted from the electronic device 101, or one or more other components may be added to the electronic device 101. In various embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in a volatile memory 132, process the command or data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display device 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence (AI) model processing. An AI model may be generated by machine learning. The machine learning may be performed by, for example, the electronic device 101, in which the AI model is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may alternatively or additionally include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector, and a control circuitry for controlling a corresponding one of the display, the hologram device, and the projector. According to an embodiment, the display module 160 may include a touch sensor adapted to sense a touch, or a pressure sensor adapted to measure an intensity of a force of the touch.

The audio module 170 may convert sound into an electric signal or vice versa. According to an embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with an external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electrical signal into a mechanical stimulus (e.g., a vibration or a movement) or an electrical stimulus, which may be recognized by the user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, and flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and an external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device, for example, the electronic device 104, via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an antenna array, analog beamforming, or a large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, an RFIC on a first surface (e.g., a bottom surface) of the PCB, or adjacent to the first surface of the PCB and capable of supporting a designated high-frequency band (e.g., a mmWave band), and a plurality of antennas (e.g., an antenna array) disposed on a second surface (e.g., a top or a side surface) of the PCB, or adjacent to the second surface of the PCB and capable of transmitting or receiving signals in the designated high-frequency band.

At least some of the above-described components may be coupled mutually and exchange signals (e.g., commands or data) therebetween via an inter-peripheral communication scheme (e.g., a bus, general-purpose input and output (GPIO), serial peripheral interface (SPI), or mobile industry processor interface (MIPI)).

According to an embodiment, commands or data may be transmitted or received between the electronic device 101 and the external electronic device (e.g., the electronic device 104) via the server 108 coupled with the second network 199. Each of the external electronic devices (e.g., the electronic device 102 and 104) may be a device of the same type as or a different type from the electronic device 101. According to an embodiment, all or some of operations to be executed by the electronic device 101 may be executed by one or more of the external electronic devices (e.g., the electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least a part of the function or service. The one or more external electronic devices receiving the request may perform the at least part of the function or service requested, or an additional function or an additional service related to the request, and may transfer a result of the performance to the electronic device 101. The electronic device 101 may provide the result, with or without further processing of the result, as at least a part of a response to the request. To that end, cloud computing, distributed computing, mobile edge computing (MEC), or client-server computing technology may be used, for example. The electronic device 101 may provide ultra-low latency services using, e.g., distributed computing or MEC. In an embodiment, the external electronic device (e.g., the electronic device 104) may include an Internet-of-things (IoT) device. The server 108 may be an intelligent server using machine learning and/or a neural network. According to an embodiment, the external electronic device (e.g., the electronic device 104) or the server 108 may be included in the second network 199. The electronic device 101 may be applied to intelligent services (e.g., a smart home, a smart city, a smart car, or healthcare) based on 5G communication technology or IoT-related technology.

According to various embodiments described herein, an electronic device may be a device of one of various types. The electronic device may include, for example, a portable communication device (e.g., a smartphone, etc.), a computing device, a portable multimedia device, a portable medical device, a camera, a wearable device, or a home appliance. However, the electronic device is not limited to the foregoing examples. In connection with the description of the drawings, like reference numerals may be used for similar or related components. It is to be understood that a singular form of a noun corresponding to an item may include one or more of the things unless the relevant context clearly indicates otherwise. As used herein, "A or B," "at least one of A and B," "at least one of A or B," "A, B or C," "at least one of A, B and C," and "A, B, or C," each of which may include any one of the items listed together in the corresponding one of the phrases, or all possible combinations thereof. Terms such as "first" or "second," or "1st" or "2nd" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in the form of an application-specific integrated circuit (ASIC).

Various embodiments set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a complier or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to various embodiments, a method according to an embodiment of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}) or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

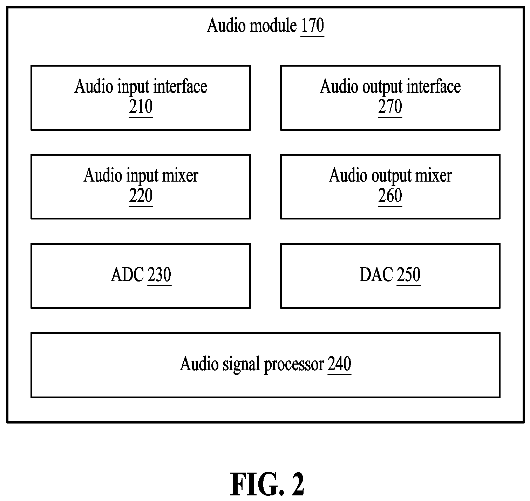

FIG. 2 is a block diagram illustrating an audio module, according to an embodiment.

Referring to FIG. 2, the audio module 170 described above with reference to FIG. 1 may include, for example, an audio input interface 210, an audio input mixer 220, an analog-to-digital converter (ADC) 230, an audio signal processor 240, a digital-to-analog converter (DAC) 250, an audio output mixer 260, or an audio output interface 270.

The audio input interface 210 may receive an audio signal corresponding to a sound obtained from the outside of the electronic device 101 through a microphone (e.g., a dynamic microphone, a condenser microphone, or a piezo microphone) that is configured as a part of the input module 150 or is configured separately from the electronic device 101. For example, when an audio signal is obtained from the external electronic device 102 (e.g., a headset or a microphone), the audio input interface 210 may receive the audio signal by being connected directly to the external electronic device 102 through the connecting terminal 178 or connected wirelessly (e.g., Bluetooth communication) through the wireless communication module 192. According to an embodiment, the audio input interface 210 may receive a control signal (e.g., a volume adjustment signal received through an input button) related to an audio signal obtained from the external electronic device 102. The audio input interface 210 may include a plurality of audio input channels and may receive different audio signals for respective corresponding audio input channels among the plurality of audio input channels. According to an embodiment, additionally or alternatively, the audio input interface 210 may receive an audio signal from another component (e.g., the processor 120 or the memory 130 in FIG. 1) of the electronic device 101.

The audio input mixer 220 may mix a plurality of input audio signals into at least one audio signal. For example, according to an embodiment, the audio input mixer 220 may mix a plurality of analog audio signals input through the audio input interface 210 into at least one analog audio signal.

The ADC 230 may convert an analog audio signal into a digital audio signal. For example, according to an embodiment, the ADC 230 may convert an analog audio signal received through the audio input interface 210 or, additionally or alternatively, an analog audio signal mixed through the audio input mixer 220, into a digital audio signal.

The audio signal processor 240 may perform processing in various ways on a digital audio signal input through the ADC 230 or a digital audio signal received from another component of the electronic device 101. For example, according to an embodiment, the audio signal processor 240 may perform, on one or more digital audio signals, processes such as changing a sampling rate, applying one or more filters, performing interpolation, amplifying or attenuating all or part of frequency bands, processing noise (e.g., attenuating noise or echo), changing channels (e.g., switching between mono and stereo), mixing, or extracting a specified signal. According to an embodiment, one or more functions of the audio signal processor 240 may be implemented in the form of an equalizer.

The DAC 250 may convert a digital audio signal into an analog audio signal. For example, according to an embodiment, the DAC 250 may convert, into an analog audio signal, a digital audio signal processed by the audio signal processor 240 or a digital audio signal obtained from another component (e.g., the processor 120 or the memory 130) of the electronic device 101.

The audio output mixer 260 may mix a plurality of audio signals to be output into at least one audio signal. For example, according to an embodiment, the audio output mixer 260 may mix an analog audio signal obtained through the DAC 250 and another analog audio signal (e.g., an analog audio signal received through the audio input interface 210) into at least one analog audio signal.

The audio output interface 270 may output an analog audio signal obtained through the DAC 250 or, additionally or alternatively, an analog audio signal mixed by the audio output mixer 260, to the outside of the electronic device 101 through the sound output module 155. The sound output module 155 may include, for example, a speaker such as a dynamic driver or balanced armature driver, or a receiver. According to an embodiment, the sound output module 155 may include a plurality of speakers. In this case, the audio output interface 270 may output an audio signal having a plurality of different channels (e.g., stereo or 5.1 channels) through at least a portion of the plurality of speakers. According to an embodiment, the audio output interface 270 may be connected to the external electronic device 102 (e.g., external speakers or headsets) directly through the connecting terminal 178 or wirelessly through the wireless communication module 192 to output an audio signal.

According to an embodiment, the audio module 170 may not separately have the audio input mixer 220 or the audio output mixer 260 but may use at least one function of the audio signal processor 240 to mix a plurality of digital audio signals to generate at least one digital audio signal.

According to an embodiment, the audio module 170 may include an audio amplifier (not shown) (e.g., a speaker amplification circuit) that is configured to amplify an analog audio signal input through the audio input interface 210 or an audio signal to be output through the audio output interface 270. According to an embodiment, the audio amplifier may be configured as a module separate from the audio module 170.

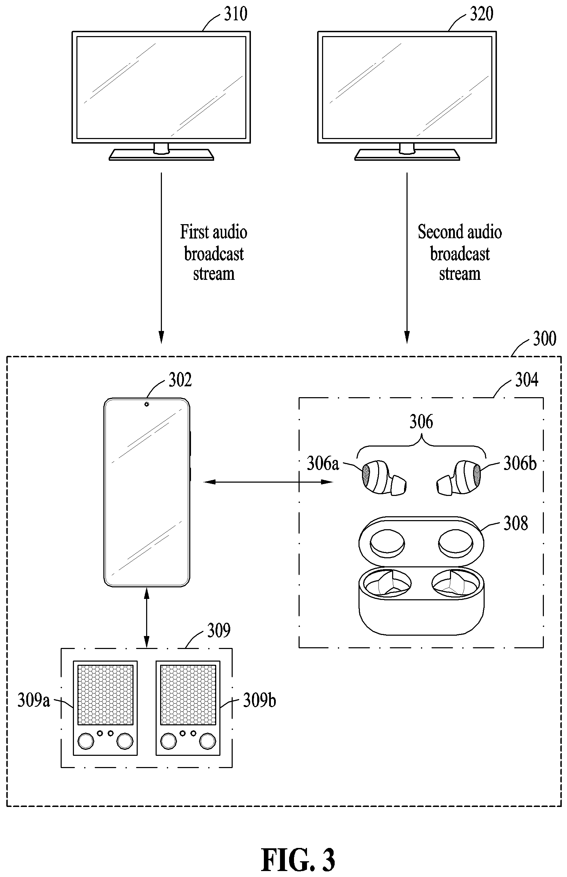

FIG. 3 is a diagram illustrating a configuration of an audio output system, according to an embodiment.

According to an embodiment, an audio output system 300 may include an electronic device 302 (e.g., the electronic device 101 in FIG. 1), a first audio output device 304 (e.g., the electronic device 102 or the electronic device 104 in FIG. 1), and a second audio output device 309 (e.g., the electronic device 102 or the electronic device 104 in FIG. 1). For example, the first audio output device 304 and the second audio output device 309 may each be connected to the electronic device 302 through a wireless link and exchange data with the electronic device 302 through the wireless link. The wireless link may be, for example, Bluetooth, Bluetooth low energy (BLE), or Wi-Fi, but is not limited thereto.

According to an embodiment, the first audio output device 304 may provide audio to a user by processing an audio signal received from the electronic device 302 through the wireless link. For example, the first audio output device 304 may include external electronic devices 306 respectively worn on both ears of the user. The external electronic devices 306 may include a first external electronic device 306a (or a central device, a primary device, or a main device) and a second external electronic device 306b (or a peripheral device, a secondary device, or a sub-device). The electronic device 302 may establish a channel for Bluetooth low energy (LE) audio (hereinafter referred to as "LE audio") with each of the first external electronic device 306a and the second external electronic device 306b. For example, a wireless link may be established between the first external electronic device 306a and the second external electronic device 306b.

According to an embodiment, the first audio output device 304 may further include a cradle device 308 that accommodates therein the first external electronic device 306a and the second external electronic device 306b. When each of the first external electronic device 306a and the second external electronic device 306b is separated from the cradle device 308, the cradle device 308 may establish a wireless link with each of the first external electronic device 306a and the second external electronic device 306b. For example, the cradle device 308 may establish the wireless link with the electronic device 302 and may transmit data received from the electronic device 302 through the wireless link to each of the first external electronic device 306a and the second external electronic device 306b.

According to an embodiment, the second audio output device 309 may include a first external electronic device 309a and a second external electronic device 309b. Each of the first external electronic device 309a and the second external electronic device 309b may be a speaker for a stereo sound. For example, each of the first external electronic device 309a and the second external electronic device 309b may establish a channel for LE audio with the electronic device 302. The channel of the first external electronic device 309a and the channel of the second external electronic device 309b may operate as one set or may operate separately from the other channel.

According to an embodiment, to receive an audio signal from an audio source device to which a Bluetooth technology using a legacy connection method (e.g., advanced audio distribution profile (A2DP)) or a unicast connection method, the electronic device 302 may detect an audio source device through scanning, perform pairing to be paired with the detected audio source device, and receive an audio signal while being paired with the detected audio source device. The received audio signal may be in the form of a connected isochronous stream (CIS), for example.

According to an embodiment, the audio source device (e.g., 310 or 320) may broadcast an audio signal in the form of a broadcast isochronous stream (BIS). For example, the electronic device 302 may detect (or obtain) information about audio source devices (e.g., 310 and 320) through scanning and receive a BIS from an audio source device (e.g., 310 or 320) based on the detected information to receive an audio signal. The electronic device 302 may receive the audio signal from the audio source device (e.g., 310 or 320) without a communication connection with the audio source device (e.g., 310 or 320). The audio source device (e.g., 310 or 320) may not require a communication connection with the electronic device 302 for transmission of an audio signal and may thus broadcast the audio signal.

According to an embodiment, when one or more audio source devices (e.g., 310 and 320) are detected, a user of the electronic device 302 may select one from which the user desires to hear an audio sound, from among the one or more audio source devices (e.g., 310 and 320). The electronic device 302 may generate a list of the detected audio source devices for the user to select from and provide the list to the user through a display (e.g., the display module 160 in FIG. 1). The user may then select one of the one or more audio source devices (e.g., 310 and 320) from the list. The electronic device 302 may receive an audio signal by receiving a BIS of the selected audio source device (e.g., 310), and control the first audio output device 304 to output audio through the first audio output device 304 based on the audio signal.

According to an embodiment, the electronic device 302 may detect the audio source device 310 through scanning and receive a BIS broadcast by the audio source device 310 to receive an audio signal. For example, the electronic device 302 may output audio through a speaker of the electronic device 302. For example, the electronic device 302 may output audio through an audio output device (e.g., the first audio output device 304 or the second audio output device 309) connected to the electronic device 302 by wire or wirelessly.

Although the electronic device 302 is described above as receiving an audio signal broadcast by an audio source device (e.g., 310 or 320), the first audio output device 304 may also receive an audio signal broadcast by an audio source device (e.g., 310 or 320). In addition to the electronic device 302, the first audio output device 304 may also support the specifications of the LE audio. For example, the first audio output device 304 may receive information about an extended advertising (EA) signal or a periodic advertising (PA) signal that is broadcast by an audio source device (e.g., 310 or 320) from the electronic device 302, and may directly receive a BIS broadcast by the audio source device (e.g., 310 or 320) based on the PA signal.

When the electronic device 302 receives information about audio source devices (e.g., 310 and 320) from the external audio source devices (e.g., 310 and 320) and provides a list for the user of the electronic device 302 to select from, the electronic device 302 may play an assistant role in this case. The electronic device 302 may transmit information about an EA signal or a PA signal of a selected audio source device (e.g., the audio source device 310) to an audio output device (e.g., the first audio output device 304 or the second audio output device 309), and the audio output device may directly receive a BIS broadcast by the selected audio source device based on the PA signal.

According to an embodiment, an audio output device (e.g., the first audio output device 304 or the second audio output device 309) may receive an EA signal or a PA signal broadcast by an audio source device (e.g., 310 or 320) through scanning, and may receive a BIS broadcast by the audio source device (e.g., 310 or 320) based on the PA signal.

According to an embodiment, the cradle device 308 may detect an audio source device (e.g., 310) through scanning and may receive a BIS broadcast by the audio source device 310 to receive an audio signal. For example, the cradle device 308 may output audio through the first external electronic device 306a and the second external electronic device 306b that are wirelessly connected to the cradle device 308.

According to an embodiment, the cradle device 308 may detect the audio source device 310 through scanning and may transmit information about an EA signal or a PA signal of the detected audio source device 310 to the first external electronic device 306a and the second external electronic device 306b that are wirelessly connected to the cradle device 308. Each of the first external electronic device 306a and the second external electronic device 306b may receive a BIS broadcast by the audio source device 310 based on the PA signal. In this case, the cradle device 308 may play an assistant role. For example, the cradle device 308 may include a display, and the cradle device 308 may provide information about a detected audio source device to a user through the display. The cradle device 308 may transmit information about an audio source device selected by the user to each of the first external electronic device 306a and the second external electronic device 306b.

According to an embodiment, the electronic device 302 may play a role of an audio source device. For example, the electronic device 302 may generate an audio broadcast stream based on a sound source output by the electronic device 302 and broadcast the generated audio broadcast stream. When the electronic device 302 broadcasts an audio broadcast stream, the electronic device 302 may play a source role.

According to an embodiment, the electronic device 302 may include at least one of a smartphone, a tablet, a smartwatch, or a device for extended reality (XR).

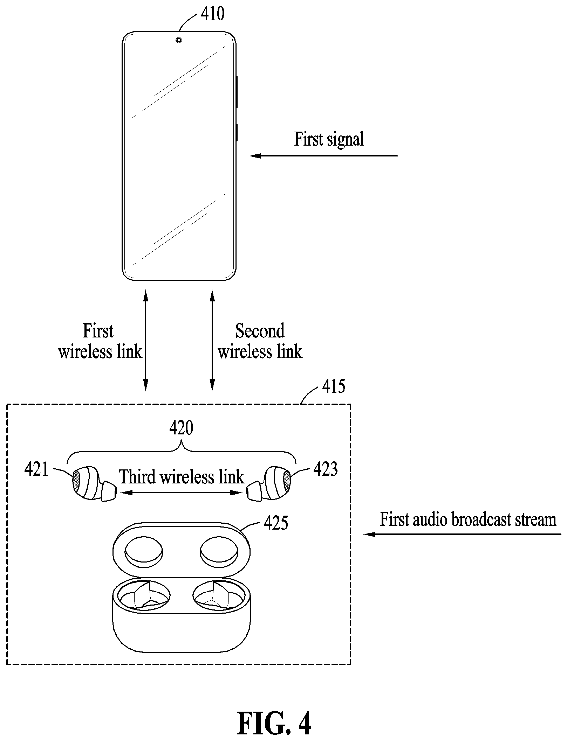

Hereinafter, an audio output method of outputting audio through the audio output system 300 will be described in detail with reference to FIGS. 4 to 20.

FIG. 4 is a diagram illustrating wireless links established between an audio output device in which a wireless link is established between a first external electronic device and a second external electronic device included in the audio output device, and an electronic device, according to an embodiment.

According to an embodiment, an audio output device 415 (e.g., the electronic device 102 or the electronic device 104 in FIG. 1, or the first audio output device 304 in FIG. 3) may include external electronic devices 420. The external electronic devices 420 may include a first external electronic device 421 (e.g., the first external electronic device 306a) and a second external electronic device 423 (e.g., the second external electronic device 306b). For example, the first external electronic device 421 may be a device to be worn on a left ear (or a right ear) of a user, and the second external electronic device 423 may be a device to be worn on a right ear (or a left ear) of the user. For example, a wireless link (e.g., a third wireless link in FIG. 3) may be established between the first external electronic device 421 and the second external electronic device 423 for data exchange. For example, the audio output device 415 may further include a cradle device 425 (e.g., the cradle device 308 in FIG. 3).

According to an embodiment, a first wireless link may be established between an electronic device 410 (e.g., the electronic device 101 in FIG. 1 or the electronic device 300 in FIG. 3) and the first external electronic device 421, and a second wireless link may be established between the electronic device 410 and the second external electronic device 423. For example, the first external electronic device 421 and the second external electronic device 423 may each receive a command from the electronic device 410 through their respective wireless links. The command may be a source addition command (or an add source command). Through the third wireless link established between the first external electronic device 421 and the second external electronic device 423, data for synchronizing audio output start time points for starting outputting audio may be exchanged. For example, the first external electronic device 421 may transmit (or transfer) the source addition command received from the electronic device 410 to the second external electronic device 423.

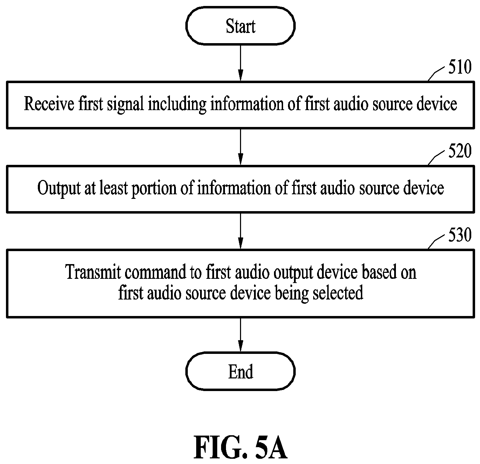

Hereinafter, a method of synchronizing an audio output start time point through the third wireless link established between the first external electronic device 421 and the second external electronic device 423 will be described in detail with reference to FIGS. 5A to 10.

FIG. 5A is a flowchart illustrating an audio output method performed by an electronic device, according to an embodiment.

Operations 510 to 530 described below may be performed by an electronic device (e.g., the electronic device 101 in FIG. 1, the electronic device 300 in FIG. 3, or the electronic device 410 in FIG. 4). For example, the electronic device may include a processor (e.g., the processor 120 in FIG. 1), a communication module (e.g., the communication module 190 in FIG. 1), a memory (e.g., the memory 130 in FIG. 1), and a display (e.g., the display module 160 in FIG. 1). For example, the electronic device may perform an assistant role in operations 510 to 530.

In operation 510, the processor of the electronic device may receive a first signal including information of a first audio source device (e.g., the audio source device 310 or 320 in FIG. 3) through the communication module. For example, the first audio source device may periodically broadcast the information of the first audio source device, and the electronic device may scan external data through the communication module to receive the first signal including the broadcast information of the first audio source device. In this case, a first signal including information of an audio source device may be an EA signal or a PA signal. The information of the first audio source device may include, for example, at least one of identification information, account information, address information, or clock information of the first audio source device, information about a first audio signal, timing information, transmission power information, or audio channel map information. The first signal may be, for example, a signal of a packet of ADV_EXT_IND, a packet of AUX_ADV_IND, or a packet of AUX_SYNC_IND.

In operation 520, the processor of the electronic device may output at least a portion of the information of the first audio source device. For example, the processor may generate a list including at least a portion of the information of the first audio source device and output the generated list through the display. For example, the processor may output the identification information (e.g., a device name) indicating the first audio source device.

A user may check the portion of the information of the first audio source device using the electronic device and determine whether to receive a first audio broadcast stream broadcast by the first audio source device based on the output information using a first audio output device (e.g., the electronic device 102 or the electronic device 104 in FIG. 1, the audio output device 304 or 309 in FIG. 3, or the audio output device 415 in FIG. 4).

In operation 530, the processor of the electronic device may transmit a command (e.g., a source addition command) based on the first audio source device being selected to the first audio output device that has established a wireless link with the electronic device. For example, the user of the electronic device may select the first audio source device from among one or more audio source devices output on the display through a user interface (UI) or user experience (UX). For example, when a plurality of audio source devices is detected, the plurality of audio source devices may be output on the display in the form of a list, and the user may select the first audio source device by selecting one from the list. The source addition command may include, for example, at least one of address information of the first audio source device, a broadcast identifier, PA synchronization information, or BIS information.

According to an embodiment, before operation 530 is performed, the wireless link may be established between the electronic device and the first audio output device. The wireless link may be, for example, Bluetooth or BLE. The wireless link may be based on Wi-Fi, for example.

According to an embodiment, the electronic device may establish wireless links with one or more audio output devices. For example, the electronic device may establish a wireless link with each of the first audio output device (e.g., the first audio output device 304 in FIG. 3) including a pair of devices, and a second audio output device (e.g., the second audio output device 309 in FIG. 3) including another pair of devices. For example, the user of the electronic device may select in advance the first audio output device to which the first audio source device is to be assigned through UI or UX from among one or more audio output devices displayed on the display.

According to an embodiment, the first audio output device may include a first external electronic device (e.g., the first external electronic device 306a or 309a in FIG. 3 or the first external electronic device 421 in FIG. 4) and a second external electronic device (e.g., the second external electronic device 306b or 309b in FIG. 3 or the second external electronic device 423 in FIG. 4). For example, the electronic device may transmit a first source addition command to the first external electronic device through a first wireless link and transmit a second source addition command to the second external electronic device through a second wireless link. In this case, a transmission time of the first source addition command and a transmission time of the second source addition command may not be the same. For example, the electronic device may transmit the source addition command to the first external electronic device through the first wireless link, and the first external electronic device receiving the source addition command may transmit (or transfer) the source addition command to the second external electronic device through a third wireless link.

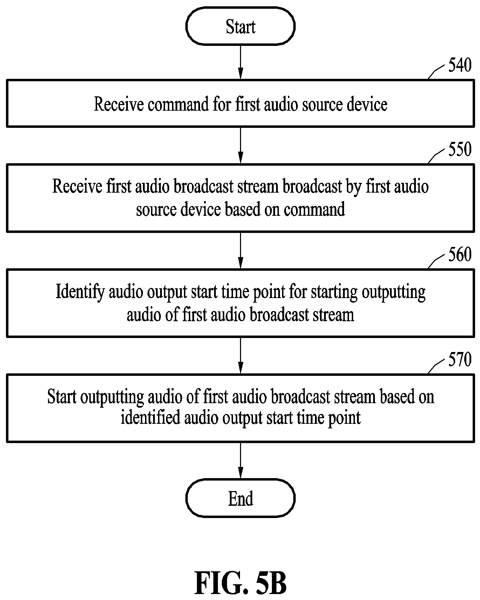

FIG. 5B is a flowchart illustrating an audio output method through synchronization of an audio output start time point between a first external electronic device and a second external electronic device, which is performed by the first external electronic device, according to an embodiment.

According to an embodiment, an audio output device (e.g., the electronic device 102 or the electronic device 104 in FIG. 1, the audio output device 304 or 309 in FIG. 3, or the audio output device 415 in FIG. 4) may include a first external electronic device (e.g., the first external electronic device 306a or 309a in FIG. 3 or the first external electronic device 421 in FIG. 4) and a second external electronic device (e.g., the second external electronic device 306b or 309b in FIG. 3). The first external electronic device and the second external electronic device may operate as at least one group or set.

Operations 540 to 570 described below may be performed by the first external electronic device (or the second external electronic device). For example, the first external electronic device may include a processor, a communication module, a memory, a sound output module, a sensor unit, and a battery. A description of the processor, the communication module, the memory, the sound output module, the sensor unit, and the battery of the first external electronic device may be replaced with the foregoing description of the processor 120, the communication module 190, the memory 130, the sound output module 155, the sensor module 176, and the battery 189 provided with reference to FIG. 1.

According to an embodiment, operation 540 may be performed after operation 530 described above with reference to FIG. 5A is performed.

In operation 540, the first external electronic device receives a command (e.g., a source addition command) for a first audio source device (e.g., the audio source device 310 or 320 in FIG. 3) from an electronic device (e.g., the electronic device 101 in FIG. 1, the electronic device 302 in FIG. 3, or the electronic device 410 in FIG. 4) through the communication module. For example, the first external electronic device of the audio output device may receive a first source addition command for the first audio source device from the electronic device, and the second external electronic device of the audio output device may receive a second source addition command for the first audio source device from the electronic device. In this case, a reception time of the first source addition command and a reception time of the second source addition command may be different from each other.

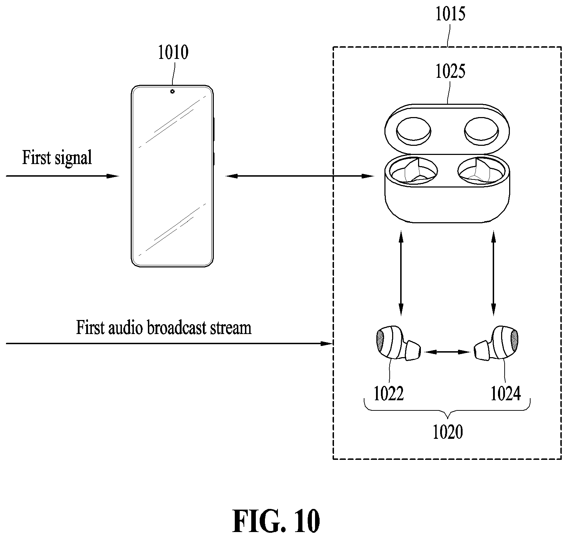

According to an embodiment, the first external electronic device may receive the source addition command for the first audio source device from a cradle device (e.g., the cradle device 308 in FIG. 3 or the cradle device 425 in FIG. 4) as the electronic device. For example, when the first external electronic device does not receive the source addition command from the electronic device even though the electronic device transmits the source addition command to the cradle device, the first external electronic device, and the second external electronic device, the first external electronic device may receive the source addition command from the cradle device. A method of receiving the source addition command by the first external electronic device from the cradle device will be described in detail below with reference to FIG. 10.

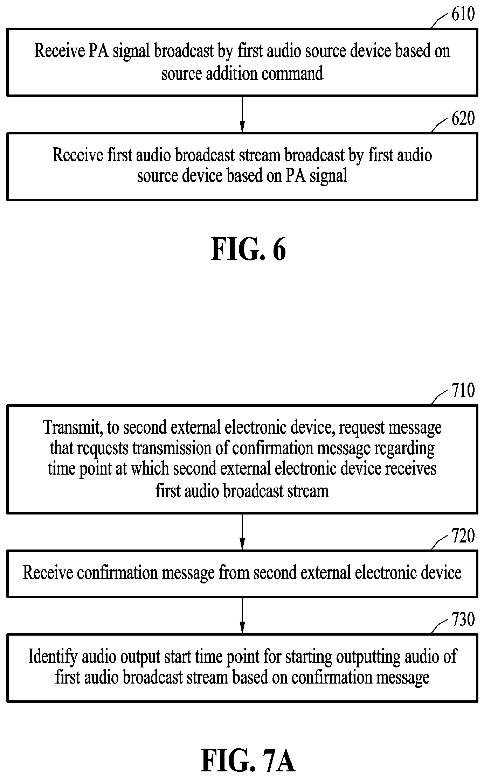

In operation 550, the first external electronic device receives a first audio broadcast stream broadcast by the first audio source device through the communication module based on the command. For example, the first external electronic device and the second external electronic device may each receive the first audio broadcast stream. A method of receiving the first audio broadcast stream will be described in detail below with reference to FIG. 6.

According to an embodiment, the first external electronic device may not perform packet processing (e.g., rendering) for audio output even though it receives the first audio broadcast stream.

In operation 560, the first external electronic device identifies an audio output start time point for starting outputting audio of the first audio broadcast stream, for synchronization with the start of audio output of the second external electronic device. For example, the audio output start time point may be a point in time at which packets of the first audio broadcast stream start to be processed. For example, the audio output start time point may be a point in time at which audio is output. For example, the audio output start time point may be a point in time at which a subsequent PA signal is synchronized. For example, the audio output start time point may be a point in time at which a packet of the first audio broadcast stream is received. As an audio output start time point of the first external electronic device and an audio output start time point of the second external electronic device are synchronized, times at which left audio and right audio to be heard by a user start being output may be the same. Hereinafter, the expressions "identifying a time point," "determining a time point," and "synchronizing a time point" will be used interchangeably.

According to an embodiment, the first external electronic device may exchange information with the second external electronic device to synchronize the audio output start time point between the first external electronic device and the second external electronic device.

According to an embodiment, by receiving, from the electronic device, the audio output start time point determined by the electronic device, the first external electronic device and the second external electronic device may synchronize their audio output start time points.

Hereinafter, a method of synchronizing an audio output start time point between the first external electronic device and the second external electronic device will be described in detail with reference to FIGS. 7A to 7F, 8, and 9.

In operation 570, the first external electronic device starts outputting audio of the first audio broadcast stream based on the identified audio output start time point. In this case, the output audio may be first audio corresponding to the first external electronic device.

According to an embodiment, the first external electronic device may output the first audio by processing the first audio broadcast stream from the audio output start time point. For example, the first external electronic device may output audio by processing subsequent packets of a packet corresponding to the audio output start time point among packets of the first audio broadcast stream. The second external electronic device may output second audio by processing the first audio broadcast stream from the audio output start time point. As the first audio and the second audio are output simultaneously, the user may hear a normal stereo sound.

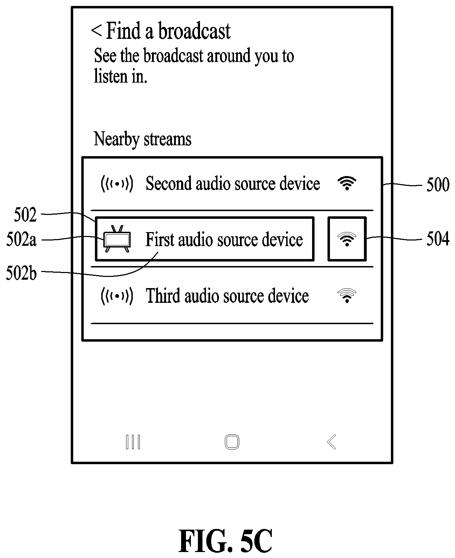

FIG. 5C is a diagram illustrating a list generated such that information of an audio source device is shown through UX of an electronic device, according to an embodiment.

According to an embodiment, an electronic device (e.g., the electronic device 101 in FIG. 1, the electronic device 302 in FIG. 3, or the electronic device 410 in FIG. 4) may perform scanning to detect signals (e.g. an EA or PA signal) broadcast in the vicinity of the electronic device. For example, scanning may be used to receive a signal including first information (e.g., 502) of a first audio source device (e.g., the audio source device 310 in FIG. 3), a signal including second information of a second audio source device (e.g., the audio source device 320 in FIG. 3), and a signal including third information of a third audio source device. The electronic device may generate and output a list 500 such that the first information 502, the second information, and the third information are shown thereon. Although UX is shown in the form of a list and described as the list, an output form of information is not limited to the form of a list. For example, UX may be implemented in the form of a plurality of blocks including information.

According to an embodiment, the electronic device may determine the quality of at least one signal received through scanning and display quality-related information on a screen based on the determined quality. For example, the electronic device may generate and output the list 500 such that signal strength determined for each signal is shown thereon along with the first information 502, the second information, and the third information.

For example, the first information 502 displayed on the list 500 may include a first icon 502a and/or a first identifier 502b. The first icon 502a may be a graphical representation of the form of the first audio source device. The first identifier 502b may be an identifier for identifying the first audio source device or a first audio signal. For example, first signal strength 504 displayed in association with the first information 502 may be an alphanumeric character, image, or icon corresponding to signal strength determined for a signal received from the first audio source device. Each signal strength output through a display may be displayed such that they are distinguishable from each other. For example, each signal strength may have the same image but different colors. For example, each signal strength may have different numbers. For example, each signal strength may have text indicating the corresponding signal strength. For example, each signal strength may further include an image representing a device (e.g., the electronic device, an audio output device, or a cradle device of the audio output device) that determines the signal strength. For example, each signal strength may further include a background color set for a device (e.g., a first external electronic device or a second external electronic device of an audio output device, a cradle device, or the electronic device) that determines the signal strength.

The electronic device may change an arrangement order of the first information 502, the second information, and the third information on the list 500 based on the determine magnitudes of signal strength. For example, when the magnitude of second signal strength corresponding to the second information is greater than the magnitudes of remaining signal strength, the second information may be arranged at the top of the list 500.

The electronic device may generate the list 500 such that only at least a portion of the information is shown thereon. For example, when the number of detected audio source devices is greater than a preset number, the electronic device may determine a preset number of pieces of information from among a plurality of pieces of information based on the magnitude of signal strength and generate the list 500 such that the preset number of pieces of information is shown thereon.

A user may then select any one from among the first information 502, the second information, and the third information displayed on the list 500. For example, the user may select the first information 502 by touching an area of the display corresponding to the first information 502.

According to an embodiment, when the user selects the first information 502, the electronic device may transmit a source addition command to a first audio output device (e.g., the electronic device 102 or the electronic device 104 in FIG. 1, the first audio output device 304 in FIG. 3, or the audio output device 415 in FIG. 4).

The first audio output device may receive a PA signal broadcast by the first audio source device based on the source addition command and receive an audio broadcast stream based on the PA signal.

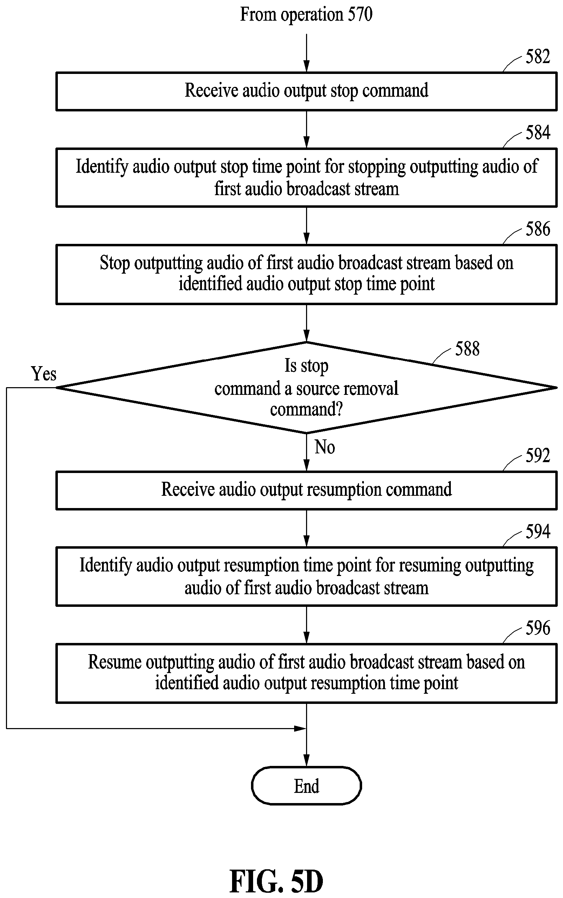

FIG. 5D is a flowchart illustrating an audio output stop method and an audio output resumption method performed by a first external electronic device, according to an embodiment.

According to an embodiment, an audio output device (e.g., the electronic device 102 or the electronic device 104 in FIG. 1, the audio output device 304 or 309 in FIG. 3, or the audio output device 415 in FIG. 4) may include a first external electronic device (e.g., the first external electronic device 306a or 309a in FIG. 3 or the first external electronic device 421 in FIG. 4) and a second external electronic device (e.g., the second external electronic device 306b or 309b in FIG. 3 or the second external electronic device 423 in FIG. 4). The first external electronic device and the second external electronic device may operate as at least one group or set.

Operations 582 to 596 described below may be performed by the first external electronic device (or the second external electronic device).

According to an embodiment, operation 582 may be performed after operation 570 described above with reference to FIG. 5B is performed.

In operation 582, a processor of the first external electronic device (or the second external electronic device) may receive an audio output stop command for stopping outputting audio through a communication module.

For example, the first external electronic device may receive the audio output stop command from an electronic device (e.g., the electronic device 101 in FIG. 1, the electronic device 300 in FIG. 3, or the electronic device 410 in FIG. 4) through a first wireless link.

For example, the first external electronic device may transmit, to the electronic device, an audio output stop-related event based on a user input received from a user and may receive the audio output stop command from the electronic device in response to the audio output stop-related event.

For example, the first external electronic device may receive an audio output stop command for stopping outputting audio from the second external electronic device through a third wireless link. For example, when wireless communication between the electronic device and the second external electronic device (or the first external electronic device) is disconnected, the second external electronic device may transmit the audio output stop command to the first external electronic device through the third wireless link. When wireless communication with the electronic device is disconnected for a preset time, the second external electronic device may transmit the audio output stop command to the first external electronic device through the third wireless link.

According to an embodiment, the audio output stop command (or simply a "stop command") may be a source modification command (e.g., a modify source command). For example, when receiving an input for pausing audio output through UI or UX from the user, the electronic device may generate the stop command as the source modification command and transmit the generated stop command to the first external electronic device. The electronic device may transmit the stop command to the first external electronic device and the second external electronic device, respectively. For example, when receiving a call, the electronic device may generate the stop command and transmit the generated stop command to the first external electronic device.

For example, when receiving an input for pausing audio output from the user, an additional electronic device, the first external electronic device, or a cradle device (e.g., the cradle device 308 in FIG. 3 or the cradle device 425 in FIG. 4) may transmit an event for the input to the electronic device and, upon receiving the event, the electronic device may generate the stop command and transmit the generated stop command to the first external electronic device. For example, the additional electronic device may be an electronic device connected to the electronic device with the same user account. The additional electronic device and the electronic device may be connected through short-range wireless communication or the Internet.

According to an embodiment, the stop command may be a source removal command (e.g., a remove source command). For example, when receiving, from the user through UI or UX, an input for deleting or removing information about an audio source device broadcasting an audio broadcast stream to be received by the first external electronic device, the electronic device may generate the stop command as the source removal command and transmit the generated stop command to the first external electronic device. For example, when receiving, from the user, an input for playing a sound source through an application installed on the electronic device, the electronic device may generate the stop command as the source removal command and transmit the generated stop command to the first external electronic device.

In operation 584, the first external electronic device may identify an audio output stop time point for stopping outputting audio of a first audio broadcast stream, for synchronization with the stop of audio output of the second external electronic device based on the stop command. For example, the audio output stop time point may be a point in time at which packets of the first audio broadcast stream stop being processed. For example, the audio output stop time point may be a point in time at which the first external electronic device does not receive a subsequent PA signal. For example, the audio output stop time point may be a point in time at which a packet of the first audio broadcast stream is not received. As the audio output stop time point of the first external electronic device and the audio output stop time point of the second external electronic device are synchronized, times at which left audio and right audio heard by the user stop being output may be the same.

According to an embodiment, the first external electronic device may synchronize the audio output stop time point between the first external electronic device and the second external electronic device by exchanging information with the second external electronic device.

According to an embodiment, as the first external electronic device and the second external electronic device receive, from the electronic device, the audio output stop time point determined by the electronic device, the audio output stop time points of the first external electronic device and the second external electronic device may be synchronized.

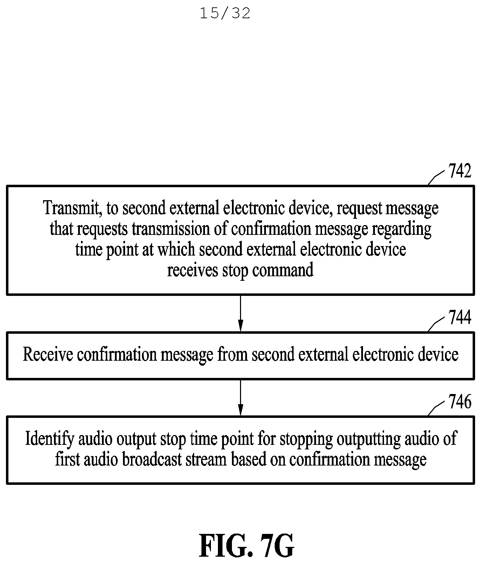

Hereinafter, a method of synchronizing an audio output stop time point between the first external electronic device and the second external electronic device will be described in detail with reference to FIG. 7G.

In operation 586, the first external electronic device (or the second external electronic device) may stop outputting audio of the first audio broadcast stream based on the audio output stop time point.

According to an embodiment, the first external electronic device may stop outputting first audio by stopping processing the first audio broadcast stream from the audio output stop time point. The first audio may be left audio corresponding to the first external electronic device.

For example, the first external electronic device may stop outputting audio without processing subsequent packets of a packet corresponding to the audio output stop time point among packets of the first audio broadcast stream.

For example, the first external electronic device may stop outputting audio without synchronizing a PA signal after the audio output stop time point.

For example, the first external electronic device may stop outputting audio without receiving the first audio broadcast stream after the audio output stop time point.

According to an embodiment, when the stop command is the source removal command, the first external electronic device may delete information about the audio source device. As the information about the audio source device is deleted, the first external electronic device may not receive a PA signal and the first audio broadcast stream.

According to an embodiment, when the stop command is the source modification command, the first external electronic device may stop outputting audio of the first audio broadcast stream, but still receive a PA signal or the first audio broadcast stream broadcast by the audio source device.

According to an embodiment, whether the stop command is the source removal command or not may be determined in operation 588. When the stop command is not the source removal command, operations 592 to 596 described below may be performed. For example, when the stop command is the source modification command, operations 592 to 596 may be performed.

According to an embodiment, in operation 588, whether the stop command is the source removal command or not may be determined. When the stop command is the source modification command, operations 592 to 596 described below may be performed.

In operation 592, the processor of the first external electronic device (or the second external electronic device) may receive an audio output resumption command for resuming outputting audio through the communication module. For example, the first external electronic device may receive the audio output resumption command from the electronic device.

For example, the first external electronic device may transmit, to the electronic device, an audio output resumption-related event based on a user input received from the user and may receive the audio output resumption command from the electronic device in response to the audio output resumption-related event.

For example, the first external electronic device may receive the audio output resumption command from the second external electronic device through the third wireless link.

According to an embodiment, the audio output resumption command (or simply a "resumption command") may be the source modification command. For example, when receiving an input for resuming audio output from the user through UI or UX, the electronic device may generate the resumption command as the source modification command and transmit the generated resumption command to the audio output device. The electronic device may transmit the resumption command to the first external electronic device and the second external electronic device, respectively. For example, when a call ends, the electronic device may generate the resumption command and transmit the generated resumption command to the audio output device.

In operation 594, the first external electronic device may identify an audio output resumption time point for resuming outputting audio of the first audio broadcast stream, for synchronization with the resumption of audio output of the second external electronic device based on the resumption command. For example, the audio output resumption time point may be a point in time at which the processing of the packets of the first audio broadcast stream resumes. For example, the audio output resumption time point may be a point in time at which a subsequent PA signal is synchronized. For example, the audio output resumption time point may be a point in time at which a packet of the first audio broadcast stream is received. As the audio output resumption time point of the first external electronic device and the audio output resumption time point of the second external electronic device are synchronized, times at which left audio and right audio heard by the user resume being output may be the same.

According to an embodiment, the first external electronic device may synchronize the audio output resumption time point between the first external electronic device and the second external electronic device by exchanging information with the second external electronic device.

According to an embodiment, as the first external electronic device and the second external electronic device receive, from the electronic device, the audio output resumption time point determined by the electronic device, the audio output resumption time points of the first external electronic device and the second external electronic device may be synchronized.

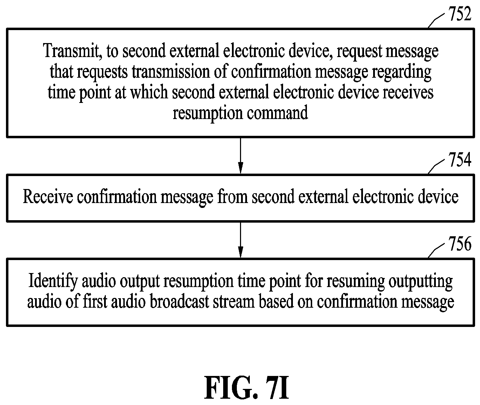

Hereinafter, a method of synchronizing an audio output resumption time point between the first external electronic device and the second external electronic device will be described in detail with reference to FIG. 7I.

In operation 596, the first external electronic device (or the second external electronic device) may resume outputting audio of the first audio broadcast stream based on the audio output resumption time point. For example, the first external electronic device may output audio from the audio output resumption time point.

According to an embodiment, the first external electronic device may output first audio by processing the first audio broadcast stream from the audio output resumption time point. For example, the first audio may be left audio corresponding to the first external electronic device.

According to an embodiment, the first external electronic device may resume outputting audio by receiving subsequent packets of a packet corresponding to the audio output resumption time point among the packets of the first audio broadcast stream from the audio source device. For example, the first external electronic device may resume outputting audio by processing the subsequent packets of the packet corresponding to the audio output resumption time point among the packets of the first audio broadcast stream.

FIG. 6 is a flowchart illustrating a method of receiving a first audio broadcast stream broadcast by a first audio source device based on a command, which is performed by a first external electronic device, according to an embodiment.

According to an embodiment, an audio output device (e.g., the electronic device 102 or the electronic device 104 in FIG. 1, the audio output device 304 or 309 in FIG. 3, or the audio output device 415 in FIG. 4) may include a first external electronic device (e.g., the first external electronic device 306a or 309a in FIG. 3 or the first external electronic device 421 in FIG. 4) and a second external electronic device (e.g., the second external electronic device 306b or 309b in FIG. 3 or the second external electronic device 423 in FIG. 4). The first external electronic device and the second external electronic device may operate as at least one group or set.

According to an embodiment, operations 610 and 620 described below may be performed by the first external electronic device (or the second external electronic device).

Operations 610 and 620 may be related to operation 550 described above with reference to FIG. 5B.

In operation 610, the first external electronic device may receive a PA signal broadcast by a first audio source device through synchronization based on a source addition command. For example, the first external electronic device may receive the PA signal broadcast by the first audio source device based on a first source addition command through a communication module. For example, the second external electronic device of the audio output device may receive the PA signal broadcast by the first audio source device based on a second source addition command through a communication module.

In operation 620, the first external electronic device may receive a first audio broadcast stream broadcast by the first audio source device based on the PA signal through the communication module. For example, a first audio output device may receive the first audio broadcast stream based on information about the first audio broadcast stream included in a BIGInfo field in the PA signal. For example, the first audio broadcast stream to be received may be a BIS.

According to an embodiment, the first audio broadcast stream may include a first sub-audio broadcast stream and a second sub-audio broadcast stream for stereophony. For example, when the first audio output device includes a first external electronic device and a second external electronic device, the first external electronic device may identify the first sub-audio broadcast stream based on the first source addition command and receive the first sub-audio broadcast stream, and the second external electronic device may identify the second sub-audio broadcast stream based on the second source addition command and receive the second sub-audio broadcast stream. For example, the first audio broadcast stream may include a first BIG event, and the first BIG event may include a first BIS event BIS 1 and a first BIS event BIS 2. The first BIS event BIS 1 may include one or more packets for the first sub-audio broadcast stream, and the first BIS event BIS 2 may include one or more packets for the second sub-audio broadcast stream.

FIG. 7A is a flowchart illustrating a method of synchronizing an audio output start time point for starting outputting audio of a first audio broadcast stream between a first external electronic device and a second external electronic device, which is performed by the first external electronic device, according to an embodiment.

According to an embodiment, an audio output device (e.g., the electronic device 102 or the electronic device 104 in FIG. 1, the audio output device 304 or 309 in FIG. 3, or the audio output device 415 in FIG. 4) may include a first external electronic device (e.g., the first external electronic device 306a or 309a in FIG. 3 or the first external electronic device 421 in FIG. 4) and a second external electronic device (e.g., the second external electronic device 306b or 309b in FIG. 3 or the second external electronic device 423 in FIG. 4). The first external electronic device and the second external electronic device may operate as at least one group or set.

According to an embodiment, operations 710 to 730 described below may be performed by the first external electronic device (or the second external electronic device). Operations 710 to 730 may be related to operation 560 described above with reference to FIG. 5B.

According to an embodiment, the data or message exchange between the first external electronic device and the second external electronic device may be performed through a wireless link (e.g. a third wireless link) established between the first external electronic device and the second external electronic device.

In operation 710, the first external electronic device may transmit, to the second external electronic device through a communication module, a request message that requests transmission of a confirmation message regarding a time point at which the second external electronic device has received a first audio broadcast stream. For example, the confirmation message may be an acknowledgment (ACK) that is transmitted to an audio source device (e.g., the audio source device 310 or 320 in FIG. 3) broadcasting the first audio broadcast stream, when the second external electronic device receives a packet of the first audio broadcast stream.

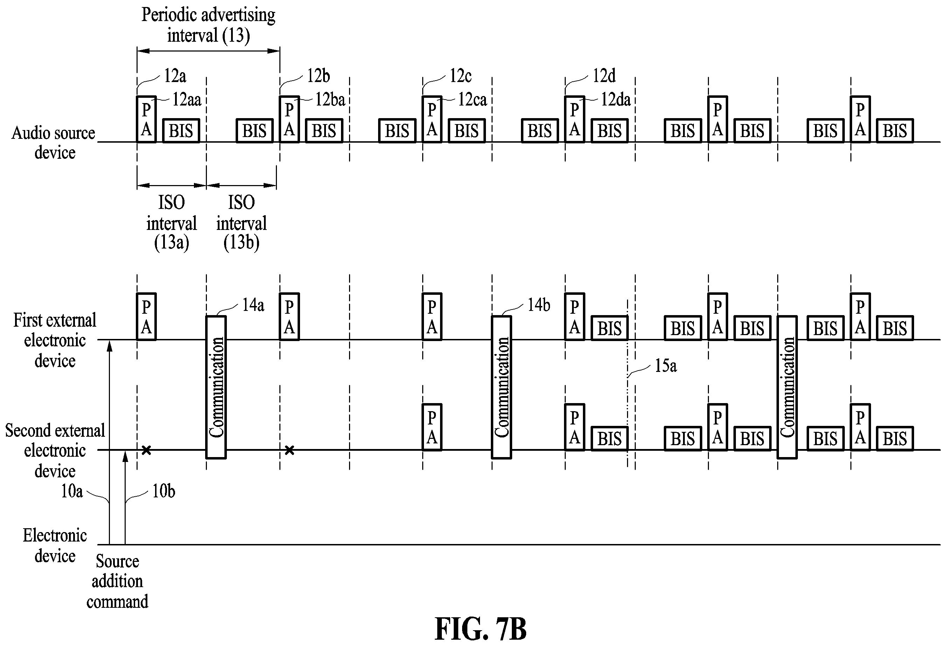

According to an embodiment, when receiving a second sub-audio broadcast stream of the first audio broadcast stream, the second external electronic device may transmit the confirmation message to the first external electronic device through a communication module. For example, message transmission and reception between the first external electronic device and the second external electronic device may be performed in a periodically performed communication session (e.g., communication 14a or 14b in FIG. 7B).

According to an embodiment, when the first external electronic device and the second external electronic device each receive a corresponding audio broadcast stream, they may transmit the confirmation message to the other external electronic device even without the request message. In this case, operation 710 may not be performed.

In operation 720, the first external electronic device may receive the confirmation message from the second external electronic device through the communication module.

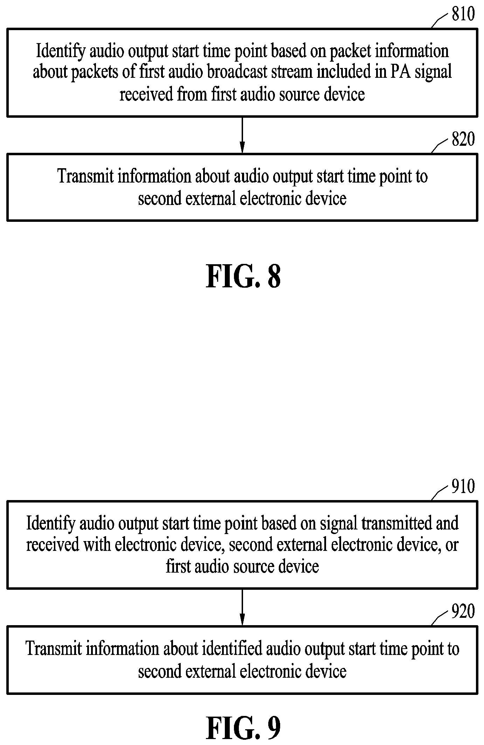

In operation 730, the first external electronic device may identify an audio output start time point for starting outputting audio of the first audio broadcast stream based on the confirmation message. A method of identifying the audio output start time point for starting outputting audio of the first audio broadcast stream based on the confirmation message will be described in detail below with reference to FIGS. 8 and 9.

FIG. 7B is a diagram illustrating a timing chart for a method of synchronizing an audio output start time point for starting outputting audio of a first audio broadcast stream between a first external electronic device and a second external electronic device, according to an embodiment.

An electronic device (e.g., the electronic device 101 in FIG. 1, the electronic device 300 in FIG. 3, or the electronic device 410 in FIG. 4) may transmit a source addition command to a first external electronic device (e.g., the first external electronic device 306a or 309a in FIG. 3 or the first external electronic device 421 in FIG. 4) at a time 10a. For example, the electronic device may transmit the source addition command to the first external electronic device through a first wireless link established with the first external electronic device.

The electronic device may transmit the source addition command to a second external electronic device (e.g., the second external electronic device 306b or 309b in FIG. 3 or the second external electronic device 423 in FIG. 4) at a time 10b. For example, the electronic device may transmit the source addition command to the second external electronic device through a second wireless link established with the second external electronic device.

According to an embodiment, the first external electronic device may receive a first PA signal 12aa broadcast from an audio source device (e.g., the audio source device 310 or 320 in FIG. 3) at a time 12a based on the source addition command. The second external electronic device may not receive the first PA signal 12aa broadcast from the audio source device at the time 12a. For example, the second external electronic device may not be able to receive the first PA signal 12aa broadcast at the time 12a due to wireless resource scheduling of the second external electronic device. For example, the second external electronic device may not be able to receive the first PA signal 12aa at the time 12a due to poor quality of a wireless communication environment in which the first PA signal 12aa is broadcast.

According to an embodiment, a third wireless link may be established between the first external electronic device and the second external electronic device. The first external electronic device and the second external electronic device may exchange data through the third wireless link. The third wireless link may be, for example, Bluetooth legacy (or BT legacy) or BLE but is not limited thereto. For example, the first external electronic device and the second external electronic device may communicate through the third wireless link on a periodic or non-periodic basis. A communication period during which communication is performed through the third wireless link may be determined based on available communication resources of each of the first external electronic device and the second external electronic device.

The first external electronic device and the second external electronic device may perform communication 14a through the third wireless link. Through communication 14a, the first external electronic device may check whether the second external electronic device has received the first PA signal 12aa. For example, the first external electronic device may inquire of the second external electronic device about whether the second external electronic device has received the first PA signal 12aa, and receive a reply to the inquiry from the second external electronic device. When the second external electronic device has not received the first PA signal 12aa, the first external electronic device may transmit, to the second external electronic device, a request message that requests the second external electronic device to transmit a confirmation message to the first external electronic device when the second external electronic device receives a subsequent PA signal or a BIS that is based on the subsequent PA signal.

According to an embodiment, when it is determined through communication 14a that an audio output start time point is not synchronized between the first external electronic device and the second external electronic device, the first external electronic device may determine an initial audio output time point for outputting audio. For example, the initial audio output time point may be a maximum delay output time point indicating a maximum time for which audio output is delayed. For example, the first external electronic device may transmit information about the initial audio output time point to the second external electronic device through communication 14a. Even after this, when the audio output start time point is not synchronized between the first external electronic device and the second external electronic device, the first external electronic device may start outputting audio, from the initial audio output time point.

According to an embodiment, the first external electronic device may receive a second PA signal 12ba broadcast from the audio source device at a time 12b. The second external electronic device may not receive the second PA signal 12ba broadcast from the audio source device at the time 12b. For example, a time between the time 12a and the time 12b may be defined as a periodic advertising interval 13, and the periodic advertising interval 13 may be defined as an isochronous (ISO) interval 13a and an ISO interval 13b.

According to an embodiment, the first external electronic device may receive a third PA signal 12ca broadcast from the audio source device at a time 12c. The second external electronic device may receive the third PA signal 12ca broadcast from the audio source device at the time 12c based on the source addition command.

The first external electronic device and the second external electronic device may perform communication 14b through the third wireless link. Through communication 14b, the first external electronic device may check whether the second external electronic device has received the second PA signal 12ba or the third PA signal 12ca. For example, the first external electronic device may inquire of the second external electronic device about whether the second external electronic device has received the PA signal and receive a reply to the inquiry from the second external electronic device. For example, the first external electronic device may receive, from the second external electronic device, a confirmation message indicating that it has received the third PA signal 12ca or a BIS that is based on the third PA signal 12ca.

For the transmission and reception of a request message and a received message between the first external electronic device and the second external electronic device, reference may be made to the description of operations 710 and 720 provided above with reference to FIG. 7A.

Through communication 14b, the first external electronic device and the second external electronic device may exchange data for synchronizing the audio output start time point. Hereinafter, a method of synchronizing an audio output start time point will be described in detail with reference to FIGS. 8 and 9.

For example, audio output start time points of the first external electronic device and the second external electronic device may be synchronized to a time 15a. The time 15a may correspond to a broadcasting end time of a BIS indicated by a fourth PA signal 12da broadcast from the audio source device at a time 12d. For example, packet processing (e.g., rendering processing) for audio output may be performed from a time at which the reception of the BIS ends.

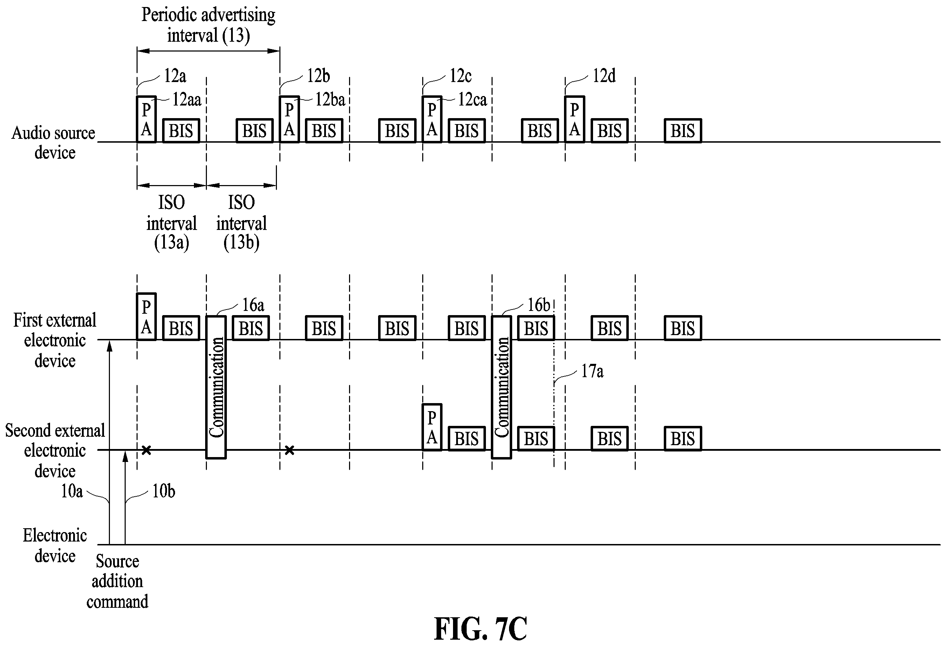

FIG. 7C is a diagram illustrating a timing chart for a method of synchronizing an audio output start time point for starting outputting audio of a first audio broadcast stream between a first external electronic device and a second external electronic device, according to an embodiment.

An electronic device (e.g., the electronic device 101 in FIG. 1, the electronic device 300, or the electronic device 410 in FIG. 4) may transmit a source addition command to a first external electronic device (e.g., the first external electronic device 306a or 309a in FIG. 3 or the first external electronic device 421 in FIG. 4) at a time 10a. For example, the electronic device may transmit the source addition command to the first external electronic device through a first wireless link established with the first external electronic device.

The electronic device may transmit the source addition command to a second external electronic device (e.g., the second external electronic device 306b or 309b in FIG. 3 or the second external electronic device 423 in FIG. 4) at a time 10b. For example, the electronic device may transmit the source addition command to the second external electronic device through a second wireless link established with the second external electronic device.

According to an embodiment, the first external electronic device may receive a first PA signal 12aa broadcast from an audio source device (e.g., the audio source device 310 or 320 in FIG. 3) at a time 12a based on the source addition command. For example, the first external electronic device may receive a BIS after the first PA signal 12aa based on the first PA signal 12aa. The second external electronic device may not receive the first PA signal 12aa broadcast from the audio source device at the time 12a.

According to an embodiment, a third wireless link may be established between the first external electronic device and the second external electronic device. The first external electronic device and the second external electronic device may exchange data through the third wireless link.

The first external electronic device and the second external electronic device may perform communication 16a through the third wireless link. Through communication 16a, the first external electronic device may check whether the second external electronic device has received the first PA signal 12aa. For example, the first external electronic device may inquire of the second external electronic device about whether the second external electronic device has received the first PA signal 12aa and receive a reply to the inquiry from the second external electronic device. When the second external electronic device has not received the first PA signal 12aa, the first external electronic device may transmit a request message that requests the second external electronic device to transmit a confirmation message when the second external electronic device receives a subsequent PA signal or a BIS that is based on the subsequent PA signal.

According to an embodiment, when it is determined that the audio output start time point is not synchronized between the first external electronic device and the second external electronic device through communication 16a, the first external electronic device may determine an initial output time point. For example, the initial output time point may be a maximum delay output time indicating a maximum time for which audio output is delayed. For example, the first external electronic device may transmit information about the initial output time of audio output to the second external electronic device through communication 16a. Even after this, when the audio output start time point is not synchronized between the first external electronic device and the second external electronic device, the first external electronic device may start outputting audio from the initial output time point.

According to an embodiment, the first external electronic device receiving the first PA signal 12aa may not receive PA signals 12ba or 12ca broadcast from the audio source device after the first PA signal 12aa. The second external electronic device may not receive a second PA signal 12ba broadcast from the audio source device at a time 12b.

According to an embodiment, the second external electronic device may receive a third PA signal 12ca broadcast from the audio source device at a time 12c. The second external electronic device may receive the third PA signal 12ca broadcast from the audio source device at the time 12c based on the source addition command.

The first external electronic device and the second external electronic device may perform communication 16b through the third wireless link. Through communication 16b, the first external electronic device may check whether the second external electronic device has received the second PA signal 12ba or the third PA signal 12ca. For example, the first external electronic device may inquire of the second external electronic device about whether the second external electronic device has received the PA signal and receive a reply to the inquiry from the second external electronic device. For example, the first external electronic device may receive, from the second external electronic device, a confirmation message indicating that the second external electronic device has received a BIS based on the second PA signal 12ba or the third PA signal 12ca.

For the transmission and reception of a request message and a received message between the first external electronic device and the second external electronic device, reference may be made to the description of operations 710 and 720 provided above with reference to FIG. 7A.

Through communication 16b, the first external electronic device and the second external electronic device may exchange data for synchronizing the audio output start time point. A method of synchronizing an audio output start time point will be described in detail below with reference to FIGS. 8 and 9.

For example, the audio output start time points of the first external electronic device and the second external electronic device may be synchronized to a time 17a. The time 17a may correspond to a broadcasting end time of a BIS broadcast after communication 16b. For example, from a time at which the reception of the BIS ends, packet processing (e.g., rendering processing) for audio output may be performed.

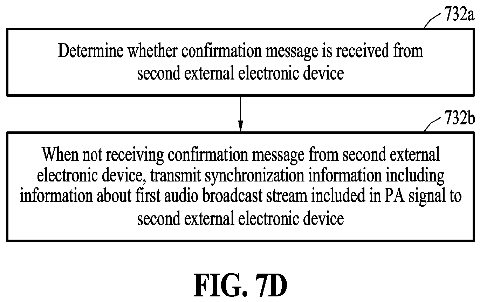

FIG. 7D is a flowchart illustrating a method of synchronizing an audio output start time point for starting outputting audio of a first audio broadcast stream between a first external electronic device and a second external electronic device based on synchronization information transmitted from the first external electronic device to the second external electronic device, according to an embodiment.

According to an embodiment, an audio output device (e.g., the electronic device 102 or the electronic device 104 in FIG. 1, the audio output device 304 or 309 in FIG. 3, or the audio output device 415 in FIG. 4) may include a first external electronic device (e.g., the first external electronic device 306a or 309a in FIG. 3 or the first external electronic device 421 in FIG. 4) and a second external electronic device (e.g., the second external electronic device 306b or 309b in FIG. 3 or the second external electronic device 423 in FIG. 4). The first external electronic device and the second external electronic device may operate as at least one group or set.

According to an embodiment, operations 732a and 732b described below may be performed by the first external electronic device (or the second external electronic device). Operations 732a and 732b may be related to operation 560 described above with reference to FIG. 5b. For example, operation 732a may be performed after operation 710 described above with reference to FIG. 7A is performed.

In operation 732a, the first external electronic device may determine whether a confirmation message has been received from the second external electronic device (e.g., the second external electronic device 306b or 309b in FIG. 3 or the second external electronic device 423 in FIG. 4).

For example, the first external electronic device may determine whether the confirmation message has been received from the second external electronic device during the reception of PA signals performed a preset number of times after receiving a source addition command from an electronic device (e.g., the electronic device 101 in FIG. 1, the electronic device 300 in FIG. 3, or the electronic device 410 in FIG. 4).

For example, the first external electronic device may determine whether the confirmation message has been received from the second external electronic device during periodic communication or non-periodic communication that is performed with the second external electronic device a preset number of times after receiving the source addition command from the electronic device.

For example, after receiving the source addition command from the electronic device, the first external electronic device may determine whether the confirmation message has been received from the second external electronic device within a preset time.

When the first external electronic device receives the confirmation message from the second external electronic device, operation 720 described above with reference to FIG. 7A may be performed. When the first external electronic device does not receive the confirmation message from the second external electronic device, operation 732b may be performed. For example, when the second external electronic device receives the source addition command from the electronic device but does not receive a PA signal, the second external electronic device may not be able to transmit the confirmation message to the first external electronic device.

In operation 732b, when the first external electronic device does not receive the confirmation message from the second external electronic device, the first external electronic device may transmit, to the second external electronic device, synchronization information including information about a first audio broadcast stream included in a PA signal received by the first external electronic device. For example, the information about the first audio broadcast stream may be information included in a BIGInfo field in the PA signal. When the second external electronic device receives the information about the first audio broadcast stream included in the BIGInfo field in the PA signal from the first external electronic device, even though the second external electronic device does not directly receive the PA signal, the second external electronic device may directly receive the first audio broadcast stream based on the information about the first audio broadcast stream.

According to an embodiment, the first external electronic device may include information about an audio output start time point in the synchronization information to be transmitted to the second external electronic device.

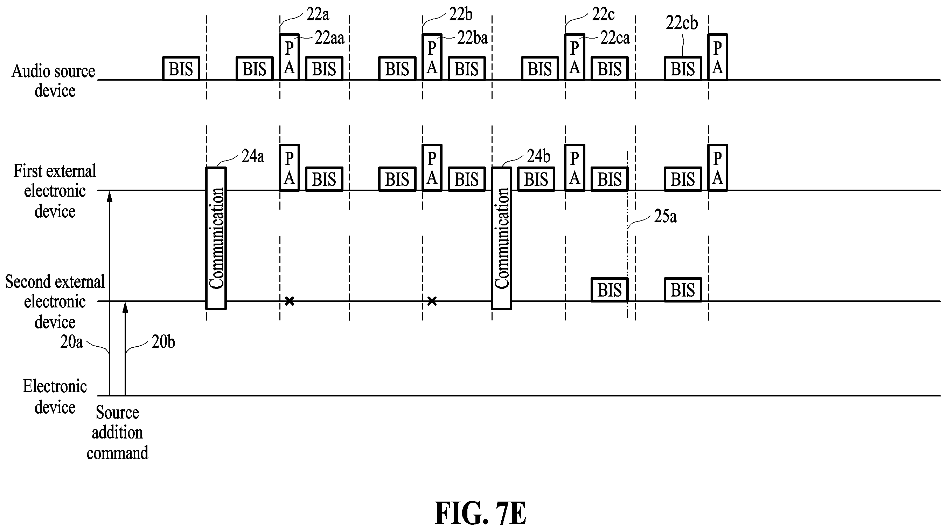

FIG. 7E is a diagram illustrating a timing chart for a method of transmitting synchronization information from a first external electronic device to a second external electronic device based on a wireless link between the first external electronic device and the second external electronic device, according to an embodiment.

An electronic device (e.g., the electronic device 101 in FIG. 1, the electronic device 300, or the electronic device 410 in FIG. 4) may transmit a source addition command to a first external electronic device (e.g., the first external electronic device 306a or 309a in FIG. 3 or the first external electronic device 421 in FIG. 4) at a time 20a. For example, the electronic device may transmit the source addition command to the first external electronic device through a first wireless link established with the first external electronic device.

The electronic device may transmit the source addition command to a second external electronic device (e.g., the second external electronic device 306b or 309b in FIG. 3 or the second external electronic device 423 in FIG. 4) at a time 20b. For example, the electronic device may transmit the source addition command to the second external electronic device through a second wireless link established with the second external electronic device.

The first external electronic device and the second external electronic device may perform communication 24a through a third wireless link. Through communication 24a, the first external electronic device may check whether the second external electronic device has received a PA signal. In an embodiment, no PA signal broadcast after the time 20a and the time 20b is shown, which may indicate that the first external electronic device and the second external electronic device may not receive a PA signal.

Through communication 24a, the first external electronic device may transmit, to the second external electronic device, a request message that requests the second external electronic device to transmit a confirmation message to the first external electronic device when the second external electronic device receives a subsequent PA signal or a BIS (e.g., a first audio broadcast stream) that is based on the subsequent PA signal.

According to an embodiment, the first external electronic device may receive a first PA signal 22aa broadcast from an audio source device (e.g., the audio source device 310 or 320 in FIG. 3) at a time 22a. The second external electronic device may not receive the first PA signal 22aa broadcast from the audio source device at the time 22a. For example, the second external electronic device may not receive the first PA signal 22aa due to wireless resource scheduling of the second external electronic device. For example, the second external electronic device may not be able to receive the first PA signal 22aa due to poor quality of a wireless communication environment in which the first PA signal 22aa is broadcast.

According to an embodiment, the first external electronic device may receive a second PA signal 22ba broadcast from the audio source device at a time 22b based on the source addition command. The second external electronic device may not again receive the second PA signal 22ba broadcast from the audio source device at the time 22b.

The first external electronic device and the second external electronic device may perform communication 24b through the third wireless link. Through communication 24b, the first external electronic device may check whether the second external electronic device has received the first PA signal 22aa or the second PA signal 22ba. When the second external electronic device has not received any PA signal, the first external electronic device may transmit, to the second external electronic device, synchronization information including information about a BIS included in the first PA signal 22aa or the second PA signal 22ba received by the first external electronic device. For example, the information about the BIS may include at least a portion of information about the BIS included in a BIGInfo field. The information about the BIS included in the BIGInfo field may include channel map information and time information that may be synchronized with the BIS. The synchronization information may include information about an audio output start time point based on the BIS. The audio output start time point may be determined by the first external electronic device. For example, the audio output start time point may correspond to a time 25a.

According to an embodiment, the first external electronic device may receive a third PA signal 22ca broadcast from the audio source device at a time 22c. The second external electronic device may not receive the third PA signal 22ca broadcast from the audio source device at the time 22c. Even when the second external electronic device does not receive the third PA signal 22ca, the second external electronic device may receive a BIS 22cb broadcast after the third PA signal 22ca based on the information about the BIS received from the first external electronic device.

The first external electronic device and the second external electronic device may start outputting audio from the time 25a.

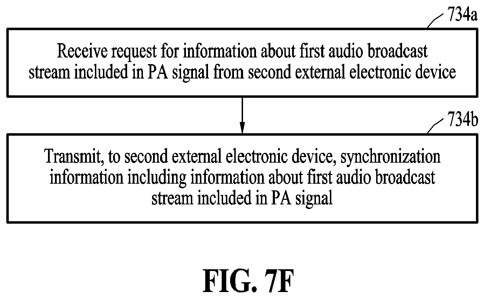

FIG. 7F is a flowchart illustrating a method of synchronizing an audio output start time point for starting outputting audio of a first audio broadcast stream between a first external electronic device and a second external electronic device based on a request for information about the first audio broadcast stream received by the first external electronic device from the second external electronic device, according to an embodiment.

According to an embodiment, an audio output device (e.g., the electronic device 102 or the electronic device 104 in FIG. 1, the audio output device 304 or 309 in FIG. 3, or the audio output device 415 in FIG. 4) may include a first external electronic device (e.g., the first external electronic device 306a or 309a in FIG. 3 or the first external electronic device 421 in FIG. 4) and a second external electronic device (e.g., the second external electronic device in 306b or 309b FIG. 3 or the second external electronic device 423 in FIG. 4). The first external electronic device and the second external electronic device may operate as at least one group or set.

According to an embodiment, operations 734a and 734b described below may be performed by the first external electronic device (or the second external electronic device). Operations 734a and 734b may be related to operation 560 described above with reference to FIG. 5B.

According to an embodiment, the data or message exchange between the first external electronic device and the second external electronic device may be performed through a wireless link (e.g. a third wireless link) established between the first external electronic device and the second external electronic device.

In operation 734a, the first external electronic device may receive a request for information about a first audio broadcast stream included in a PA signal from the second external electronic device. For example, when the second external electronic device receives a source addition command from an electronic device but does not receive the PA signal, the second external electronic device may request the first external electronic device for the information about the first audio broadcast stream included in the PA signal. For example, the information about the first audio broadcast stream included in the PA signal may be at least a portion of information about the first audio broadcast stream included in a BIGInfo field.

In operation 734b, the first external electronic device may transmit synchronization information including at least a portion of the information about the first audio broadcast stream included in the PA signal received by the first external electronic device to the second external electronic device. When the second external electronic device receives the at least a portion of the information about the first audio broadcast stream included in the BIGInfo field in the PA signal from the first external electronic device, although not directly receiving the PA signal, the second external electronic device may directly receive the first audio broadcast stream based on the information about the first audio broadcast stream.

According to an embodiment, the first external electronic device may include information about an audio output start time point in the synchronization information that is to be transmitted to the second external electronic device.

Referring back to the timing chart shown in FIG. 7E, operations 734a and 734b may be performed through communication 24b. For example, an audio output start time point synchronized between the first external electronic device and the second external electronic device may correspond to a time 25a.

FIG. 7G is a flowchart illustrating a method of synchronizing an audio output stop time point between a first external electronic device and a second external electronic device, according to an embodiment.

According to an embodiment, an audio output device (e.g., the electronic device 102 or the electronic device 104 in FIG. 1, the audio output device 304 or 309 in FIG. 3, or the audio output device 415 in FIG. 4) may include a first external electronic device (e.g., the first external electronic device 306a or 309a in FIG. 3 or the first external electronic device 421 in FIG. 4) and a second external electronic device (e.g., the second external electronic device 306b or 309b in FIG. 3 or the second external electronic device 423 in FIG. 4). The first external electronic device and the second external electronic device may operate as at least one group or set.

According to an embodiment, operations 742 to 746 described below may be performed by the first external electronic device (or the second external electronic device). Operations 742 to 746 may be related to operation 584 described above with reference to FIG. 5D.

According to an embodiment, the data or message exchange between the first external electronic device and the second external electronic device may be performed through a wireless link (e.g. a third wireless link) established between the first external electronic device and the second external electronic device.

In operation 742, the first external electronic device may transmit a request message that requests transmission of a confirmation message regarding a time point at which the second external electronic device receives a stop command from an electronic device (e.g., the electronic device 101 in FIG. 1, the electronic device 300 in FIG. 3, or the electronic device 410 in FIG. 4) to the second external electronic device through a communication module. The confirmation message may be, for example, an ACK to be transmitted to the electronic device when the second external electronic device receives the stop command from the electronic device.

According to an embodiment, when receiving the stop command from the electronic device, the second external electronic device may transmit the confirmation message to the first external electronic device through a communication module.

In operation 744, the first external electronic device may receive the confirmation message from the second external electronic device through the communication module.

In operation 746, the first external electronic device may identify an audio output stop time point for stopping outputting audio of a first audio broadcast stream based on the confirmation message.

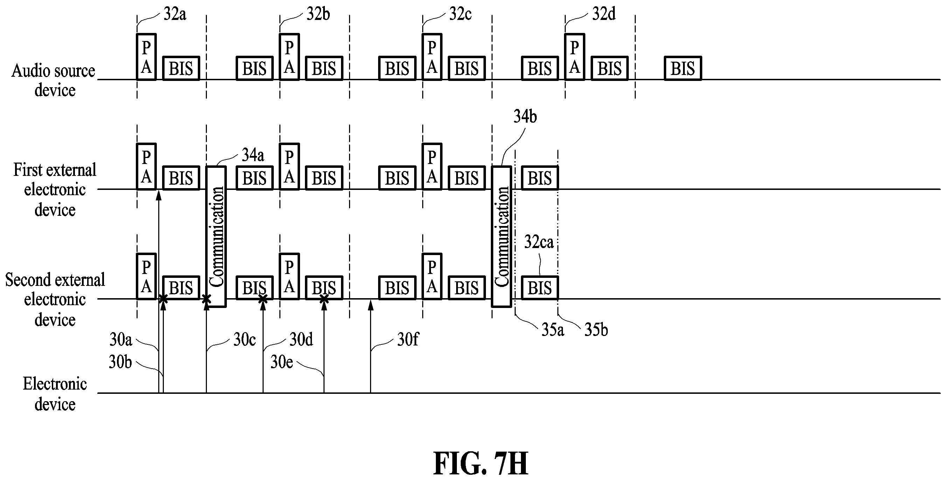

FIG. 7H is a diagram illustrating a timing chart for a method of synchronizing an audio output stop time point between a first external electronic device and a second external electronic device, according to an embodiment.

An electronic device (e.g., the electronic device 101 in FIG. 1, the electronic device 300 in FIG. 3, or the electronic device 410 in FIG. 4) may transmit an audio output stop command to a first external electronic device (e.g., the first external electronic device 306a or 309a in FIG. 3 or the first external electronic device 421 in FIG. 4) at a time 30a. For example, the electronic device may transmit the audio output stop command to the first external electronic device through a first wireless link established with the first external electronic device. For example, the first external electronic device may normally receive the audio output stop command at the time 30a.

The electronic device may transmit the audio output stop command to a second external electronic device (e.g., the second external electronic device 306b or 309b in FIG. 3 or the second external electronic device 423 in FIG. 4) at a time 30b. For example, the electronic device may transmit the audio output stop command to the second external electronic device through a second wireless link established with the second external electronic device. For example, the second external electronic device may not normally receive the audio output stop command at the time 30b.

The first external electronic device and the second external electronic device may perform communication 34a through a third wireless link. Through communication 34a, the first external electronic device may check whether the second external electronic device has received the audio output stop command. For example, the first external electronic device may inquire of the second external electronic device about whether the second external electronic device has received the audio output stop command and may receive a replay to the inquiry from the second external electronic device.

According to an embodiment, when the second external electronic device has not received the audio output stop command, the first external electronic device may transmit, to the second external electronic device, a request message that requests the second external electronic device to transmit a confirmation message to the first external electronic device when the second external electronic device receives subsequently the audio output stop command from the electronic device. When it is determined that an audio output stop time point is not synchronized between the first external electronic device and the second external electronic device through communication 34a, the first external electronic device may determine an initial output stop time point. For example, the initial output stop time point may be a maximum delay output stop time indicating a maximum time for which the stop of audio output is delayed. For example, the first external electronic device may transmit information about the initial output stop time point to the second external electronic device through communication 34a. Even after this, when the audio output stop time point is not synchronized between the first external electronic device and the second external electronic device, the first external electronic device may stop outputting audio from the initial output stop time point.

According to an embodiment, when the second external electronic device has not received the audio output stop command, the first external electronic device may transmit the audio output stop command to the second external electronic device. For example, the first external electronic device may transmit, to the second external electronic device, information about the audio output stop time point along with the audio output stop command received from the electronic device.

According to an embodiment, when a reply to the stop command is not received from the second external electronic device, the electronic device may periodically transmit the stop command. For example, the electronic device may transmit the stop command to the second external electronic device at each of times 30c, 30d, 30e, and 30f. For example, the second external electronic device may not receive the stop command at the times 30c, 30d, and 30e, but at the time 30f. In this case, when receiving the stop command at the time 30f, the second external electronic device may transmit a reply to the stop command to the electronic device.

The first external electronic device and the second external electronic device may perform communication 34b through the third wireless link. Through communication 34b, the first external electronic device may check whether the second external electronic device has received the stop command. For example, the second external electronic device may transmit a confirmation message indicating that it has received the stop command at the time 30f to the first external electronic device.

Through communication 34b, the first external electronic device and the second external electronic device may exchange data for synchronizing an audio output stop time point 35a or 35b. For example, the audio output stop time point 35a or 35b may be determined by the first external electronic device. For example, the audio output stop time point 35a or 35b may be determined by a negotiation between the first external electronic device and the second external electronic device. The first external electronic device and the second external electronic device may stop outputting audio from the determined stop time point 35a or 35b. According to an embodiment, although a time immediately after communication 34b ends is shown as the audio output stop time point 35a and a time at which the reception of a BIS 32ca ends is shown as the audio output stop time point 35b, the audio output stop time point may be determined to be any one point after the stop time point 35a by a negotiation between the first external electronic device and the second external electronic device.

For example, the audio output stop time point may be immediately after communication 34b ends. For example, the audio output stop time point may be a time at which packets for an already received BIS stop being processed. For example, the audio output stop time point may be a time at which the first external electronic device or the second external electronic device does not receive a subsequent PA signal. For example, the audio output stop time point may be a time at which a packet of a BIS is not received. As the audio output stop time point between the first external electronic device and the second external electronic device is synchronized, a time for stopping outputting left audio and right audio heard by the user may be the same.

FIG. 7I is a flowchart illustrating a method of synchronizing an audio output resumption time point between a first external electronic device and a second external electronic device, according to an embodiment.

According to an embodiment, an audio output device (e.g., the electronic device 102 or the electronic device 104 in FIG. 1, the audio output device 304 or 309 in FIG. 3, or the audio output device 415 in FIG. 4) may include a first external electronic device (e.g., the first external electronic device 306a or 309a in FIG. 3 or the first external electronic device 421 in FIG. 4) and a second external electronic device (e.g., the second external electronic device 306b or 309b in FIG. 3 or the second external electronic device 423 in FIG. 4). The first external electronic device and the second external electronic device may operate as at least one group or set.

According to an embodiment, operations 752 to 756 described below may be performed by the first external electronic device (or the second external electronic device). Operations 752 to 756 may be related to operation 594 described above with reference to FIG. 5D.

According to an embodiment, the data or message exchange between the first external electronic device and the second external electronic device may be performed through a wireless link (e.g. a third wireless link) established between the first external electronic device and the second external electronic device.

In operation 752, the first external electronic device may transmit a request message that requests transmission of a confirmation message regarding a time point at which the second external electronic device receives an audio output resumption command from an electronic device (e.g., the electronic device 101 in FIG. 1, the electronic device 300 in FIG. 3, or the electronic device 410 in FIG. 4) to the second external electronic device through a communication module. The confirmation message may be, for example, an ACK to be transmitted to the electronic device when the second external electronic device receives the audio output resumption command from the electronic device.

According to an embodiment, when receiving the audio output resumption command from the electronic device, the second external electronic device may transmit the confirmation message to the first external electronic device through a communication module.

In operation 754, the first external electronic device may receive the confirmation message from the second external electronic device through the communication module.

In operation 756, the first external electronic device may identify an audio output resumption time point for resuming outputting audio of a first audio broadcast stream based on the confirmation message. A detailed description of identifying or synchronizing an audio output resumption time point may be replaced with the foregoing description of identifying or synchronizing an audio output start time point.

FIG. 8 is a flowchart illustrating a method of synchronizing an audio output start time point for starting outputting audio of a first audio broadcast stream based on packet information about packets of the first audio broadcast stream of a PA signal, which is performed by a first external electronic device, according to an embodiment.

According to an embodiment, an audio output device (e.g., the electronic device 102 or the electronic device 104 in FIG. 1, the audio output device 304 or 309 in FIG. 3, or the audio output device 415 in FIG. 4) may include a first external electronic device (e.g., the first external electronic device 306a or 309a in FIG. 3 or the first external electronic device 421 in FIG. 4) and a second external electronic device (e.g., the second external electronic device 306b or 309b in FIG. 3 or the second external electronic device 423 in FIG. 4). The first external electronic device and the second external electronic device may operate as at least one group or set.

According to an embodiment, operations 810 and 820 described below may be performed by the first external electronic device (or the second external electronic device). Operations 810 and 820 may be related to operation 730 described above with reference to FIG. 7A.

According to an embodiment, the data or message exchange between the first external electronic device and the second external electronic device may be performed through a wireless link (e.g. a third wireless link) established between the first external electronic device and the second external electronic device.

In operation 810, a processor of the first external electronic device may identify an audio output start time point based on packet information about packets of a first audio broadcast stream included in a PA signal received from a first audio source device (e.g., the audio source device 310 or 320 in FIG. 3). For example, the PA signal may include the packet information indicating identifiers of the packets of the first audio broadcast stream broadcast after the PA signal.

According to an embodiment, the first external electronic device may determine a packet having a target output time among times at which the packets of the first audio broadcast stream are output, based on a time at which the first external electronic device receives a confirmation message from the second external electronic device. For example, a time after a target time (e.g., a time within 1 second) from the time at which the confirmation message is received may be determined as an audio output start time, and a target packet with the audio output start time may be determined. The target time may be a time offset.

According to an embodiment, a target time may be determined by the first external electronic device based on the number of subevents (NSE), the number of BISs, a burst number (BN), or an immediate repetition count (IRC) of the first audio broadcast stream.

According to an embodiment, the target time may be determined by the first external electronic device based on the quality of a wireless communication environment between the first external electronic device and the second external electronic device.

According to an embodiment, the target time may be determined in advance.

In operation 820, the processor of the first external electronic device may transmit information about the identified audio output start time point to the second external electronic device through the communication module. For example, the information about the audio output start time point may include an identifier of the target packet with the target output time. The first external electronic device and the second external electronic device may each start outputting audio by performing rendering starting from the target packet.

A method of identifying or synchronizing an "audio output start time point" between the first external electronic device and the second external electronic device, which is described above regarding operations 810 and 820 in FIG. 8, may be performed similarly as described above about the method of identifying or synchronizing an "audio output stop time point" between the first external electronic device and the second external electronic device and the method of identifying or synchronizing an "audio output resumption time point" between the first external electronic device and the second external electronic device.

FIG. 9 is a flowchart illustrating a method of synchronizing an audio output start time point for starting outputting audio of a first audio broadcast stream based on a time offset, which is performed by a first external electronic device, according to an embodiment.

According to an embodiment, an audio output device (e.g., the electronic device 102 or the electronic device 104 in FIG. 1, the audio output device 304 or 309 in FIG. 3, or the audio output device 415 in FIG. 4) may include a first external electronic device (e.g., the first external electronic device 306a or 309a in FIG. 3 or the first external electronic device 421 in FIG. 4) and a second external electronic device (e.g., the second external electronic device 306b or 309b in FIG. 3 or the second external electronic device 423 in FIG. 4). The first external electronic device and the second external electronic device may operate as at least one group or set.

According to an embodiment, operations 910 and 920 described below may be performed by the first external electronic device (or the second external electronic device). Operations 910 and 920 may be related to operation 730 described above with reference to FIG. 7A.

According to an embodiment, the data or message exchange between the first external electronic device and the second external electronic device may be performed through a wireless link (e.g. a third wireless link) established between the first external electronic device and the second external electronic device.

In operation 910, a processor of the first external electronic device may identify an audio output start time point based on a signal transmitted and received with an electronic device (e.g., the electronic device 101 in FIG. 1, the electronic device 300 in FIG. 3, or the electronic device 410 in FIG. 4), the second external electronic device, or a first audio source device (e.g., the audio source device 310 or 320 in FIG. 3).

According to an embodiment, the first external electronic device may determine the audio output start time point based on a source addition command received from the electronic device. For example, the first external electronic device may determine a target time for the audio output start time point based on a received signal strength indicator (RSSI) value of the source addition command. For example, the first external electronic device may determine at least one of a distance or direction from the electronic device based on the source addition command and may determine the target time for the audio output start time point based on the determined at least one of the distance or direction.

According to an embodiment, the first external electronic device may determine the audio output start time point based on a confirmation message received from the second external electronic device. For example, the first external electronic device may determine the target time for the audio output start time point based on an RSSI value of the confirmation message. For example, the first external electronic device may determine at least one of a distance or direction from the second external electronic device based on the confirmation message and may determine the target time for the audio output start time point based on the determined at least one of the distance or direction.

According to an embodiment, the first external electronic device may determine the audio output start time point based on a PA signal received from the first audio source. For example, the first external electronic device may determine the target time for the audio output start time point based on an RSSI value of the PA signal. For example, the first external electronic device may determine at least one of a distance or direction from the first audio source device based on the PA signal and may determine the target time for the audio output start time point based on the determined at least one of the distance or direction.

According to an embodiment, the first external electronic device may determine the target time for the audio output start time point based on at least one of the source addition command, the confirmation message, or the PA signal.

According to an embodiment, the processor of the first external electronic device may determine the audio output start time point based on a time at which the confirmation message is received from the second external electronic device. For example, a time after the target time (e.g., a time within 1 second) from the time at which the confirmation message is received may be determined as the audio output start time point.

In operation 920, the processor of the first external electronic device of the audio output device may transmit information about the identified audio output start time point to the second external electronic device through the communication module. For example, the information about the audio output start time point may include a time corresponding to the audio output start time point. The first external electronic device and the second external electronic device may each start outputting audio by performing rendering starting from a packet corresponding to the audio output start time point.

FIG. 10 is a diagram illustrating a cradle device that establishes wireless links with an electronic device and an audio output device, respectively, according to an embodiment.

According to an embodiment, an audio output device 1015 (e.g., the electronic device 102 or the electronic device 104 in FIG. 1, the audio output device 304 or 309 in FIG. 3, or the audio output device 415 in FIG. 4) may include a first external electronic device 1022 (e.g., the first external electronic device 306a or 309a in FIG. 3 or the first external electronic device 421 in FIG. 4), a second external electronic device 1024 (e.g., the second external electronic device 306b or 309b in FIG. 3 or the second external electronic device 423 in FIG. 4), and a cradle device 1025 (e.g., the cradle device 308 in FIG. 3 or the cradle device 425 in FIG. 4). The cradle device 1025 may include a processor, a communication module, a display module, a memory, a sound output module, a sensor unit, and a battery. A description of the processor, the communication module, the display module, the memory, the sound output module, the sensor unit, and the battery of the cradle device 1025 may be replaced with the foregoing description of the processor 120, the communication module 190, the display module 160, the memory 130, the sound output module 155, the sensor module 176, and the battery 189 provided with reference to FIG. 1. When the first external electronic device 1022 and the second external electronic device 1024 are received in the cradle device 1025, batteries of the first external electronic device 1022 and the second external electronic device 1024 may be charged by the battery of the cradle device 1025.

According to an embodiment, a wireless link may be established between an electronic device 1010 (e.g., the electronic device 101 in FIG. 1, the electronic device 300 in FIG. 3, or the electronic device 410 in FIG. 4) and the cradle device 1025. A wireless link may be established between the cradle device 1025 and the first external electronic device 1022, and a wireless link may be established between the cradle device 1025 and the second external electronic device 1024. The cradle device 1025 may receive a source addition command from the electronic device 1010 through the wireless link. The cradle device 1025 may transmit the source addition command received from the electronic device 1010 to the first external electronic device 1022 and the second external electronic device 1024 through the respective wireless links. Data for synchronizing an audio output start time point may be exchanged through a wireless link established between the first external electronic device 1022 and the second external electronic device 1024. A method of synchronizing an audio output start time point between the first external electronic device 1022 and the second external electronic device 1024 may be performed similarly as described above about the method of synchronizing an audio output start time point with reference to FIGS. 7A to 7F, 8, and 9.

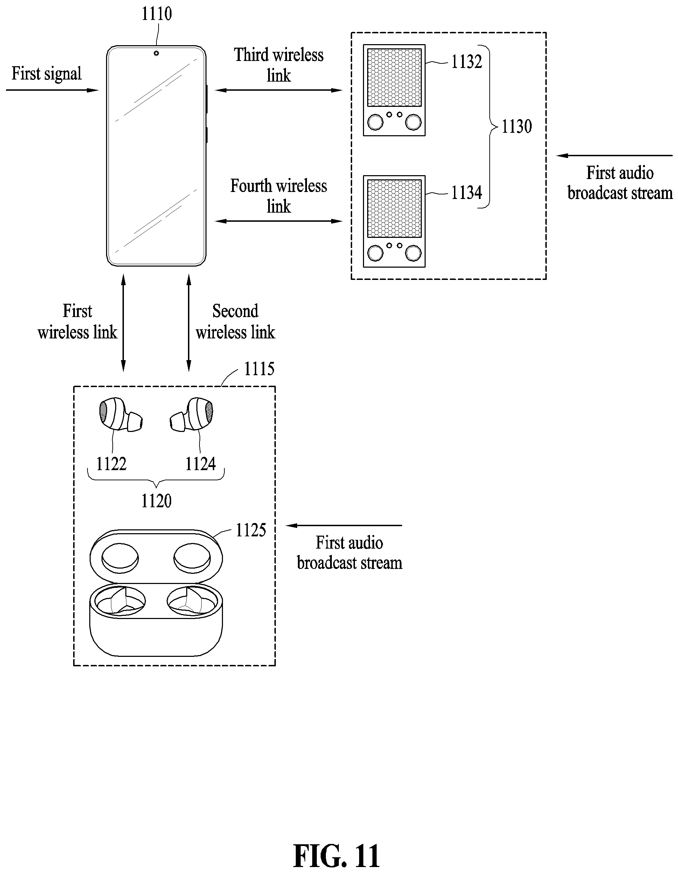

FIG. 11 is a diagram illustrating wireless links established between an electronic device and audio output devices that do not communicate with different audio output devices, according to an embodiment.

According to an embodiment, an audio output device 1115 or 1130 (e.g., the electronic device 102 or the electronic device 104 in FIG. 1, the audio output device 304 or 309 in FIG. 3, the audio output device 415 in FIG. 4, or the audio output device 1015 in FIG. 10) may include a first external electronic device 1122 or 1132 (e.g., the first external electronic device 306a or 309a in FIG. 3, the first external electronic device 421 in FIG. 4, or the first external electronic device 1022 in FIG. 10) and a second external electronic device 1124 or 1134 (e.g., the second external electronic device 306b or 309b in FIG. 3, the first external electronic device 423 in FIG. 4, or the second external electronic device 1024 in FIG. 10).

The audio output device 1115 may include external electronic devices 1120. For example, of the external electronic devices 1120, the first external electronic device 1122 may be a device worn on a left (or right) ear of a user, and the second external electronic device 1124 may be a device worn on a right (or left) ear of the user. The audio output device 1115 may further include a cradle device 1125 (e.g., the cradle device 308 in FIG. 3, the cradle device 425 in FIG. 4, or the cradle device 1025 in FIG. 10).

For example, the first external electronic device 1132 and the second external electronic device 1134 of the audio output device 1130 may be speakers for a stereo sound.

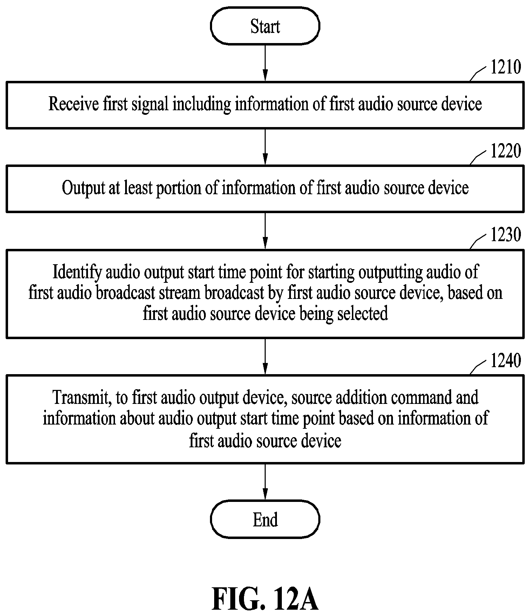

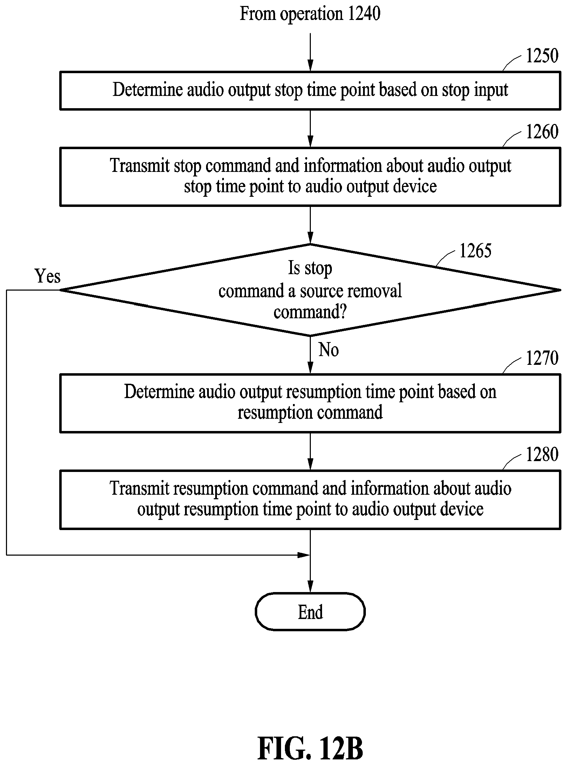

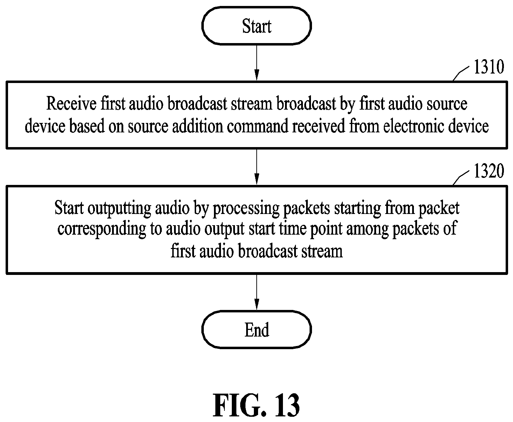

According to an embodiment, when the external electronic devices 1120 of the audio output device 1115 are activated, a first wireless link may be established between an electronic device 1110 (e.g., the electronic device 101 in FIG. 1, the electronic device 300 in FIG. 3, the electronic device 410 in FIG. 4, or the electronic device 1010 in FIG. 10) and the first external electronic device 1122, and a second wireless link may be established between the electronic device 1110 and the second external electronic device 1124. When the audio output device 1130 is activated, a third wireless link may be established between the electronic device 1110 and the first external electronic device 1132, and a fourth wireless link may be established between the electronic device 1110 and the second external electronic device 1134. For example, a wireless link may not be established among the first external electronic device 1122, the second external electronic device 1124, the first external electronic device 1132, and the second external electronic device 1134. In this case, there is no wireless link among the first external electronic device 1122, the second external electronic device 1124, the first external electronic device 1132, and the second external electronic device 1134, and thus a method in which the electronic device 1110 identifies an audio output start time point and transmits the identified audio output start time point to the first external electronic device 1122, the second external electronic device 1124, and the first external electronic device 1132, and the second external electronic device 1134 may be considered to synchronize an audio output start time point therebetween. Hereinafter, the method of identifying the audio output start time point by the electronic device 1100 will be described in detail with reference to FIGS. 12A, 12B, and 13.

FIG. 12A is a flowchart illustrating an audio output method through synchronization of an audio output start time point between audio output devices, which is performed by an electronic device, according to an embodiment.

Operations 1210 to 1240 described below may be performed by an electronic device (e.g., the electronic device 101 in FIG. 1, the electronic device 300 in FIG. 3, the electronic device 410 in FIG. 4, the electronic device 1010 in FIG. 10, or the electronic device 1110 in FIG. 11). For example, the electronic device may include a processor (e.g., the processor 120 in FIG. 1), a communication module (e.g., the communication module 190 in FIG. 1), a memory (e.g., the memory 130 in FIG. 1), and a display (e.g., the display module 160 in FIG. 1).

In operation 1210, the processor of the electronic device may receive a first signal including information of a first audio source device (e.g., the audio source device 310 or 320 in FIG. 3) through the communication module. A detailed description of operation 1210 may be replaced with the foregoing description of operation 510 provided with reference to FIG. 5A.

In operation 1220, the processor of the electronic device may output at least a portion of the information of the first audio source device. A detailed description of operation 1220 may be replaced with the foregoing description of operation 520 provided with reference to FIG. 5A.

In operation 1230, the processor of the electronic device may identify an audio output start time point for starting outputting audio of a first audio broadcast stream broadcast by the first audio source device based on the first audio source device being selected.

According to an embodiment, the processor of the electronic device may determine the audio output start time point for starting outputting audio of the first audio broadcast stream based on packet information about packets of the first audio broadcast stream obtained based on the first signal. For example, when the first signal is an EA signal, the packet information about the packets of the first audio broadcast stream may be included in a PA signal corresponding to the EA signal. For example, when the first signal is a PA signal, the packet information about the packets of the first audio broadcast stream may be included in the PA signal.

The processor of the electronic device may determine one of packet numbers included in the packet information as the audio output start time point for starting outputting audio of the first audio broadcast stream. The processor of the electronic device may determine a packet having a target output time among times at which the packets of the first audio broadcast stream are output, based on a time at which the PA signal is received. For example, a time after a target time (e.g., a time within 1 second) from the time at which the PA signal is received may be determined as an output time, and a target packet with the corresponding output time may be determined.

The target time used to determine the audio output start time point may be a time offset. According to an embodiment, the target time may be determined by the processor of the electronic device based on an NSE, the number of BISs, BN, or IRC of the first audio broadcast stream. According to an embodiment, the target time may be determined by the electronic device based on the quality of a wireless communication environment between the electronic device and an audio output device. According to an embodiment, the target time may be determined in advance.

In operation 1240, the processor of the electronic device may transmit, to a first audio output device, a source addition command based on the information of the first audio source device and information about the audio output start time point for starting outputting audio of the first audio broadcast stream.

According to an embodiment, in a case in which the first audio output device includes a first external electronic device (e.g., the first external electronic device 306a or 309a in FIG. 3, the first external electronic device 421 in FIG. 4, the first external electronic device 1022 in FIG. 10, or the first external electronic device 1132 in FIG. 11) and a second external electronic device (e.g., the second external electronic device 306b or 309b in FIG. 3, the second external electronic device 423 in FIG. 4, the second external electronic device 1024 in FIG. 10, or the second external electronic device 1134 in FIG. 11), a first wireless link may be established between the electronic device and the first external electronic device, and a second wireless link may be established between the electronic device and the second external electronic device. The processor of the electronic device may transmit the source addition command and the information about the audio output start time point to the first external electronic device through the first wireless link, and may transmit the source addition command and the information about the audio output start time point to the second external electronic device through the second wireless link.

Operations to be performed by the audio output device after operation 1230 is performed will be described in detail below with reference to FIG. 13.

According to an embodiment, although it has been described above that the electronic device identifies the audio output start time point for starting outputting audio of the first audio broadcast stream in operation 1230 and then transmits the source addition command and the information about the audio output start time point to the first audio output device in operation 1240, the order of transmitting the source addition information and the information about the audio output start time point to the first audio output device may vary. For example, after performing operation 1220, the electronic device may transmit the source addition command that is based on the information about the first audio source device to the first external electronic device and the second external electronic device, respectively, and may then identify the audio output start time point for starting outputting audio of the first audio broadcast stream based on a reception time at which a confirmation message regarding the source addition command is received from each of the first external electronic device and the second external electronic device and may transmit the identified audio output start time point to the first external electronic device and the second external electronic device, respectively.

FIG. 12B is a flowchart illustrating an audio output stop method and an audio output resumption method performed by an electronic device, according to an embodiment.

Operations 1250 and 1260 described below may be performed by an electronic device (e.g., the electronic device 101 in FIG. 1, the electronic device 300 in FIG. 3, the electronic device 410 in FIG. 4, the electronic device 1010 in FIG. 10, or the electronic device 1110 in FIG. 11). According to an embodiment, operation 1250 may be performed after operation 1240 described above with reference to FIG. 12Ais performed.

In operation 1250, a processor of the electronic device may determine an audio output stop time point based on a stop input for stopping audio output. For example, the electronic device may receive, as the stop input, an input for pausing audio output from a user through UI or UX. For example, the electronic device may receive a phone call as the stop input. For example, the electronic device may receive, as the stop input, an input for deleting or removing information of an audio source device (e.g., the audio source device 310 or 320 in FIG. 3) that broadcasts an audio broadcast stream to be received by an audio output device (e.g., the electronic device 102 or 104 in FIG. 1, the audio output device 304 or 309 in FIG. 3, the audio output device in FIG. 4, the audio output device 1015 in FIG. 10, or the audio output device 1115 or 1130 in FIG. 11), from the user through the UI or UX.

A method of determining the audio output stop time point may be performed similarly as described above about the method of determining an audio output start time point in operation 1230 with reference to FIG. 12A. For example, the processor of the electronic device may determine one of packet numbers included in packet information as the audio output stop time point. The processor of the electronic device may determine a packet having a target output stop time among times at which packets of the first audio broadcast stream are output based on a time at which a PA signal is received.

In operation 1260, the processor of the electronic device may transmit a stop command and information about the audio output stop time point to the audio output device. For example, the processor of the electronic device may transmit the information about the audio output stop time point to the first external electronic device 1122 of the audio output device 1115 through a first wireless link and transmit the information about the audio output stop time point to the second external electronic device 1124 of the audio output device 1115 through a second wireless link. The processor of the electronic device may transmit the information about the audio output stop time point to the first external electronic device 1132 of the audio output device 1130 through a third wireless link and transmit the information about the audio output stop time point to the second external electronic device 1134 of the audio output device 1130 through a fourth wireless link.

The audio output device may stop audio output by stopping processing of the first audio broadcast stream from the audio output stop time point. For example, each of the first external electronic device and the second external electronic device may stop audio output by stopping processing the first audio broadcast stream from the audio output stop time point.

For example, the audio output device may stop audio output by not processing subsequent packet of a packet corresponding to the audio output stop time point among the packets of the first audio broadcast stream.

According to an embodiment, in operation 1265, whether the stop command is a source removal command may be determined. When the stop command is not the source removal command, operations 1270 and 1280 may be performed. For example, when the stop command is a source modification command, operations 1270 and 1280 may be performed.

According to an embodiment, in operation 1265, whether the stop command is the source modification command may be determined. When the stop command is the source modification command, operations 1270 and 1280 may be performed.

According to an embodiment, operations 1270 and 1280 may be performed while the audio output device is pausing audio output.

In operation 1270, the electronic device may determine an audio output resumption time point based on a resumption input for resuming audio output. For example, the electronic device may receive, as the resumption input, an input for resuming audio output from a user through UI or UX. For example, the electronic device may receive the ending of a call as the resumption input.

A method of determining the audio output resumption time point may be performed similarly as described above about the method of determining an audio output start time point in operation 1230 with reference to FIG. 12A. For example, the processor of the electronic device may determine one of packet numbers included in packet information as the audio output resumption time point. The processor of the electronic device may determine a packet having a target output resumption time among times at which the packets of the first audio broadcast stream are output based on a time at which a PA signal is received.

In operation 1260, the processor of the electronic device may transmit a resumption command and information about the audio output resumption time point to the audio output device. For example, the processor of the electronic device may transmit the information about the audio output resumption time point to the first external electronic device 1122 of the audio output device 1115 through a first wireless link and transmit the information about the audio output resumption time point to the second external electronic device 1124 of the audio output device 1115 through a second wireless link. The processor of the electronic device may transmit the information about the audio output resumption time point to the first external electronic device 1132 of the audio output device 1130 through a third wireless link and transmit the information about the audio output resumption time point to the second external electronic device 1134 of the audio output device 1130 through a fourth wireless link.

The audio output device may resume audio output by resuming processing of the first audio broadcast stream from the audio output resumption time point. For example, each of the first external electronic device and the second external electronic device may resume audio output by resuming the processing of the first audio broadcast stream from the audio output resumption time point.

For example, the audio output device may resume audio output by processing subsequent packets of a packet corresponding to the audio output resumption time point among the packets of the first audio broadcast stream.

FIG. 13 is a flowchart illustrating an audio output method through synchronization of an audio output start time point between different audio output devices, which is performed by an audio output device, according to an embodiment.

According to an embodiment, an audio output device (e.g., the electronic device 102 or 104 in FIG. 1, the audio output device 304 or 309 in FIG. 3, the audio output device 415 in FIG. 4, the audio output device 1015 in FIG. 10, or the audio output device 1115 or 1130 in FIG. 11) may include a first external electronic device (e.g., the first external electronic device 1122 or the first external electronic device 1132 in FIG. 11) and a second external electronic device (e.g., the second external electronic device 1124 or the second external electronic device 1134 in FIG. 11). Operations 1310 and 1320 described below may be performed by the first external electronic device (or second external electronic device) of the audio output device. For example, the first external electronic device may include a processor, a communication module, a memory, a sound output module, a sensor unit, and a battery. A description of the processor, the communication module, the memory, the sound output module, the sensor unit, and the battery of the audio output device may be replaced with the foregoing description of the processor 120, the communication module 190, the memory 130, the sound output module 155, the sensor module 176, and the battery 189 provided with reference to FIG. 1.

Operation 1310 may be performed after operation 1240 described above with reference to FIG. 12A is performed.

In operation 1310, the processor of the first external electronic device may receive a first audio broadcast stream that is broadcasted by a first audio source device (e.g., the audio source device 310 or 320 in FIG. 3) based on a source addition command received from an electronic device (e.g., the electronic device 101 in FIG. 1, the electronic device 300 in FIG. 3, the electronic device 410 in FIG. 4, the electronic device 1010 in FIG. 10, or the electronic device 1110 in FIG. 11), through the communication module.

According to an embodiment, the processor of the first external electronic device may not perform packet processing (e.g., rendering processing) for outputting first audio even when it receives the first audio broadcast stream. In this case, unprocessed packets may be discarded.

In operation 1320, the processor of the first external electronic device may start outputting the first audio by processing a packet corresponding to an audio output start time point among packets of the first audio broadcast stream. For example, the first external electronic device and the second external electronic device may output the first audio and second audio, respectively, by processing the packets of the first audio broadcast stream from the audio output start time point.

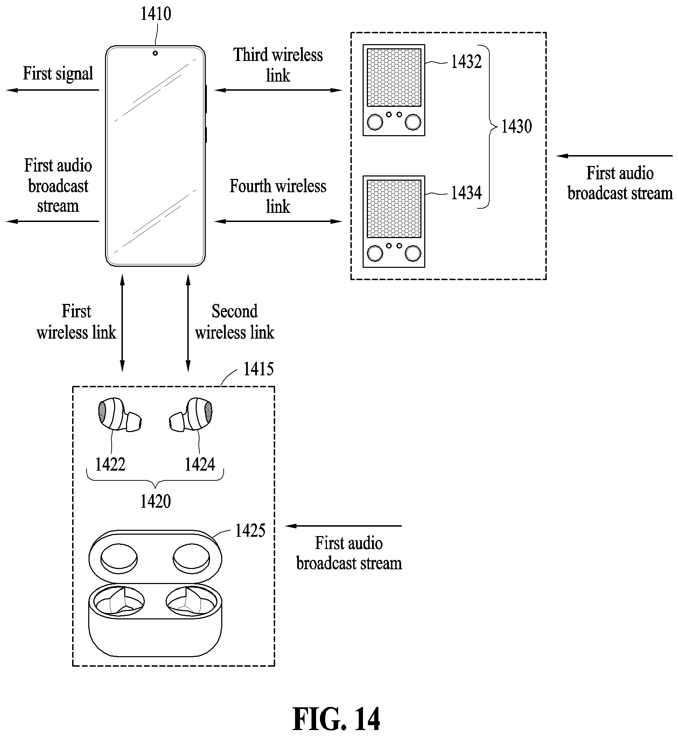

FIG. 14 is a diagram illustrating wireless links established between an audio output device and an electronic device broadcasting a first audio broadcast stream, according to an embodiment.

According to an embodiment, an electronic device 1410 (e.g., the electronic device 101 in FIG. 1, the electronic device 300 in FIG. 3, the electronic device 1010 in FIG. 10, or the electronic device 1110 in FIG. 11) may broadcast a first signal (e.g., an EA signal or a PA signal) and a first audio broadcast stream. For example, the electronic device 1410 may play a role of a source.

An audio output device 1415 or 1430 (e.g., the electronic device 102 or 104 in FIG. 1, the audio output device 304 or 309 in FIG. 3, the audio output device 415 in FIG. 4, the audio output device 1015 in FIG. 10, or the audio output device 1115 or 1130 in FIG. 11) may include a first external electronic device 1422 or 1432 and a second external electronic device 1424 or 1434. The audio output device 1415 may include external electronic devices 1420 and a cradle device 1425. A description of the audio output device 1415 or 1430 may be replaced with the foregoing description of the audio output device 1115 or 1130 provided with reference to FIG. 11.

According to an embodiment, when the external electronic devices 1420 of the audio output device 1415 are activated, a first wireless link may be established between the electronic device 1410 and the first external electronic device 1422, and a second wireless link may be established between the electronic device 1410 and the second external electronic device 1424. When the audio output device 1430 is activated, a third wireless link may be established between the electronic device 1410 and the first external electronic device 1432, and a fourth wireless link may be established between the electronic device 1410 and the second external electronic device 1434. For example, wireless links may be established among the first external electronic device 1422, the second external electronic device 1424, the first external electronic device 1432, and the second external electronic device 1434. To synchronize an audio output start time point even when there is a wireless link among the first external electronic device 1422, the second external electronic device 1424, the first external electronic device 1432, and the second external electronic device 1434, a method in which the electronic device 1410 identifies an audio output start time point and transmits the identified audio output start time point to the first external electronic device 1422, the second external electronic device 1424, the first external electronic device 1432, and the second external electronic device 1434 may be considered.

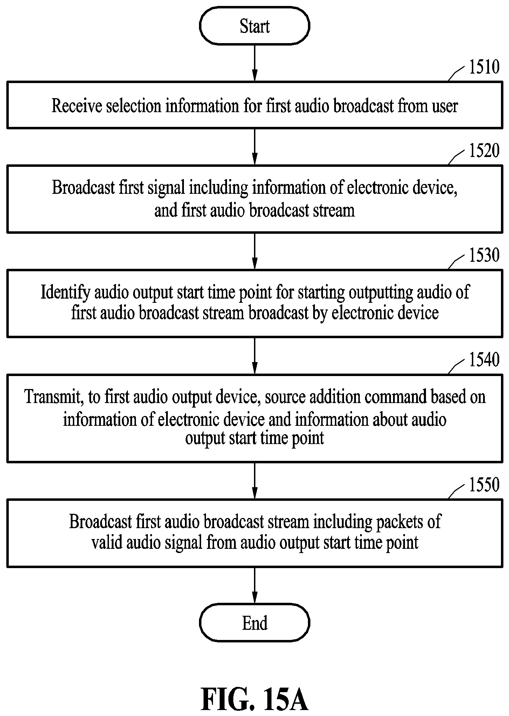

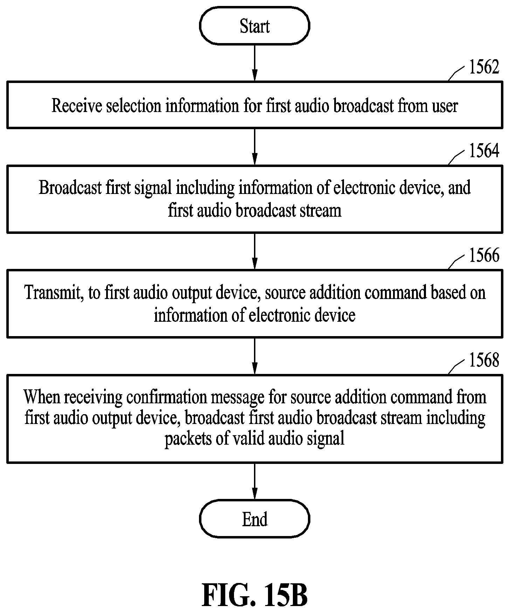

The method may also be considered even when no wireless link is established between the external electronic devices. The electronic device 1410, as an audio source device, may determine packets included in a first audio broadcast stream, and may thus generate and broadcast the first audio broadcast stream such that packets of a valid audio signal are included from the audio output start time point. Hereinafter, a method in which the electronic device 1410 identifies an audio output start time point and broadcasts a first audio broadcast stream based on the identified audio output start time point will be described in detail with reference to FIG. 15A. Hereinafter, a method in which, when receiving a confirmation message regarding a source addition command from a first audio output device, the electronic device 1410 broadcasts a first audio broadcast stream including packets of a valid audio signal will be described in detail with reference to FIG. 15B.

FIG. 15A is a flowchart illustrating a method of broadcasting a first audio broadcast stream including packets of a valid audio signal from an audio output start time point, which is performed by an electronic device, according to an embodiment.

Operations 1510 to 1550 described below may be performed by an electronic device (e.g., the electronic device 101 in FIG. 1, the electronic device 300 in FIG. 3, the electronic device 410 in FIG. 4, the electronic device 1010 in FIG. 10, the electronic device 1110 in FIG. 11, or the electronic device 1410 in FIG. 14). For example, the electronic device may include a processor (e.g., the processor 120 in FIG. 1), a communication module (e.g., the communication module 190 in FIG. 1), a memory (e.g., the memory 130 in FIG. 1), and a display (e.g., the display module 160 in FIG. 1). According to an embodiment, the electronic device may simultaneously perform the role of a source and the role of an assistant in operations 1510 to 1550.

In operation 1510, the processor of the electronic device may receive selection information for a first audio broadcast from a user through UI or UX. The user may select a sound source to be broadcast through the electronic device. For example, the sound source may be a recorded voice. For example, the sound source may be streaming data to be received by the electronic device through a wireless network. For example, the user may select the sound source to be broadcast using an application installed on the electronic device.

In operation 1520, the processor of the electronic device may broadcast a first signal including information of the electronic device and a first audio broadcast stream through the communication module. For example, the information of the electronic device may include at least one of identification information of the electronic device, account information, address information, clock information, timing information, transmission power information, audio channel map information, or information about the first audio broadcast. The first signal may be an EA signal or a PA signal.

According to an embodiment, the processor of the electronic device may generate the first audio broadcast stream such that it includes null data. For example, a packet for sound source data included in the first audio broadcast stream may be the null data. For example, before a first audio output device is ready to receive a packet of the first audio broadcast stream, the electronic device may broadcast a null packet including the null data, rather than a valid packet, such that the first audio output device, which is to receive the first audio broadcast stream broadcast from the electronic device, receives all valid packets of the first audio broadcast stream. For example, the valid packet may be data of the selected sound source.

In operation 1530, the processor of the electronic device may identify an audio output start time point for starting outputting audio of the first audio broadcast stream. For example, the audio output start time point for starting outputting audio of the first audio broadcast stream may be a point in time at which audio starts being output using the first audio broadcast stream by a first audio output device (e.g., the electronic device 102 or 104 in FIG. 1, the first audio output device 304 in FIG. 3, the audio output device 415 in FIG. 4, the audio output device 1015 in FIG. 10, or the audio output device 1115 or 1130 in FIG. 11) connected to the electronic device through a wireless link.

According to an embodiment, the processor of the electronic device may determine one of packet numbers included in the first audio broadcast stream as the audio output start time point of the first audio broadcast stream. For example, a time after a target time (e.g., a time within 1 second) from a time at which the selection information for the first audio broadcast is received may be determined as the audio output start time point, and a target packet with the corresponding output time may be determined from among the packets of the first audio broadcast stream.

The target time used to determine the audio output start time point may be a time offset. According to an embodiment, the target time may be determined by the processor of the electronic device based on an NSE, the number of BISs, BN, or IRC of the first audio broadcast stream. According to an embodiment, the target time may be determined by the electronic device based on the quality of a wireless communication environment between the electronic device and the first audio output device. According to an embodiment, the target time may be determined in advance.

In operation 1540, the processor of the electronic device may transmit a source addition command that is based on the information about the electronic device and information about the audio output start time point to the first audio output device through the communication module. For example, the electronic device may transmit the source addition command and the information about the audio output start time point to audio output devices connected to the electronic device through a wireless link.

According to an embodiment, the target time may be a time that is sufficient for the first audio output device that has received the source addition command to be synchronized with the first audio broadcast stream broadcast by the electronic device before the audio output start time point based on the source addition command. For example, when the first audio output device receives the first audio broadcast stream before a first time point for starting outputting audio, the first audio output device may receive a null packet including null data. For example, the first audio output device may output audio by processing the null packet. In this case, audio based on the null packet may be silent. For example, the first audio output device may discard the null packet without processing it.

In operation 1550, the processor of the electronic device may broadcast the first audio broadcast stream including packets of a valid audio signal from the determined audio output start time point.

According to an embodiment, the electronic device may generate the first audio broadcast stream such that first data of sound source data is included in a target packet corresponding to the audio output start time point. For example, among the packets of the first audio broadcast stream, packets that precede the target packet may be null packets, and packets that follow the target packet may be valid packets including the sound source data.

According to an embodiment, the first audio output device may receive the first audio broadcast stream based on the source addition command, and may perform packet processing (e.g., rendering processing) for audio output starting from the target packet corresponding to the audio output start time point among the packets of the received first audio broadcast stream. The first audio output device may discard packets that precede the target packet without processing them. For example, when the first audio output device includes a first external electronic device (e.g., the first external electronic device 306a or 309a in FIG. 3, the first external electronic device 421 in FIG. 4, the first external electronic device 1022 in FIG. 10, the first external electronic device 1122 or 1132 in FIG. 11, or the first external electronic device 1142 or 1432 in FIG. 14) and a second external electronic device (e.g., the second external electronic device 306b or 309b in FIG. 3, the second external electronic device 423 in FIG. 4, the second external electronic device 1024 in FIG. 10, the second external electronic device 1124 or 1134 in FIG. 11, or the second external electronic device 1424 or 1434 in FIG. 14), the first external electronic device may process packets starting from a packet corresponding to the audio output start time point among packets of a first sub-audio broadcast stream of the first audio broadcast stream to output first audio, and the second external electronic device may process packets starting from a packet corresponding to the audio output start time point among packets of a second sub-audio broadcast stream of the first audio broadcast stream to output second audio. As the first audio and the second audio are output simultaneously, a user may hear a normal stereo sound of the selected sound source.

FIG. 15B is a flowchart illustrating a method of broadcasting a first audio broadcast stream including packets of a valid audio signal when a confirmation message for a command is received from a first audio output device, which is performed by an electronic device, according to an embodiment.

Operations 1562 to 1568 described below may be performed by an electronic device (e.g., the electronic device 101 in FIG. 1, the electronic device 300 in FIG. 3, the electronic device 410 in FIG. 4, the electronic device 1010 in FIG. 10, the electronic device 1110 in FIG. 11, or the electronic device 1410 in FIG. 14). For example, the electronic device may include a processor (e.g., the processor 120 in FIG. 1), a communication module (e.g., the communication module 190 in FIG. 1), a memory (e.g., the memory 130 in FIG. 1), and a display (e.g., the display module 160 in FIG. 1). According to an embodiment, the electronic device may simultaneously perform the role of a source and the role of an assistant in operations 1562 to 1568.

In operation 1562, the processor of the electronic device may receive selection information for a first audio broadcast from a user through UI or UX. A description of operation 1562 may be replaced with the foregoing description of operation 1510 provided with reference to FIG. 15A.

In operation 1564, the processor of the electronic device may broadcast a first signal including information about the electronic device, and a first audio broadcast stream through the communication module. According to an embodiment, the processor of the electronic device may generate the first audio broadcast stream such that it includes null data. For example, a packet for sound source data included in the first audio broadcast stream may be the null data. A description of operation 1564 may be replaced with the foregoing description of operation 1520 provided with reference to FIG. 15A.

In operation 1566, the processor of the electronic device may transmit a source addition command based on the information of the electronic device to a first audio output device through the communication module. For example, the electronic device may transmit the source addition command to audio output devices connected to the electronic device through a wireless link.

The first audio output device receiving the source addition command from the electronic device may transmit a confirmation message corresponding to the source addition command to the electronic device. The electronic device may receive the first audio broadcast stream based on the source addition command.

In operation 1568, when receiving the confirmation message for the source addition command from the first audio output device, the processor of the electronic device may broadcast the first audio broadcast stream including packets of a valid audio signal through the communication module. For example, in a case in which there is a plurality of first audio output devices connected to the electronic device through a wireless link, when receiving all confirmation messages from the plurality of first audio output devices, the electronic device may broadcast the first audio broadcast stream including the packets of the valid audio signal through the communication module.

As the electronic device broadcasts the first audio broadcast stream including the packets of the valid audio signal while all the first audio output devices are normally receiving the first audio broadcast stream, the plurality of first audio output devices may output valid audio simultaneously.

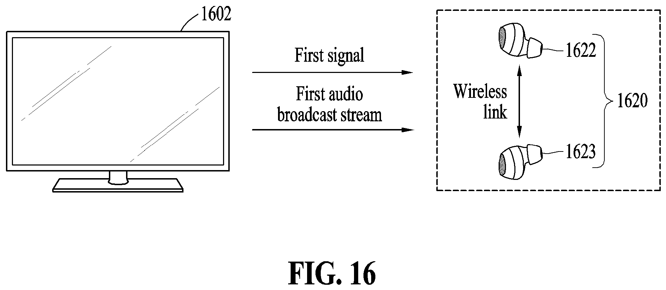

FIG. 16 is a diagram illustrating an audio output device in which a wireless link is established between a first external electronic device and a second external electronic device included in the audio output device, according to an embodiment.

According to an embodiment, an audio output device 1620 (e.g., the electronic device 102 or 104 in FIG. 1, the audio output device 304 or 309 in FIG. 3, the audio output device 415 in FIG. 4, the audio output device 1015 in FIG. 10, the audio output device 1115 or 1130 in FIG. 11, or the audio output device 1415 or 1430 in FIG. 14) may include a first external electronic device 1622 (e.g., the first external electronic device 306a or 309a in FIG. 3, the first external electronic device 421 in FIG. 4, the first external electronic device 1022 in FIG. 10, the first external electronic device 1122 or 1132 in FIG. 11, or the first external electronic device 1422 or 1432 in FIG. 14) and a second external electronic device (e.g., the second external electronic device 306b or 309b in FIG. 3, the second external electronic device 423 in FIG. 4, the second external electronic device 1024 in FIG. 10, the second external electronic device 1124 or 1134 in FIG. 11, or the second external electronic device 1424 or 1434 in FIG. 14). For example, the first external electronic device 1622 may be a device worn on a left (or right) ear of a user, and the second external electronic device 1624 may be a device worn on a right (or left) ear of the user. For example, a wireless link (e.g., a third wireless link in FIG. 4) for exchanging data may be established between the first external electronic device 1622 and the second external electronic device 1624.

According to an embodiment, an audio source device 1602 (e.g., the audio source device 310 or 320 in FIG. 3) may broadcast an audio broadcast stream. For example, the audio output device 1620 may detect information of the audio source device 1602 through scanning and receive the audio broadcast stream from the audio source device 1602 based on the detected information.

According to an embodiment, when the audio source device 1602 is detected, the user of the audio output device 1620 may select the audio source device 1602. When the audio source device 1602 is selected, the first external electronic device 1622 and the second external electronic device 1624 of the audio output device 1620 may receive the audio broadcast stream from the audio source device 1602, perform synchronization of an audio output start time point, and output audio from the audio output start time point.

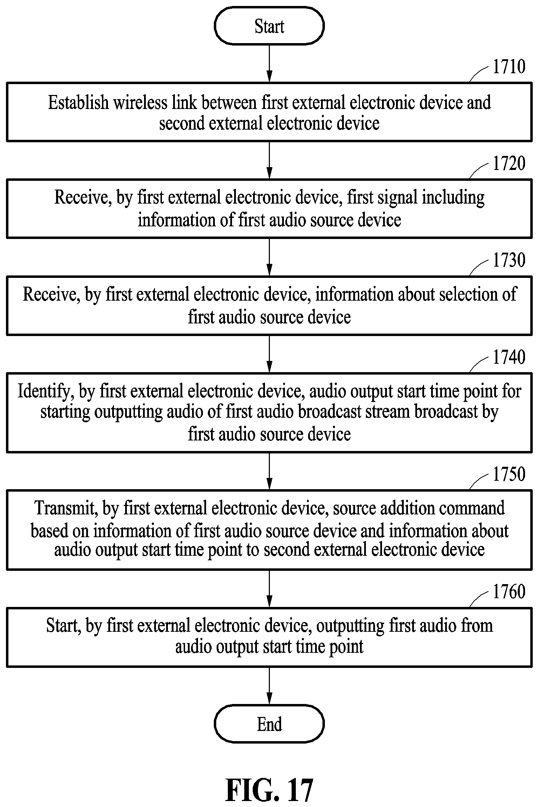

Hereinafter, a method of synchronizing an audio output start time point through a wireless link established between the first external electronic device 1622 and the second external electronic device 1624 will be described in detail with reference to FIG. 17.

FIG. 17 is a flowchart illustrating an audio output method performed based on a first audio broadcast stream by a first external electronic device, according to an embodiment.

Operations 1710 to 1760 described below may be performed by a first audio output device (e.g., the electronic device 102 or 104 in FIG. 1, the audio output device 304 or 309 in FIG. 3, the audio output device 415 in FIG. 4, the audio output device 1015 in FIG. 10, the audio output device 1115 or 1130 in FIG. 11, the audio output device 1415 or 1430 in FIG. 14, or the audio output device 1620 in FIG. 16). The first audio output device may include a first external electronic device (e.g., the first external electronic device 306a or 309a in FIG. 3, the first external electronic device 421 in FIG. 4, the first external electronic device 1022 in FIG. 10, the first external electronic device 1122 or 1132 in FIG. 11, the first external electronic device 1422 or 1432 in FIG. 14, or the first external electronic device 1622 in FIG. 16) and a second external electronic device (e.g., the second external electronic device 306b or 309b in FIG. 3, the second external electronic device 423 in FIG. 4, the second external electronic device 1024 in FIG. 10, the second external electronic device 1124 or 1134 in FIG. 11, the second external electronic device 1424 or 1434 in FIG. 14, or the second external electronic device 1624 in FIG. 16). For example, each of the first external electronic device and the second external electronic device of the audio output device may include a processor, a communication module, a memory, a sound output module, a sensor unit, and a battery. A description of the processor, the communication module, the memory, the sound output module, the sensor unit, and the battery of each of the first external electronic device and the second external electronic device of the audio output device may be replaced with the foregoing description of the processor 120, the communication module 190, the memory 130, the sound output module 155, the sensor module 176, and the battery 189 provided with reference to FIG. 1.

In operation 1710, the processor of the first external electronic device may establish a wireless link with the second external electronic device through the communication module. For example, when the first external electronic device and the second external electronic device are separated from a cradle device (e.g., the cradle device 308 in FIG. 3, the cradle device 425 in FIG. 4, the cradle device 1025 in FIG. 10, the cradle device 1125 in FIG. 11, or the cradle device 1425 in FIG. 14), a wireless link may be established between the first external electronic device and the second external electronic device.

In operation 1720, the processor of the first external electronic device may receive a first signal including information of a first audio source device (e.g., the audio source device 310 or 320 in FIG. 3 or the first audio source device 1602 in FIG. 16) through the communication module. For example, the first external electronic device may receive the first signal broadcast by the first audio source device through scanning. The first signal may be an EA signal or a PA signal.

According to an embodiment, when a scanning function is activated, the first external electronic device may periodically perform scanning. For example, the scanning function of the first external electronic device may be activated when the first external electronic device is not connected to an electronic device (e.g., the electronic device 101 in FIG. 1, the electronic device 300 in FIG. 3, the electronic device 410 in FIG. 4, the electronic device 1010 in FIG. 10, the electronic device 1110 in FIG. 11, or the electronic device 1410 in FIG. 14). For example, the scanning function of the first external electronic device may be performed when a scan request is received from a user. The user may transmit the scan request to the first external electronic device through a touch input or voice input.

In operation 1730, the processor of the first external electronic device may receive selection of the first audio source device.

According to an embodiment, when the first audio source device is detected, the user of the first audio output device may select the first audio source device. For example, the first external electronic device may transmit a mechanical or electrical stimulus indicating that the first audio source device is detected for the user to select, through a haptic module (e.g., the haptic module 179 in FIG. 1). For example, the first external electronic device may transmit information about the first audio source device detected for the user to select to the user through audio. For example, the first external electronic device may output, to the user through audio, an identifier of the first audio source device or the name of content broadcast by the first audio source device. For example, the user may transmit an input for the selection to the first external electronic device through a touch sensor of the first external electronic device. For example, the user may transmit a voice input for the selection to the first external electronic device through a microphone of the first external electronic device.

Based on the first audio source device being selected, the processor of the first external electronic device may receive a first audio broadcast stream broadcast by the first audio source device based on the first signal. The processor of the first external electronic device may receive a first sub-audio broadcast stream corresponding to a type (e.g., a left earphone) of the first external electronic device among one or more sub-audio broadcast streams of the first audio broadcast stream. The processor of the first external electronic device may not perform packet processing (e.g., rendering processing) for audio output even when the first sub-audio broadcast stream is received.

In operation 1740, the processor of the first external electronic device may determine an audio output start time point for starting outputting audio of the first audio broadcast stream broadcast by the first audio source device.

According to an embodiment, the processor of the first external electronic device may determine the audio output start time point for starting outputting audio of the first audio broadcast stream based on packet information about packets of the first audio broadcast stream obtained based on the first signal. For example, when the first signal is an EA signal, the packet information about the packets of the first audio broadcast stream may be included in a PA signal corresponding to the EA signal. For example, when the first signal is a PA signal, the packet information about the packets of the first audio broadcast stream may be included in the PA signal.

The processor of the first external electronic device may determine one of packet numbers included in the packet information as the audio output start time point for starting outputting audio of the first audio broadcast stream. The processor of the first external electronic device may determine a packet having a target output time among times at which the packets of the first audio broadcast stream are output based on a time at which the PA signal is received. For example, a time after the target time from the time at which the PA signal is received may be determined as an output time, and a target packet with the corresponding output time may be determined.

The target time used to determine the audio output start time point may be a time offset. According to an embodiment, the target time may be determined by the processor of the first external electronic device based on an NSE, a number of BISs, BN, or IRC of the first audio broadcast stream. According to an embodiment, the target time may be determined by the first external electronic device based on the quality of a wireless communication environment between the first external electronic device and the second external electronic device. According to an embodiment, the target time may be determined in advance.

In operation 1750, the processor of the first external electronic device may transmit a source addition command that is based on information of the first audio source device, and information about the audio output start time point to the second external electronic device through the communication module. For example, the source addition command may include at least one of address information of the first audio source device, a broadcast identifier, PA synchronization information, or BIS information.

According to an embodiment, the second external electronic device may receive the first audio broadcast stream from the first audio source device based on the source addition command. For example, the second external electronic device may receive a second sub-audio broadcast stream corresponding to a type (e.g., a right earphone) of the second external electronic device among one or more sub-audio broadcast streams of the first audio broadcast stream. The second external electronic device may not perform packet processing for audio output even when the second sub-audio broadcast stream is received.

In operation 1760, the processor of the first external electronic device may output first audio by processing the first audio broadcast stream from the audio output start time point. For example, the processor of the first external electronic device may output the first audio by processing the first sub-audio broadcast stream of the first audio broadcast stream.

According to an embodiment, the processor of the second external electronic device may output second audio by processing the first audio broadcast stream from the audio output start time point. For example, the processor of the second external electronic device may output the second audio by processing the second sub-audio broadcast stream of the first audio broadcast stream.

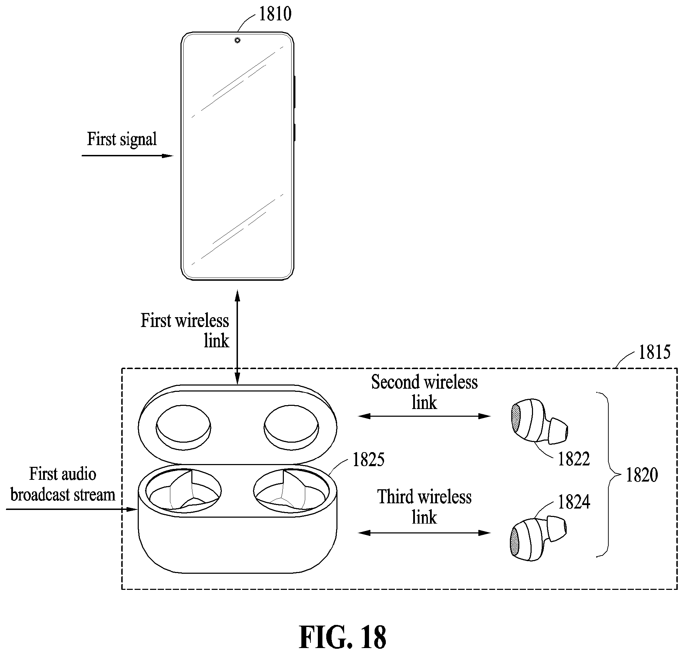

FIG. 18 is a diagram illustrating a cradle device that establishes wireless links with a first external electronic device and a second external electronic device included in an audio output device and establishes a wireless link with an electronic device, according to an embodiment.

According to an embodiment, an audio output device 1815 (e.g., the electronic device 102 or 104 in FIG. 1, the audio output device 304 or 309 in FIG. 3, the audio output device 415 in FIG. 4, the audio output device 1015 in FIG. 10, the audio output device 1115 or 1130 in FIG. 11, the audio output device 1415 or 1430 in FIG. 14, or the first audio output device 1620 in FIG. 16) may include external output devices 1820 and a cradle device 1825 (e.g., the cradle device 308 in FIG. 3, the cradle device 425 in FIG. 4, the cradle device 1025 in FIG. 10, the cradle device 1125 in FIG. 11, or the cradle devices 1425 in FIG. 14). The cradle device 1825 may include a processor, a communication module, a display module, a memory, a sound output module, a sensor unit, and a battery. A description of the processor, the communication module, the memory, the sound output module, the sensor unit, and the battery of the cradle device 1825 may be replaced with the foregoing description of the processor 120, the communication module 190, the display module 160, the memory 130, the sound output module 155, the sensor module 176, and the battery 189 provided with reference to FIG. 1.

The external output devices 1820 may include a first external electronic device 1822 (e.g., the first external electronic device 306a or 309a in FIG. 3, the first external electronic device 421 in FIG. 4, the first external electronic device 1022 in FIG. 10, the first external electronic device 1122 or 1132 in FIG. 11, the first external electronic device 1422 or 1432 in FIG. 14, or the first external electronic device 1622 in FIG. 16), and a second external electronic device 1824 (e.g., the second external electronic device 306b or 309b in FIG. 3, the second external electronic device 423 in FIG. 4, the second external electronic device 1024 in FIG. 10, the second external electronic device 1124 or 1134 in FIG. 11, the second external electronic device 1424 or 1434 in FIG. 14, or the second external electronic device 1624 in FIG. 16).

According to an embodiment, a first wireless link may be established between an electronic device 1810 (e.g., the electronic device 101 in FIG. 1, the electronic device 300 in FIG. 3, the electronic device 410 in FIG. 4, the electronic device 1010 in FIG. 10, the electronic device 1110 in FIG. 11, or the electronic device 1410 in FIG. 14) and the cradle device 1825. A second wireless link may be established between the cradle device 1825 and the first external electronic device 1822, and a third wireless link may be established between the cradle device 1825 and the second external electronic device 1824.

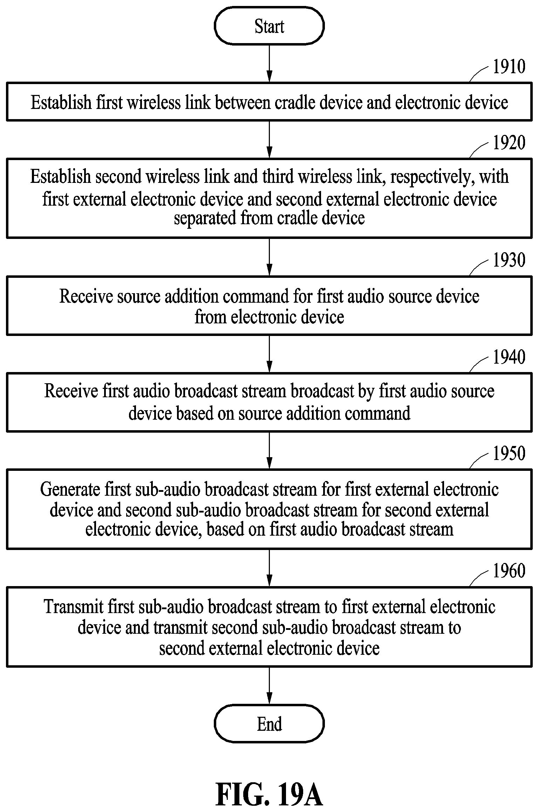

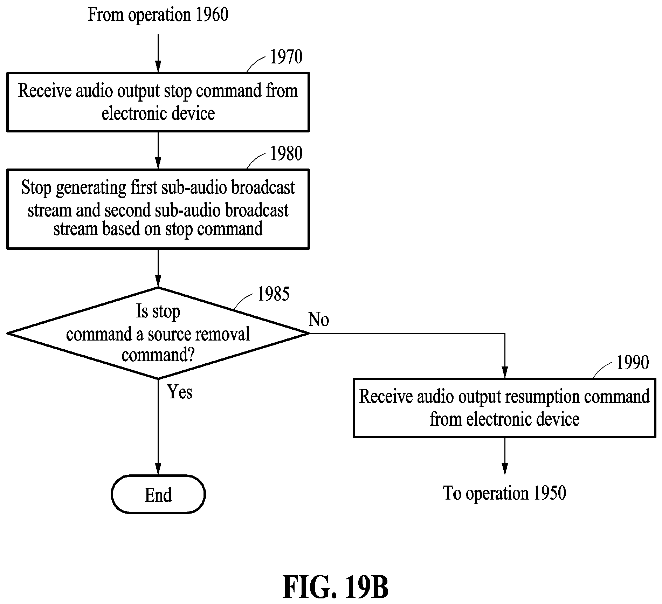

According to an embodiment, when receiving a source addition command from the electronic device 1810, the cradle device 1825 may receive a first audio broadcast stream from a first audio source device (e.g., the audio source device 310 or 320 in FIG. 3 or the audio source device 1602 in FIG. 16) based on the source addition command; generate sub-audio broadcast streams for synchronizing an audio output start time point between the first external electronic device 1822 and the second external electronic device 1824; and transmit the generated sub-audio broadcast streams to the first external electronic device 1822 and the second external electronic device 1824, respectively. Hereinafter, a method of synchronizing an audio output start time point will be described in detail with reference to FIGS. 19A and 19B.

FIG. 19A is a flowchart illustrating an audio output method performed by a cradle device, according to an embodiment.

Operations 1910 to 1960 described below may be performed by a cradle device (e.g., the cradle device 308 in FIG. 3, the cradle device 425 in FIG. 4, the cradle device 1025 in FIG. 10, the cradle device 1125 in FIG. 11, the cradle device 1425 in FIG. 14, or the cradle device 1825 in FIG. 18) of a first audio output device (e.g., the electronic device 102 or 104 in FIG. 1, the audio output device 304 or 309 in FIG. 3, the audio output device 415 in FIG. 4, the audio output device 1015 in FIG. 10, the audio output device 1115 or 1130 in FIG. 11, the audio output device 1415 or 1430 in FIG. 14, the first audio output device 1620 in FIG. 16, or the first audio output device 1815 in FIG. 18).

In operation 1910, a processor of the cradle device may establish a first wireless link between the cradle device and an electronic device (e.g., the electronic device 101 in FIG. 1, the electronic device 300 in FIG. 3, the electronic device 410 in FIG. 4, the electronic device 1010 in FIG. 10, the electronic device 1110 in FIG. 11, the electronic device 1410 in FIG. 14, or the electronic device 1810 in FIG. 18) through a communication module.

In operation 1920, the processor of the cradle device may establish a second wireless link and a third wireless link with a first external electronic device (e.g., the first external electronic device 306a or 309a in FIG. 3, the first external electronic device 421 in FIG. 4, the first external electronic device 1022 in FIG. 10, the first external electronic device 1122 or 1132 in FIG. 11, the first external electronic device 1422 or 1432 in FIG. 14, the first external electronic device 1622 in FIG. 16, or the first external electronic device 1822 in FIG. 18) and a second external electronic device (e.g., the second external electronic device 306b or 309b in FIG. 3, the second external electronic device 423 in FIG. 4, the second external electronic device 1024 in FIG. 10, the second external electronic device 1124 or 1134 in FIG. 11, the second external electronic device 1424 or 1434 in FIG. 14, the second external electronic device 1624 in FIG. 16, or the second external electronic device 1824 in FIG. 18), respectively.

In operation 1930, the processor of the cradle device may receive a source addition command for a first audio source device (e.g., the audio source device 310 or 320 in FIG. 3) from the electronic device through the communication module.

In operation 1940, the processor of the cradle device may receive a first audio broadcast stream broadcast by the first audio source device based on the source addition command through the communication module.

In operation 1950, the processor of the cradle device may generate a first sub-audio broadcast stream for the first external electronic device and a second sub-audio broadcast stream for the second external electronic device based on the first audio broadcast stream.

According to an embodiment, the cradle device may determine an audio output start time point to synchronize audio output between first sub-audio output by the first external electronic device and second sub-audio output by the second external electronic device. A method of determining the audio output start time point may be performed similarly as described above regarding operation 1230 in FIG. 12A. The cradle device may generate a first sub-audio broadcast stream and a second sub-audio broadcast stream such that packets of a valid audio signal are included from the determined audio output start time point. For example, the cradle device may generate the first sub-audio broadcast stream and the second sub-audio broadcast stream such that packets preceding an output time point include null data. For example, the packets of the valid audio signal may be encoded data.

In operation 1960, the processor of the cradle device may transmit the first sub-audio broadcast stream to the first external electronic device and the second sub-audio broadcast stream to the second external electronic device through the communication module.

According to an embodiment, the first external electronic device may generate a first sub-audio signal by decoding packets of the received first sub-audio broadcast stream and output first audio based on the first sub-audio signal. The second external electronic device may generate a second sub-audio signal by decoding packets of the received second sub-audio broadcast stream and output second audio based on the second sub-audio signal. In this case, an output time of the first audio and an output time of the second audio may be the same.

FIG. 19B is a flowchart illustrating an audio output stop method and an audio output resumption method performed by a cradle device, according to an embodiment.

Operations 1970 to 1990 described below may be performed by a cradle device (e.g., the cradle device 308 in FIG. 3, the cradle device 425 in FIG. 4, the cradle device 1025 in FIG. 10, the cradle device 1125 in FIG. 11, the cradle device 1425 in FIG. 14, or the cradle device 1825 in FIG. 18) of a first audio output device (e.g., the electronic device 102 or 104 in FIG. 1, the audio output device 304 or 309 in FIG. 3, the audio output device 415 in FIG. 4, the audio output device 1015 in FIG. 10, the audio output device 1115 or 1130 in FIG. 11, the audio output device 1415 or 1430 in FIG. 14, the first audio output device 1620 in FIG. 16, or the first audio output device 1815 in FIG. 18).

In operation 1970, a processor of the cradle device may receive an audio output stop command from an electronic device (e.g., the electronic device 101 in FIG. 1, the electronic device 300 in FIG. 3, the electronic device 410 in FIG. 4, the electronic device 1010 in FIG. 10, the electronic device 1110 in FIG. 11, the electronic device 1410 in FIG. 14, or the electronic device 1810 in FIG. 18) through a communication module.

According to an embodiment, the audio output stop command may be a source modification command. For example, when receiving an input for pausing audio output from a user through UI or UX, the electronic device may generate the stop command as the source modification command and transmit the generated stop command to the cradle device. For example, when receiving a call, the electronic device may generate the stop command and transmit the generated stop command to the cradle device.

For example, the audio output stop command may be a source removal command. For example, when receiving, from the user through UI or UX, an input for deleting or removing information about an audio source device (e.g., the audio source device 310 or 320 in FIG. 3) that broadcasts an audio broadcast stream to be received by an audio output device, the electronic device may generate the stop command as the source removal command and transmit the generated stop command to the cradle device. For example, when receiving an input for playing a sound source through an application installed on the electronic device from the user, the electronic device may generate the stop command as the source removal command and transmit the generated stop command to the cradle device.

In operation 1980, the processor of the cradle device may stop generating a first sub-audio broadcast stream and a second sub-audio broadcast stream based on the stop command.

According to an embodiment, the cradle device may determine an audio output stop time point. The cradle device may generate the first sub-audio broadcast stream and the second sub-audio broadcast stream such that corresponding packets after the audio output stop time point are not included in the first sub-audio broadcast stream and the second sub-audio broadcast stream. After the audio output stop time point, the generation of the first sub-audio broadcast stream and the second sub-audio broadcast stream may be stopped.

According to an embodiment, in operation 1985, whether the stop command is a source removal command or not may be determined. When the stop command is not the source removal command, operation 1990 may be performed. For example, when the stop command is a source modification command, operation 1990 may be performed.

According to an embodiment, in operation 1985, whether the stop command is a source modification command or not may be determined. When the stop command is the source modification command, operation 1990 may be performed.

In operation 1990, the processor of the cradle device may receive an audio output resumption command from the electronic device through the communication module.

According to an embodiment, the resumption command may be the source modification command. For example, when receiving an input for resuming audio output from the user through UI or UX, the electronic device may generate the resumption command as the source modification command and transmit the generated resumption command to the cradle device. For example, when a call ends, the electronic device may generate the resumption command and transmit the generated resumption command to the cradle device.

After operation 1990 is performed, operation 1950 described above with reference to FIG. 19A may be performed.

According to an embodiment, when receiving the resumption command, the processor of the cradle device may generate a first sub-audio broadcast stream for the first external electronic device and a second sub-audio broadcast stream for the second external electronic device based on the first audio broadcast stream.

According to an embodiment, the cradle device may determine an audio output resumption time point to synchronize an audio start time of first audio output by the first external electronic device and an audio start time of second audio output by the second external electronic device. A method of determining the audio output resumption time point may be performed similarly as described above regarding operation 1230 in FIG. 12A. The cradle device may generate the first sub-audio broadcast stream and the second sub-audio broadcast stream such that packets of a valid audio signal are included from the determined audio output resumption time point. For example, the cradle device may generate the first sub-audio broadcast stream and the second sub-audio broadcast stream such that that packets before the audio output resumption time point include null data. For example, the packets of the valid audio signal may be encoded data.

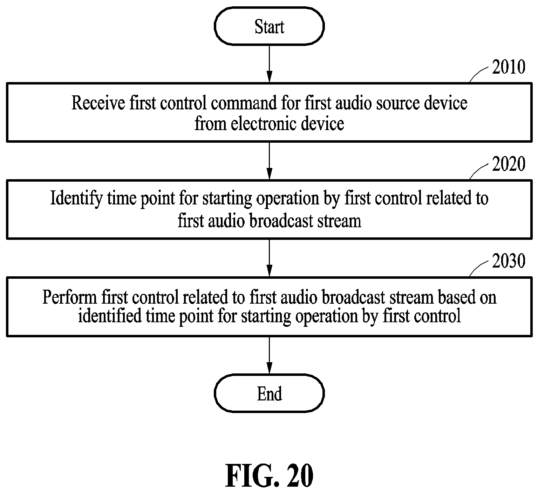

FIG. 20 is a flowchart illustrating a method of performing control related to an audio broadcast stream, which is performed by a first external electronic device, according to an embodiment.

According to an embodiment, an audio output device (e.g., the electronic device 102 or the electronic device 104 in FIG. 1, the audio output device 304 or 309 in FIG. 3, the audio output device 415 in FIG. 4, the audio output device 1015 in FIG. 10, the audio output device 1115 or 1130 in FIG. 11, the audio output device 1415 or 1430 in FIG. 14, the audio output device 1620 in FIG. 16, or the audio output device 1815 in FIG. 18) may include a first external electronic device (e.g., the first external electronic device 306a or 309a in FIG. 3, the first external electronic device 421 in FIG. 4, the first external electronic device 1022 in FIG. 10, the first external electronic device 1122 or 1132 in FIG. 11, the first external electronic device 1422 or 1432 in FIG. 14, the first external electronic device 1622 in FIG. 16, or the first external electronic device 1822 in FIG. 18) and a second external electronic device (e.g., the second external electronic device 306b or 309b in FIG. 3, the second external electronic device 423 in FIG. 4, the second external electronic device 1024 in FIG. 10, the second external electronic device 1124 or 1134 in FIG. 11, the second external electronic device 1424 or 1434 in FIG. 14, the second external electronic device 1624 in FIG. 16, or the second external electronic device 1824 in FIG. 18). The first external electronic device and the second external electronic device may operate as at least one group or set. For example, the first external electronic device (or the second external electronic device) may include a processor, a communication module, a memory, a sound output module, a sensor unit, and a battery. A description of the processor, the communication module, the memory, the sound output module, the sensor unit, and the battery of the first external electronic device may be replaced with the foregoing description of the processor 120, the communication module 190, the memory 130, the sound output module 155, the sensor module 176, and the battery 189 provided with reference to FIG. 1.

According to an embodiment, operations 2010 to 2030 described below may be performed by the first external electronic device (or the second external electronic device).

In operation 2010, the first external electronic device may receive a first control command for a first audio source device (e.g., the audio source device 310 or 320 in FIG. 3 or the audio source device 1602 in FIG. 16) from an electronic device (e.g., the electronic device 101 in FIG. 1, the electronic device 300 in FIG. 3, the electronic device 410 in FIG. 4, the electronic device 1010 in FIG. 10, the electronic device 1110 in FIG. 11, the electronic device 1410 in FIG. 14, or the electronic device 1810 in FIG. 18). For example, the first control command may be a source addition command, a stop command, a source removal command, or a resumption command.

In operation 2020, the first external electronic device may identify a time point for starting an operation by first control related to a first audio broadcast stream, for synchronization with an operation by the first control of the second external electronic device related to the first audio broadcast stream broadcast by the first audio source device corresponding to the first control command.

According to an embodiment, operation 2020 may include operation 550 of receiving the first audio broadcast stream broadcast by the first audio source device based on a source addition command received as the first control command from the electronic device, and operation 560 of identifying an audio output start time point for starting outputting audio of the first audio broadcast stream, which are described above with reference to FIG. 5B.

According to an embodiment, operation 2020 may include operation 582 of receiving an audio output stop command as the first control command from the electronic device, and operation 584 of identifying an audio output stop time point for stopping outputting audio of the first audio broadcast stream based on the stop command, which are described above with reference to FIG. 5D.

According to an embodiment, operation 2020 may include operation 592 of receiving an audio output resumption command as the first control command from the electronic device, and operation 594 of identifying an audio output resumption time point for resuming outputting audio of the first audio broadcast stream based on the resumption command, which are described above with reference to FIG. 5D.

According to an embodiment, both the first external electronic device and the second external electronic device may receive the first control command in operation 2010. According to an embodiment, the first external electronic device may receive the first control command, and the second external electronic device may not receive the first control command, in operation 2010. Based on whether the second external electronic device directly receives the first control command from the electronic device, a method of identifying the time point for the operation by the first control may vary. For methods of identifying the time point for the operation by the first control, reference may be made to the detailed description provided above with reference to FIGS. 7A to 7I.

In operation 2030, the first external electronic device may perform the first control related to the first audio broadcast stream from the time point for starting the operation by the first control. For example, the time point for starting the operation by the first control may be an audio output start time point, an audio output stop time point, or an audio output resumption time point.

According to an embodiment, operation 2030 of performing the first control related to the first audio broadcast stream from the time point for starting the operation by the first control performed by the first external electronic device may include operation 570 of starting outputting audio from an audio output start time point, which is described above with reference to FIG. 5B.

According to an embodiment, operation 2030 of performing the first control related to the first audio broadcast stream from the time point for starting the operation by the first control performed by the first external electronic device may include operation 586 of stopping outputting audio from an audio output stop time point, which is described above with reference to FIG. 5D.

According to an embodiment, operation 2030 of performing the first control related to the first audio broadcast stream from the time point for starting the operation by the first control performed by the first external electronic device may include operation 596 of resuming outputting audio from an audio output resumption time point, which is described above with reference to FIG. 5D.

According to an embodiment, an electronic device (306a; 309a; 421; 1022; 1122; 1132; 1422; 1432; 1622; 1822) may include a communication module, a processor, and a memory, and the memory may include instructions configured to, when executed by the processor, cause the electronic device to: receive a command from a first external electronic device (101; 302; 410; 1010; 1110; 1410; 1810) through the communication module; receive a first audio broadcast stream broadcast by a first audio source device through the communication module based on the command; identify an audio output start time point for starting outputting audio of the first audio broadcast stream, for synchronization with the start of audio output of a second external electronic device (306b; 309b; 423; 1024; 1124; 1134; 1424; 1434; 1624; 1824); and start outputting audio of the first audio broadcast stream based on the audio output start time point.

For example, the electronic device may be a first wireless earphone, the second external electronic device may be second wireless earphone and the first external electronic device may be smartphone or a cradle for the earphones, as explained in more detail above.

The command may, for example, be a first source addition command for adding the first audio source device. In other words, the command may instruct the electronic device to add the first audio source device as a (trusted) device for receiving the first audio broadcast stream. Adding the first audio source device may include pairing with the first audio source device. The command may be sent directly from the first external electronic device to the electronic device or via another electronic device, for example via a cradle device, as explained in more detail above.

The audio output start time point is identified, or in other words determined, for the purpose of synchronization with the start of the audio output of the second external electronic device. In other words, the audio output start time point is identified such that it is to be synchronized with the start of the audio output of the second external electronic device. After identifying the audio output start time point, synchronization with the second external electronic device may be performed. That is, the electronic device may exchange information with the second external electronic device to synchronize the audio output start time point between the electronic device and the second external electronic device. For example, the electronic device may share the identified audio output start time point with the second external electronic device thereby achieving synchronization. Thus, an audio output start time point of the electronic device and an audio output start time point of the second external electronic device may be synchronized so that both devices, e.g. both wireless earphones, may start the audio output at the same time and the user may receive both the left audio and right audio at the same time. Thereby a delay between the audio outputs may be reduced or eliminated.

According to an embodiment, a first wireless link may be established between the electronic device and the first external electronic device.

According to an embodiment, a second wireless link may be established between the second external electronic device and the first external electronic device, and/or a third wireless link may be established between the electronic device and the second external electronic device.

According to an embodiment, information for identifying a time point may be exchanged through the third wireless link.

Thus, the electronic device, e.g. the first wireless earphone, and the second external electronic device, e.g. the second wireless earphone, may synchronize via direct communication which may be particularly efficient.

According to an embodiment, the instructions may be configured to, when executed by the processor, cause the electronic device further to: receive a PA signal broadcast by the first audio source device based on the command through the communication module; receive the first audio broadcast stream broadcast by the first audio source device based on the PA signal through the communication module; and obtain packet information about packets of the first audio broadcast stream included in the PA signal received from the first audio source device.

This may allow for a particularly efficient communication. For example, the audio output start time point may be based on the packet information about packets of the first audio broadcast stream of the PA signal, which is particularly efficient, as explained in more detail above.

According to an embodiment, the instructions may be configured to, when executed by the processor, cause the electronic device further to: transmit a request message that requests transmission of a confirmation message regarding a time point at which the second external electronic device receives the first audio broadcast stream to the second external electronic device through the communication module; receive the confirmation message from the second external electronic device through the communication module, and identify the audio output start time point for starting outputting audio of the first audio broadcast stream based on the confirmation message.

Identifying the audio output start time point for starting outputting audio of the first audio broadcast stream based on the confirmation message may be particularly efficient as explained in more detail above.

According to an embodiment, the instructions may be configured to, when executed by the processor, cause the electronic device further to: identify the audio output start time point for starting outputting audio of the first audio broadcast stream based on the number of a target packet among packets of the first audio broadcast stream included in the confirmation message.

Thus, the confirmation message may include information about a number of a target packet among packets of the first audio broadcast stream, wherein the audio output start time point is identified based on the number of one of the target packets, which may be particularly efficient. In other words, the processor of the electronic device may determine one packet number of one or more packet numbers included in the packet information as the audio output start time point for starting outputting audio of the first audio broadcast stream as explained in more detail above.

According to an embodiment, the instructions may be configured to, when executed by the processor, cause the electronic device further to: identify the audio output start time point for starting outputting audio of the first audio broadcast stream based on time information included in the first audio broadcast stream and the confirmation message.

Identifying the audio output start time point based on both the time information in the first audio broadcast stream and the confirmation message, e.g. the number of a target packet among packets of the first audio broadcast stream included in the confirmation message, may be particularly reliable as explained in more detail above. According to an embodiment, the instructions may be configured to, when executed by the processor, cause the electronic device further to: identify the audio output start time point for starting outputting audio of the first audio broadcast stream based on packet information about packets of the first audio broadcast stream included in the PA signal received from the first audio source device; and transmit information about the audio output start time point for starting outputting audio of the first audio broadcast stream to the second external electronic device through the communication module.

As mentioned above, identifying the audio output start time point based on the packet information about packets of the first audio broadcast stream of the PA signal may be particularly efficient as explained in more detail above.

According to an embodiment, one of packet numbers included in the packet information may be identified as the audio output start time point for starting outputting audio of the first audio broadcast stream.

Thus, the packet information may include information about packet numbers, wherein the audio output start time point may be identified based on one of packet numbers, which may be particularly efficient as explained in more detail above.

According to an embodiment, the instructions may be configured to, when executed by the processor, cause the electronic device further to: identify the audio output start time point for starting outputting audio of the first audio broadcast stream based on a signal received from the first external electronic device, the first audio source device, and/or the second external electronic device; and transmit the information about the audio output start time point for starting outputting audio of the first audio broadcast stream to the second external electronic device, for example directly to the second external electronic device, through the communication module.

This may be particularly efficient. For example, the audio output start time point may be determined based on a received source addition command as explained above.

According to an embodiment, the command may be transmitted by the first external electronic device to the electronic device and the second external electronic device through the first wireless link and the second wireless link, respectively. This may be particularly efficient.

According to an embodiment, the instructions may be configured to, when executed by the processor, cause the electronic device further to: transmit the command to the second external electronic device through the third wireless link when the command is received from the first external electronic device. This may be particularly efficient.

According to an embodiment, the instructions may be configured to, when executed by the processor, cause the electronic device further to: receive an audio output stop command from the first external electronic device through the communication module; identify an audio output stop time point for stopping outputting audio of the first audio broadcast stream, for synchronization with the stop of audio output of the second external electronic device based on the stop command; and stop outputting audio of the first audio broadcast stream based on the audio output stop time point.

In other words, the audio output stop time point may be identified such that it is to be synchronized with the stop of the audio output of the second external electronic device. That is, synchronization may be performed with the second external electronic device based on the stop command, e.g. by sharing the audio output stop time point with the second external electronic device. This may be particularly efficient.

According to an embodiment, the instructions may be configured to, when executed by the processor, cause the electronic device further to: receive an audio output resumption command from the first external electronic device through the communication module; identify an audio output resumption time point for resuming outputting audio of the first audio broadcast stream, for synchronization with the resumption of audio output of the second external electronic device based on the resumption command; and resume outputting audio of the first audio broadcast stream based on the audio output resumption time point.

In other words, the audio output resumption time point may be identified such that is it to be synchronized with a resumption of the audio output of the second external electronic device. After identifying the audio output resumption time point, synchronization with the second external electronic device may be performed. That is, the electronic device may exchange information with the second external electronic device to synchronize the audio output resumption time point between the electronic device and the second external electronic device. For example, the electronic device may share the identified audio output resumption time point with the second external electronic device thereby achieving synchronization. Thus, an audio output resumption time point of the electronic device and an audio output resumption time point of the second external electronic device may be synchronized so that both devices, e.g. both wireless earphones, may resume the audio output at the same time and the user may receive both the left audio and right audio at the same time. Thereby a delay between the audio outputs may be reduced or eliminated.

According to an embodiment, an audio output method performed by an electronic device (306a; 309a; 421; 1022; 1122; 1132; 1422; 1432; 1622; 1822) may include: operation (540) of receiving a command from a first external electronic device (101; 302; 410; 1010; 1110; 1410; 1810); operation (550) of receiving a first audio broadcast stream broadcast by a first audio source device based on the command; operation (560) of identifying an audio output start time point for starting outputting audio of the first audio broadcast stream, for synchronization with the start of audio output of a second external electronic device (306b; 309b; 423; 1024; 1124; 1134; 1424; 1434; 1624; 1824); and operation (570) of starting outputting audio of the first audio broadcast stream based on the audio output start time point.

According to an embodiment, an electronic device (101; 300; 410; 1010; 1110; 1410; 1810) may include: a display module (160), a communication module (190), a processor (120), and a memory (130), and the memory may store instructions that are configured to, when executed by the processor, cause the electronic device to: receive a first signal including information of a first audio source device (310; 320; 1602) through the communication module; output at least a portion of the information of the first audio source device through the display; identify an audio output start time point for starting outputting audio of a first audio broadcast stream broadcast by the first audio source device based on the first audio source device being selected; and transmit a command based on the information of the first audio source device and information about the audio output start time point to a first audio output device (102; 104; 304; 309; 415; 1015; 1115; 1130; 1415;1430; 1620; 1815).

According to an embodiment, when the first audio output device includes a first external electronic device (306a; 309a; 421; 1022; 1122; 1132; 1422; 1432; 1622; 1822) and a second external electronic device (306b; 309b; 423; 1024; 1124; 1134; 1424; 1434; 1624; 1824), a first wireless link may be established between the electronic device and the first external electronic device, and a second wireless link may be established between the electronic device and the second external electronic device. The instructions may be configured to, when executed by the processor, cause the electronic device to: transmit the command and the information about the audio output start time point to the first external electronic device through the first wireless link, and transmit the command and the information about the audio output start time point to the second external electronic device through the second wireless link.

According to an embodiment, the instructions may be configured to, when executed by the processor, cause the electronic device to: identify the audio output start time point for starting outputting audio of the first audio broadcast stream based on packet information about packets of the first audio broadcast stream obtained based on a first signal.

According to an embodiment, when the first signal is an EA signal, the packet information about the packets of the first audio broadcast stream may be included in a PA signal corresponding to the EA signal.

According to an embodiment, when the first signal is a PA signal, the packet information about the packets of the first audio broadcast stream may be included in the PA signal.

According to an embodiment, the instructions may be configured to, when executed by the processor, cause the electronic device further to: identify, as the audio output start time point for starting outputting audio of first audio broadcast stream, one of packet numbers included in the packet information.

According to an embodiment, an electronic device (306a; 309a; 421; 1022; 1122; 1132; 1422; 1432; 1622; 1822) may include: a communication module, a processor, and a memory, and the memory may store instructions that are configured to, when executed by the processor, cause the electronic device to: receive a first control command for a first audio source device (310; 320; 1602) from a first external electronic device (101; 302; 410; 1010; 1110; 1410; 1810; 308; 425) through the communication module; identify a time point for starting an operation by first control related to a first audio broadcast stream broadcast by the first audio source device corresponding to the first control command, for synchronization with an operation by the first control of a second external electronic device (306b; 309b; 423; 1024; 1124; 1134; 1424; 1434; 1624; 1824) related to the first audio broadcast stream; and perform the first control related to the first audio broadcast stream based on the time point for staring the operation.

According to an embodiment, the instructions may be configured to, when executed by the processor, cause the electronic device further to: receive the first audio broadcast stream broadcast by the first audio source device based on a source addition command as the first control command through the communication module; identify an audio output start time point for starting outputting audio of the first audio broadcast stream, for synchronization with the start of audio output of the second external electronic device; and start outputting audio of the first audio broadcast stream based on the audio output start time point.

According to an embodiment, the instructions may be configured to, when executed by the processor, cause the electronic device further to: receive an audio output stop command as the first control command from the first external electronic device through the communication module; identify an audio output stop time point for stopping outputting audio of the first audio broadcast stream, for synchronization with the stop of audio output of the second external electronic device based on the stop command; and stop outputting audio of the first audio broadcast stream based on the audio output stop time point.

According to an embodiment, the instructions may be configured to, when executed by the processor, cause the electronic device further to: receive an audio output resumption command as the first control command from the first external electronic device through the communication module; identify an audio output resumption time point for resuming outputting audio of the first audio broadcast stream, for synchronization with the resumption of audio output of the second external electronic device based on the resumption command; and resume outputting audio of the first audio broadcast stream based on the audio output resumption time point.

The embodiments described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For simplicity, the description of a processing device is used as singular; however, one skilled in the art will be appreciated that a processing device may include multiple processing elements and multiple types of processing elements. For example, a processing device may include multiple processors or a processor and a controller. In addition, different processing configurations are possible, such as, parallel processors.

The software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magnetooptical media such as optical discs; and hardware devices that are specially configured to store and perform program instructions, such as ROM, RAM, flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

While this disclosure includes specific examples, it will be apparent to one of ordinary skill in the art that various examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined not by the detailed description, but by the scope of the appended claims.

## Claims

1. An electronic device (306a; 309a; 421; 1022; 1122; 1132; 1422; 1432; 1622; 1822), comprising:
a communication module;
a processor; and
a memory storing instructions to be executed by the processor, wherein, when executed by the processor, the instructions cause the electronic device (306a; 309a; 421; 1022; 1122; 1132; 1422; 1432; 1622; 1822) to:
receive (540) a source addition command including broadcast isochronous stream, BIS, information associated with a first audio source device from a first external electronic device (101; 302; 410; 1010; 1110; 1410; 1810; 308; 425) through the communication module;
receive (550) a first audio broadcast stream that is broadcast by the first audio source device through the communication module based on the source addition command;
identify (560) an audio output start time point for starting outputting audio of the first audio broadcast stream for synchronization with the start of an audio output of a second external electronic device (306b; 309b; 423; 1024; 1124; 1134; 1424; 1434; 1624; 1824); and
start (570) outputting audio of the first audio broadcast stream based on the audio output start time point, and
wherein, when executed by the processor, the instructions cause the electronic device (306a; 309a; 421; 1022; 1122; 1132; 1422; 1432; 1622; 1822) further to:
transmit (710) a request message that requests transmission of a confirmation message regarding a time point at which the second external electronic device (306b; 309b; 423; 1024; 1124; 1134; 1424; 1434; 1624; 1824) receives the first audio broadcast stream to the second external electronic device (306b; 309b; 423; 1024; 1124; 1134; 1424; 1434; 1624; 1824) through the communication module;
receive (720) the confirmation message from the second external electronic device (306b; 309b; 423; 1024; 1124; 1134; 1424; 1434; 1624; 1824) through the communication module; and
identify the audio output start time point for starting outputting audio of the first audio broadcast stream based on the number of a target packet among packets of the first audio broadcast stream comprised in the confirmation message.

2. The electronic device (306a; 309a; 421; 1022; 1122; 1132; 1422; 1432; 1622; 1822) of claim 1, wherein a first wireless link is established between the electronic device (306a; 309a; 421; 1022; 1122; 1132; 1422; 1432; 1622; 1822) and the first external electronic device (101; 302; 410; 1010; 1110; 1410; 1810; 308; 425),
a second wireless link is established between the second external electronic device (306b; 309b; 423; 1024; 1124; 1134; 1424; 1434; 1624; 1824) and the first external electronic device (101; 302; 410; 1010; 1110; 1410; 1810; 308; 425), and
a third wireless link is established between the electronic device (306a; 309a; 421; 1022; 1122; 1132; 1422; 1432; 1622; 1822) and the second external electronic device (306b; 309b; 423; 1024; 1124; 1134; 1424; 1434; 1624; 1824),
wherein, through the third wireless link, information for identifying the audio output start time point is exchanged.

3. The electronic device (306a; 309a; 421; 1022; 1122; 1132; 1422; 1432; 1622; 1822) of claim 1 or 2, wherein, when executed by the processor, the instructions cause the electronic device (306a; 309a; 421; 1022; 1122; 1132; 1422; 1432; 1622; 1822) further to:
receive (610) a periodic advertising, PA, signal that is broadcast by the first audio source device based on the source addition command through the communication module;
receive (620) the first audio broadcast stream that is broadcast by the first audio source device based on the PA signal through the communication module;
obtain packet information about packets of the first audio broadcast stream comprised in the PA signal received from the first audio source device.

4. The electronic device (306a; 309a; 421; 1022; 1122; 1132; 1422; 1432; 1622; 1822) of claim 1, wherein, when executed by the processor, the instructions cause the electronic device (306a; 309a; 421; 1022; 1122; 1132; 1422; 1432; 1622; 1822) further to:
identify the audio output start time point for starting outputting audio of the first audio broadcast stream based on time information comprised in the first audio broadcast stream and the confirmation message.

5. The electronic device (306a; 309a; 421; 1022; 1122; 1132; 1422; 1432; 1622; 1822) of claim 2, wherein the source addition command is transmitted by the first external electronic device (101; 302; 410; 1010; 1110; 1410; 1810; 308; 425) to the electronic device (306a; 309a; 421; 1022; 1122; 1132; 1422; 1432; 1622; 1822) and the second external electronic device (306b; 309b; 423; 1024; 1124; 1134; 1424; 1434; 1624; 1824) through the first wireless link and the second wireless link, respectively.

6. The electronic device (306a; 309a; 421; 1022; 1122; 1132; 1422; 1432; 1622; 1822) of claim 2, wherein, when executed by the processor, the instructions cause the electronic device (306a; 309a; 421; 1022; 1122; 1132; 1422; 1432; 1622; 1822) further to:
when the source addition command is received from the first external electronic device, (101; 302; 410; 1010; 1110; 1410; 1810; 308; 425) transmit the source addition command to the second external electronic device (306b; 309b; 423; 1024; 1124; 1134; 1424; 1434; 1624; 1824) through the third wireless link.

7. The electronic device (306a; 309a; 421; 1022; 1122; 1132; 1422; 1432; 1622; 1822) of any one of claims 1 to 6, wherein, when executed by the processor, the instructions cause the electronic device (306a; 309a; 421; 1022; 1122; 1132; 1422; 1432; 1622; 1822) further to:
receive (582) an audio output stop command from the first external electronic device (101; 302; 410; 1010; 1110; 1410; 1810; 308; 425) through the communication module;
identify (584) an audio output stop time point for stopping outputting audio of the first audio broadcast stream for synchronization with a stop of an audio output of the second external electronic device (306b; 309b; 423; 1024; 1124; 1134; 1424; 1434; 1624; 1824) based on the audio output stop command; and
stop (586) outputting audio of the first audio broadcast stream based on the audio output stop time point.

8. The electronic device (306a; 309a; 421; 1022; 1122; 1132; 1422; 1432; 1622; 1822) of any one of claims 1 to 7, wherein, when executed by the processor, the instructions cause the electronic device (306a; 309a; 421; 1022; 1122; 1132; 1422; 1432; 1622; 1822) further to:
receive (592) an audio output resumption command from the first external electronic device (101; 302; 410; 1010; 1110; 1410; 1810; 308; 425) through the communication module;
identify (594) an audio output resumption time point for resuming outputting audio of the first audio broadcast stream for synchronization with a resumption of the audio output of the second external electronic device (306b; 309b; 423; 1024; 1124; 1134; 1424; 1434; 1624; 1824) based on the audio output resumption command; and
resume (596) outputting audio of the first audio broadcast stream based on the resumption time point.

9. An audio output method performed by an electronic device (306a; 309a; 421; 1022; 1122; 1132; 1422; 1432; 1622; 1822), the audio output method comprising:
receiving (540) a source addition command including broadcast isochronous stream, BIS, information associated with a first audio source device from a first external electronic device (101; 302; 410; 1010; 1110; 1410; 1810; 308; 425);
receiving (550) a first audio broadcast stream that is broadcast by the first audio source device based on the source addition command;
identifying (560) an audio output start time point for starting outputting audio of the first audio broadcast stream for synchronization with the start of an audio output of a second external electronic device (306b; 309b; 423; 1024; 1124; 1134; 1424; 1434; 1624; 1824), information for identifying the audio output start time point is exchanged; and
starting (570) outputting audio of the first audio broadcast stream based on the audio output start time point, and
wherein, identifying (560) an audio output start time point comprises:
transmitting (710) a request message that requests transmission of a confirmation message regarding a time point at which the second external electronic device (306b; 309b; 423; 1024; 1124; 1134; 1424; 1434; 1624; 1824) receives the first audio broadcast stream to the second external electronic device (306b; 309b; 423; 1024; 1124; 1134; 1424; 1434; 1624; 1824) through the communication module; and
receiving (720) the confirmation message from the second external electronic device (306b; 309b; 423; 1024; 1124; 1134; 1424; 1434; 1624; 1824) through the communication module,
identifying the audio output start time point for starting outputting audio of the first audio broadcast stream based on the number of a target packet among packets of the first audio broadcast stream comprised in the confirmation message.

## Patentansprüche

1. Elektronische Vorrichtung (306a; 309a; 421; 1022; 1122; 1132; 1422; 1432; 1622; 1822), umfassend:
ein Kommunikationsmodul;
einen Prozessor; und
einen Speicher, in dem vom Prozessor auszuführende Anweisungen gespeichert sind,
wobei die Anweisungen, wenn sie vom Prozessor ausgeführt werden, die elektronische Vorrichtung (306a; 309a; 421; 1022; 1122; 1132; 1422; 1432; 1622; 1822) zu Folgendem veranlassen:
Empfangen (540) eines Befehls zum Hinzufügen einer Quelle, der Informationen zum isochronen Rundfunkstrom, BIS, enthält, die mit einer ersten Audioquellenvorrichtung assoziiert sind, von einer ersten externen elektronischen Vorrichtung (101; 302; 410; 1010; 1110; 1410; 1810; 308; 425) über das Kommunikationsmodul;
Empfangen (550) eines ersten Audio-Rundfunkstroms, der von der ersten Audioquellenvorrichtung gesendet wird, über das Kommunikationsmodul basierend auf dem Befehl zum Hinzufügen einer Quelle;
Identifizieren (560) eines Audioausgabe-Startzeitpunkts zum Starten des Ausgebens von Audio des ersten Audio-Rundfunkstroms zur Synchronisation mit dem Start einer Audioausgabe einer zweiten externen elektronischen Vorrichtung (306b; 309b; 423; 1024; 1124; 1134; 1424; 1434; 1624; 1824); und
Starten (570) des Ausgebens von Audio des ersten Audio-Rundfunkstroms basierend auf dem Audioausgabe-Startzeitpunkt, und
wobei die Anweisungen, wenn sie von dem Prozessor ausgeführt werden, die elektronische Vorrichtung (306a; 309a; 421; 1022; 1122; 1132; 1422; 1432; 1622; 1822) ferner zu Folgendem veranlassen:
Übertragen (710) einer Anforderungsnachricht, die die Übertragung einer Bestätigungsnachricht bezüglich eines Zeitpunkts anfordert, zu dem die zweite externe elektronische Vorrichtung (306b; 309b; 423; 1024; 1124; 1134; 1424; 1434; 1624; 1824) den ersten Audio-Rundfunkstrom empfängt, an die zweite externe elektronische Vorrichtung (306b; 309b; 423; 1024; 1124; 1134; 1424; 1434; 1624; 1824) über das Kommunikationsmodul;
Empfangen (720) der Bestätigungsnachricht von der zweiten externen elektronischen Vorrichtung (306b; 309b; 423; 1024; 1124; 1134; 1424; 1434; 1624; 1824) über das Kommunikationsmodul; und
Identifizieren des Audioausgabe-Startzeitpunkts zum Starten des Ausgebens von Audio des ersten Audio-Rundfunkstroms basierend auf der Anzahl eines Zielpakets unter Paketen des ersten Audio-Rundfunkstroms, die in der Bestätigungsnachricht enthalten sind.

2. Elektronische Vorrichtung (306a; 309a; 421; 1022; 1122; 1132; 1422; 1432; 1622; 1822) nach Anspruch 1, wobei eine erste drahtlose Verbindung zwischen der elektronischen Vorrichtung (306a; 309a; 421; 1022; 1122; 1132; 1422; 1432; 1622; 1822) und der ersten externen elektronischen Vorrichtung (101; 302; 410; 1010; 1110; 1410; 1810; 308; 425) hergestellt wird,
eine zweite drahtlose Verbindung zwischen der zweiten externen elektronischen Vorrichtung (306b; 309b; 423; 1024; 1124; 1134; 1424; 1434; 1624; 1824) und der ersten externen elektronischen Vorrichtung (101; 302; 410; 1010; 1110; 1410; 1810; 308; 425) hergestellt wird, und
eine dritte drahtlose Verbindung zwischen der elektronischen Vorrichtung (306a; 309a; 421; 1022; 1122; 1132; 1422; 1432; 1622; 1822) und der zweiten externen elektronischen Vorrichtung (306b; 309b; 423; 1024; 1124; 1134; 1424; 1434; 1624; 1824) hergestellt wird,
wobei über die dritte drahtlose Verbindung Informationen zum Identifizieren des Audioausgabe-Startzeitpunkts ausgetauscht werden.

3. Elektronische Vorrichtung (306a; 309a; 421; 1022; 1122; 1132; 1422; 1432; 1622; 1822) nach Anspruch 1 oder 2, wobei die Anweisungen, wenn sie durch den Prozessor ausgeführt werden, die elektronische Vorrichtung (306a; 309a; 421; 1022; 1122; 1132; 1422; 1432; 1622; 1822) ferner zu Folgendem veranlassen:
Empfangen (610) eines periodischen Werbesignals, PA, das von der ersten Audioquellenvorrichtung basierend auf dem Befehl zum Hinzufügen einer Quelle über das Kommunikationsmodul gesendet wird;
Empfangen (620) des ersten Audio-Rundfunkstroms, der von der ersten Audioquellenvorrichtung gesendet wird, basierend auf dem PA-Signal über das Kommunikationsmodul;
Erhalten von Paketinformationen über Pakete des ersten Audio-Rundfunkstroms, der in dem von der ersten Audioquellenvorrichtung empfangenen PA-Signal enthalten ist.

4. Elektronische Vorrichtung (306a; 309a; 421; 1022; 1122; 1132; 1422; 1432; 1622; 1822) nach Anspruch 1, wobei die Anweisungen, wenn sie durch den Prozessor ausgeführt werden, die elektronische Vorrichtung (306a; 309a; 421; 1022; 1122; 1132; 1422; 1432; 1622; 1822) ferner zu Folgendem veranlassen:
Identifizieren des Audioausgabe-Startzeitpunkts zum Starten des Ausgebens von Audio des ersten Audio-Rundfunkstroms basierend auf den im ersten Audio-Rundfunkstrom enthaltenen Zeitinformationen und der Bestätigungsnachricht.

5. Elektronische Vorrichtung (306a; 309a; 421; 1022; 1122; 1132; 1422; 1432; 1622; 1822) nach Anspruch 2, wobei der Befehl zum Hinzufügen einer Quelle von der ersten externen elektronischen Vorrichtung (101; 302; 410; 1010; 1110; 1410; 1810; 308; 425) an die elektronische Vorrichtung (306a; 309a; 421; 1022; 1122; 1132; 1422; 1432; 1622; 1822) und die zweite externe elektronische Vorrichtung (306b; 309b; 423; 1024; 1124; 1134; 1424; 1434; 1624; 1824) jeweils über die erste drahtlose Verbindung und die zweite drahtlose Verbindung übertragen wird.

6. Elektronische Vorrichtung (306a; 309a; 421; 1022; 1122; 1132; 1422; 1432; 1622; 1822) nach Anspruch 1, wobei die Anweisungen, wenn sie durch den Prozessor ausgeführt werden, die elektronische Vorrichtung (306a; 309a; 421; 1022; 1122; 1132; 1422; 1432; 1622; 1822) ferner zu Folgendem veranlassen:
wenn der Befehl zum Hinzufügen einer Quelle von der ersten externen elektronischen Vorrichtung (101; 302; 410; 1010; 1110; 1410; 1810; 308; 425) empfangen wird, Übertragen des Befehls zum Hinzufügen einer Quelle über die dritte drahtlose Verbindung an die zweite externe elektronische Vorrichtung (306b; 309b; 423; 1024; 1124; 1134; 1424; 1434; 1624; 1824).

7. Elektronische Vorrichtung (306a; 309a; 421; 1022; 1122; 1132; 1422; 1432; 1622; 1822) nach einem der Ansprüche 1 bis 6, wobei die Anweisungen, wenn sie durch den Prozessor ausgeführt werden, die elektronische Vorrichtung (306a; 309a; 421; 1022; 1122; 1132; 1422; 1432; 1622; 1822) ferner zu Folgendem veranlassen:
Empfangen (582) eines Audio-Ausgabe-Stoppbefehls von der ersten externen elektronischen Vorrichtung (101; 302; 410; 1010; 1110; 1410; 1810; 308; 425) über das Kommunikationsmodul;
Identifizieren (584) eines Audioausgabe-Stoppzeitpunkts zum Stoppen des Ausgebens von Audio des ersten Audio-Rundfunkstroms zur Synchronisation mit einem Stopp einer Audioausgabe der zweiten externen elektronischen Vorrichtung (306b; 309b; 423; 1024; 1124; 1134; 1424; 1434; 1624; 1824) basierend auf dem Audioausgabe-Stoppbefehl; und
Stoppen (586) des Ausgebens von Audio des ersten Audio-Rundfunkstroms basierend auf dem Audioausgabe-Stoppzeitpunkt.

8. Elektronische Vorrichtung (306a; 309a; 421; 1022; 1122; 1132; 1422; 1432; 1622; 1822) nach einem der Ansprüche 1 bis 6, wobei die Anweisungen, wenn sie durch den Prozessor ausgeführt werden, die elektronische Vorrichtung (306a; 309a; 421; 1022; 1122; 1132; 1422; 1432; 1622; 1822) ferner zu Folgendem veranlassen:
Empfangen (592) eines Audioausgabe-Wiederaufnahmebefehls von der ersten externen elektronischen Vorrichtung (101; 302; 410; 1010; 1110; 1410; 1810; 308; 425) über das Kommunikationsmodul;
Identifizieren (594) eines Audioausgabe-Wiederaufnahmezeitpunkts zum Wiederaufnehmen des Ausgebens von Audio des ersten Audio-Rundfunkstroms zur Synchronisation mit einer Wiederaufnahme der Audioausgabe der zweiten externen elektronischen Vorrichtung (306b; 309b; 423; 1024; 1124; 1134; 1424; 1434; 1624; 1824) basierend auf dem Audioausgabe-Wiederaufnahmebefehl; und
Wiederaufnehmen (596) des Ausgebens von Audio des ersten Audio-Rundfunkstroms basierend auf dem Wiederaufnahmezeitpunkt.

9. Audio-Ausgabeverfahren, das von einer elektronischen Vorrichtung (306a; 309a; 421; 1022; 1122; 1132; 1422; 1432; 1622; 1822) durchgeführt wird, wobei das Audio-Ausgabeverfahren umfasst:
Empfangen (540) eines Befehls zum Hinzufügen einer Quelle, der Informationen zum isochronen Rundfunkstrom, BIS, enthält, die mit einer ersten Audioquellenvorrichtung assoziiert sind, von einer ersten externen elektronischen Vorrichtung (101; 302; 410; 1010; 1110; 1410; 1810; 308; 425);
Empfangen (550) eines ersten Audio-Rundfunkstroms, der von der ersten Audioquellenvorrichtung basierend auf dem Befehl zum Hinzufügen einer Quelle gesendet wird;
Identifizieren (560) eines Audioausgabe-Startzeitpunkts zum Starten des Ausgebens von Audio des ersten Audio-Rundfunkstroms zur Synchronisation mit dem Start einer Audioausgabe einer zweiten externen elektronischen Vorrichtung (306b; 309b; 423; 1024; 1124; 1134; 1424; 1434; 1624; 1824), wobei Informationen zum Identifizieren des Audioausgabe-Startzeitpunkts ausgetauscht werden; und
Starten (570) des Ausgebens von Audio des ersten Audio-Rundfunkstroms basierend auf dem Audioausgabe-Startzeitpunkt, und
wobei das Identifizieren (560) eines Audioausgabe-Startzeitpunkts umfasst:
Übertragen (710) einer Anforderungsnachricht, die die Übertragung einer Bestätigungsnachricht bezüglich eines Zeitpunkts anfordert, zu dem die zweite externe elektronische Vorrichtung (306b; 309b; 423; 1024; 1124; 1134; 1424; 1434; 1624; 1824) den ersten Audio-Rundfunkstrom empfängt, an die zweite externe elektronische Vorrichtung (306b; 309b; 423; 1024; 1124; 1134; 1424; 1434; 1624; 1824) über das Kommunikationsmodul; und
Empfangen (720) der Bestätigungsnachricht von der zweiten externen elektronischen Vorrichtung (306b; 309b; 423; 1024; 1124; 1134; 1424; 1434; 1624; 1824) über das Kommunikationsmodul,
Identifizieren des Startzeitpunkts zum Starten des Ausgebens von Audio des ersten Audio-Rundfunkstroms basierend auf der Anzahl eines Zielpakets unter Paketen des ersten Audio-Rundfunkstroms, die in der Bestätigungsnachricht enthalten sind.

## Revendications

1. Dispositif électronique (306a ; 309a ; 421 ; 1022 ; 1122 ; 1132 ; 1422 ; 1432 ; 1622 ; 1822), comprenant:.
un module de communication ;
un processeur ; et
une mémoire stockant des instructions à exécuter par le processeur,
dans lequel, lorsqu'elles sont exécutées par le processeur, les instructions amènent le dispositif électronique (306a ; 309a ; 421 ; 1022 ; 1122 ; 1132 ; 1422 ; 1432 ; 1622 ; 1822) à :
recevoir (540) une commande d'ajout de source comprenant des informations de flux isochrone de diffusion, BIS, des informations associées à un premier dispositif de source audio à partir d'un premier dispositif électronique externe (101 ; 302 ; 410 ; 1010 ; 1110 ; 1410 ; 1810 ; 308 ; 425) par l'intermédiaire du module de communication;
recevoir (550) un premier flux de diffusion audio qui est diffusé par le premier dispositif de source audio via le module de communication en se basant sur la commande d'ajout de source ;
identifier (560) un point temporel de début de sortie audio pour démarrer la sortie d'audio du premier flux de diffusion audio pour la synchronisation avec le début d'une sortie audio d'un deuxième dispositif électronique externe (306b ; 309b ; 423 ; 1024 ; 1124 ; 1134 ; 1424 ; 1434 ; 1624 ; 1824) ; et.
démarrer (570) la sortie d'audio du premier flux de diffusion audio en se basant sur le point temporel de début de sortie audio, et
dans lequel, lorsqu'elles sont exécutées par le processeur, les instructions amènent le dispositif électronique (306a ; 309a ; 421 ; 1022 ; 1122 ; 1132 ; 1422 ; 1432 ; 1622 ; 1822) en outre à :
transmettre (710) un message de demande demandant la transmission d'un message de confirmation concernant un point temporel auquel le deuxième dispositif électronique externe (306b ; 309b ; 423 ; 1024 ; 1124 ; 1134 ; 1424 ; 1434 ; 1624 ; 1824) reçoit le premier flux de diffusion audio au deuxième dispositif électronique externe (306b ; 309b ; 423 ; 1024 ; 1124 ; 1134 ; 1424 ; 1434 ; 1624 ; 1824) par l'intermédiaire du module de communication ;
recevoir (720) le message de confirmation du deuxième dispositif électronique externe (306b ; 309b ; 423 ; 1024 ; 1124 ; 1134 ; 1424 ; 1434 ; 1624 ; 1824) par l'intermédiaire du module de communication ; et
identifier le point temporel de début de sortie audio pour démarrer la sortie d'audio du premier flux de diffusion audio en se basant sur le numéro d'un paquet cible parmi des paquets du premier flux de diffusion audio compris dans le message de confirmation.

2. Dispositif électronique (306a ; 309a ; 421 ; 1022 ; 1122 ; 1132 ; 1422 ; 1432 ; 1622 ; 1822) de la revendication 1, dans lequel une première liaison sans fil est établie entre le dispositif électronique (306a ; 309a ; 421 ; 1022 ; 1122 ; 1132 ; 1422 ; 1432 ; 1622 ; 1822) et le premier dispositif électronique externe (101 ; 302 ; 410 ; 1010 ; 1110 ; 1410 ; 1810 ; 308 ; 425),
une deuxième liaison sans fil est établie entre le deuxième dispositif électronique externe (306b ; 309b ; 423 ; 1024 ; 1124 ; 1134 ; 1424 ; 1434 ; 1624 ; 1824) et le premier dispositif électronique externe (101 ; 302 ; 410 ; 1010 ; 1110 ; 1410 ; 1810 ; 308 ; 425), et
une troisième liaison sans fil est établie entre le dispositif électronique (306a ; 309a ; 421 ; 1022 ; 1122 ; 1132 ; 1422 ; 1432 ; 1622 ; 1822) et le deuxième dispositif électronique externe (306b ; 309b ; 423 ; 1024 ; 1124 ; 1134 ; 1424 ; 1434 ; 1624 ; 1824),
dans lequel, par l'intermédiaire de la troisième liaison sans fil, des informations permettant d'identifier le point temporel de début de sortie audio sont échangées.

3. Dispositif électronique (306a ; 309a ; 421 ; 1022 ; 1122 ; 1132 ; 1422 ; 1432 ; 1622 ; 1822) de la revendication 1 ou 2, dans lequel, lorsqu'elles sont exécutées par le processeur, les instructions amènent le dispositif électronique (306a ; 309a ; 421 ; 1022 ; 1122 ; 1132 ; 1422 ; 1432 ; 1622 ; 1822) en outre à :
recevoir (610) un signal publicitaire périodique, PA, qui est diffusé par le premier dispositif de source audio en se basant sur la commande d'ajout de source par l'intermédiaire du module de communication ;
recevoir (620) le premier flux de diffusion audio qui est diffusé par le premier dispositif de source audio en se basant sur le signal AP à travers le module de communication;.
obtenir des informations de paquet sur des paquets du premier flux de diffusion audio compris dans le signal PA reçu depuis le premier dispositif de source audio.

4. Dispositif électronique (306a ; 309a ; 421 ; 1022 ; 1122 ; 1132 ; 1422 ; 1432 ; 1622 ; 1822) de la revendication 1, dans lequel, lorsqu'elles sont exécutées par le processeur, les instructions amènent le dispositif électronique (306a ; 309a ; 421 ; 1022 ; 1122 ; 1132 ; 1422 ; 1432 ; 1622 ; 1822) en outre à :
identifier le point temporel de début de sortie audio pour démarrer la sortie d'audio du premier flux de diffusion audio en se basant sur des informations temporelles comprises dans le premier flux de diffusion audio et le message de confirmation.

5. Dispositif électronique (306a ; 309a ; 421 ; 1022 ; 1122 ; 1132 ; 1422 ; 1432 ; 1622 ; 1822) selon la revendication 2, dans lequel la commande d'ajout de source est transmise par le premier dispositif électronique externe (101 ; 302 ; 410 ; 1010 ; 1110 ; 1410 ; 1810 ; 308 ; 425) au dispositif électronique (306a ; 309a; 421 ; 1022 ; 1122 ; 1132 ; 1422 ; 1432 ; 1622 ; 1822) et au deuxième dispositif électronique externe (306b ; 309b ; 423 ; 1024 ; 1124 ; 1134 ; 1424 ; 1434 ; 1624 ; 1824) via la première liaison sans fil et la deuxième liaison sans fil, respectivement.

6. Dispositif électronique (306a ; 309a ; 421 ; 1022 ; 1122 ; 1132 ; 1422 ; 1432 ; 1622 ; 1822) de la revendication 1, dans lequel, lorsqu'elles sont exécutées par le processeur, les instructions amènent le dispositif électronique (306a ; 309a ; 421 ; 1022 ; 1122 ; 1132 ; 1422 ; 1432 ; 1622 ; 1822) en outre à :
lorsque la commande d'ajout de source est reçue depuis le premier dispositif électronique externe, (101 ; 302 ; 410 ; 1010 ; 1110 ; 1410 ; 1810 ; 308 ; 425) transmettre la commande d'ajout de source au deuxième dispositif électronique externe (306b ; 309b ; 423 ; 1024 ; 1124 ; 1134 ; 1424 ; 1434 ; 1624 ; 1824) par l'intermédiaire de la troisième liaison sans fil.

7. Dispositif électronique (306a ; 309a ; 421 ; 1022 ; 1122 ; 1132 ; 1422 ; 1432 ; 1622 ; 1822) de l'une quelconque des revendications 1 à 6, dans lequel, lorsqu'elles sont exécutées par le processeur, les instructions amènent le dispositif électronique (306a ; 309a ; 421 ; 1022 ; 1122 ; 1132 ; 1422 ; 1432 ; 1622 ; 1822) en outre à :
recevoir (582) une commande d'arrêt de sortie audio depuis le premier dispositif électronique externe (101 ; 302 ; 410 ; 1010 ; 1110 ; 1410 ; 1810 ; 308 ; 425) par l'intermédiaire du module de communication ;
identifier (584) un point temporel d'arrêt de sortie audio pour arrêter la sortie d'audio du premier flux de diffusion audio pour la synchronisation avec un arrêt d'une sortie audio du deuxième dispositif électronique externe (306b ; 309b ; 423 ; 1024 ; 1124 ; 1134 ; 1424 ; 1434 ; 1624 ; 1824) en se basant sur la commande d'arrêt de sortie audio ; et
arrêter (586) la sortie d'audio du premier flux de diffusion audio en se basant sur le point temporel d'arrêt de sortie audio.

8. Dispositif électronique (306a ; 309a ; 421 ; 1022 ; 1122 ; 1132 ; 1422 ; 1432 ; 1622 ; 1822) de l'une quelconque des revendications 1 à 7, dans lequel, lorsqu'elles sont exécutées par le processeur, les instructions amènent le dispositif électronique (306a ; 309a; 421 ; 1022 ; 1122 ; 1132 ; 1422 ; 1432 ; 1622 ; 1822) en outre à :
recevoir (592) une commande de reprise de sortie audio depuis le premier dispositif électronique externe (101 ; 302 ; 410 ; 1010 ; 1110 ; 1410 ; 1810 ; 308 ; 425) par l'intermédiaire du module de communication ;
identifier (594) un point temporel de reprise de sortie audio pour reprendre la sortie d'audio du premier flux de diffusion audio pour la synchronisation avec une reprise de la sortie audio du deuxième dispositif électronique externe (306b ; 309b ; 423 ; 1024 ; 1124 ; 1134 ; 1424 ; 1434 ; 1624 ; 1824) en se basant sur la commande de reprise de sortie audio ; et
reprendre (596) la sortie d'audio du premier flux de diffusion audio en se basant sur le point temporel de reprise.

9. Procédé de sortie audio exécuté par un dispositif électronique (306a ; 309a ; 421 ; 1022 ; 1122 ; 1132 ; 1422 ; 1432 ; 1622 ; 1822), le procédé de sortie audio comprenant :
recevoir (540) une commande d'ajout de source comprenant des informations de flux isochrone de diffusion, BIS, des informations associées à un premier dispositif de source audio à partir d'un premier dispositif électronique externe (101 ; 302 ; 410 ; 1010 ; 1110 ; 1410 ; 1810 ; 308 ; 425) ;
recevoir (550) un premier flux de diffusion audio qui est diffusé par le premier dispositif de source audio en se basant sur la commande d'ajout de source ;
identifier (560) un point temporel de début de sortie audio pour démarrer la sortie d'audio du premier flux de diffusion audio pour la synchronisation avec le début d'une sortie audio d'un deuxième dispositif électronique externe (306b ; 309b ; 423 ; 1024 ; 1124 ; 1134 ; 1424 ; 1434 ; 1624 ; 1824), les informations permettant d'identifier le point temporel de début de sortie audio sont échangées ; et
démarrer (570) la sortie d'audio du premier flux de diffusion audio en se basant sur le point temporel de début de sortie audio, et
dans lequel, l'identification (560) d'un point temporel de début de sortie audio comprend :
transmettre (710) un message de demande demandant la transmission d'un message de confirmation concernant un point temporel auquel le deuxième dispositif électronique externe (306b ; 309b ; 423 ; 1024 ; 1124 ; 1134 ; 1424 ; 1434 ; 1624 ; 1824) reçoit le premier flux de diffusion audio au deuxième dispositif électronique externe (306b ; 309b ; 423 ; 1024 ; 1124 ; 1134 ; 1424 ; 1434 ; 1624 ; 1824) par l'intermédiaire du module de communication ; et
recevoir (720) le message de confirmation du deuxième dispositif électronique externe (306b ; 309b ; 423 ; 1024 ; 1124 ; 1134 ; 1424 ; 1434 ; 1624 ; 1824) par l'intermédiaire du module de communication,
identifier le point temporel de début de sortie audio pour démarrer la sortie d'audio du premier flux de diffusion audio en se basant sur le numéro d'un paquet cible parmi des paquets du premier flux de diffusion audio compris dans le message de confirmation.
